# EUROPEAN PATENT SPECIFICATION

(11) **EP 2 928 966 B1**
(45) Date of publication and mention of the grant of the patent: **12.10.2016**
(21) Application number: 13814450.6
(22) Date of filing: 03.12.2013
(51) Int. Cl.: C09B 33/12

(54) **METAL FREE ACID DYES, PROCESS FOR THE PRODUCTION THEREOF AND THEIR USE**
METALLFREIE SÄUREFARBSTOFFE, VERFAHREN FÜR IHRE HERSTELLUNG UND IHRE VERWENDUNG
COLORANTS D'ACIDE DÉPOURVUS DE MÉTAUX, PROCÉDÉ POUR LEUR PRODUCTION ET LEUR UTILISATION

(30) Priority: 10.12.2012 EP 12196206
(43) Date of publication of application: 14.10.2015
(73) Proprietor: DyStar Colours Distribution GmbH, 65479 Raunheim (DE)
(72) Inventor: BARBIERU, Roxana, Singapore 117468 (SG); VAJIRAVELU, Sivamurugan, Chennai - 600 053 Tamil Nadu (IN); SAY WAN, Yong, Singapore 090042 (SG); VEDARETHINAM, Ravi, Singapore 081004 (SG)
(86) International application number: PCT/EP2013/075382
(87) International publication number: WO 2014/090634

(56) References cited:
- EP-A1- 1 882 723
- WO-A1-2011/122426
- WO-A2-2007/012828
- US-A- 3 945 990

## Description

The present invention relates to the technical field of dyestuffs for dyeing and printing of hydroxyl- and/or carboxamido containing material.

Disazo compounds comprising a triazine moiety are known and can be used as colorants in different applications, see for example GB 2,036,780, US 3,945,990, US 5,006,128 and US 5,519,121.

The documents EP 1 882 723 A1, WO 2007/012828 A2, WO 2011/122426 A1 and US 3 945 990 A all describe disazo dyes also with a triazine-moiety for dyeing and printing of hydroxyl- and/or carboxamido containing materials with good fastness properties.

In the context of the dyeing and printing of hydroxyl- and/or carboxamido-containing material the known dyes have a number of technical disadvantages, which need to be overcome.

Surprisingly, it has now been found that the dyes of the formula (1) as described below show highly advantageous properties over the known dyes. These include high tinctorial strength with high brilliancy as well as high fastness properties such as wash, contact and light fastness on the materials mentioned above, on blends containing them as well as on microfibres. Most importantly, dyes of formula (1) are metal free and provide dyeings that are levelled.

The present invention refers to a Dye of formula (1) 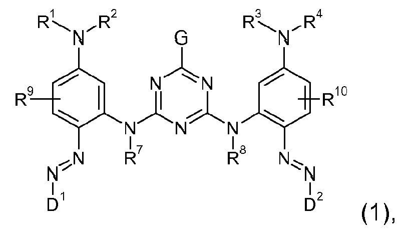 wherein independent from each other
G is a rest of formula (i) or (ii) 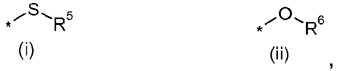
R¹, R², R³ and R⁴ is
   hydrogen,
   (C₁-C₁₂)-alkyl,
   (C₂-C₆)-alkenyl,
   (C₃-C₈)-cycloalkyl or
   aryl-(C₁-C₁₂)-alkyl,
   with the alkyl chain being linear or branched, and optionally being interrupted by one or more heteroatoms and/or substituted by one or more substituents selected from the group consisting of hydroxy, carboxy, SO₃M, halogen, cyano, nitro, acyl, trifluoromethyl, acyloxy, aryloyloxy and carbamoyl,
R⁵ and R⁶ is
   hydrogen,
   (C₁-C₁₂)-alkyl,
   substituted (C₁-C₁₂)-alkyl with the substituents being selected from the group consisting of hydroxy, carboxy, SO₃M, halogen, cyano, nitro, acyl, trifluoromethyl, acyloxy, aryloyloxy and carbamoyl,
   (C₃-C₈)-cycloalkyl,
   a group of formula (iii) 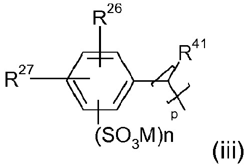 wherein
   R²⁶ and R²⁷ is
   hydrogen,
   (C₁-C₁₂)-alkyl,
   (C₁-C₁₂)-alkyl substituted by hydroxy, (C₁-C₁₂)-alkoxy, trifluoromethyl, cyano, nitro, halogen, -NHCO(C₁-C₆)-alkyl or -NHSO₂(C₁-C₆)-alkyl, CONH₂ or SO₂NH₂,
   R⁴¹ is hydrogen or (C₁-C₆)-alkyl,
   n is 0,1 or 2,
   p is 0 or 1 to 6, or
   (C₁-C₁₂)-alkyl, whereby the alkyl chain can be interrupted by one or more heteroatoms,
R⁷ and R⁸ is
   hydrogen,
   (C₁-C₆)-alkyl or
   phenyl,
R⁹ and R¹⁰ is hydrogen, (C₁-C₆)-alkyl, (C₁-C₆)-alkoxy, trifluoromethyl, hydroxy, cyano, nitro, halogen, -NHCHO, -NHCO(C₁-C₆)-alkyl, -NHCOaryl, -NHSO₂(C₁-C₆)-alkyl or - NHSO₂ aryl,
D¹ and D² is a rest of a phenyl-, naphthyl- or heterocyclic-derivative, which comprises at least one group -SO₃M, wherein M is hydrogen, an alkali metal, ammonium, or substituted or unsubstituted tetra(C₁-C₁₂)-alkyl ammonium.

(C₁-C₁₂)-alkyl groups appearing in this application may be straight-chain or branched and are for example methyl, ethyl, n-propyl, isopropyl, n-butyl, sec-butyl, tert-butyl, isobutyl, n-pentyl, isopentyl, methylbutyl and n-hexyl. The same logic applies to alkoxy groups which for example are methoxy and ethoxy.

Rests of phenyl-, naphtyl- or heterocyclic-derivatives are rests, which are based on phenyl-, naphtyl- or heterocyclic structures. These structures may be substituted or unsubstituted in general. In the present invention these structures carry at least one group -SO₃M, when they are D¹ or D² as outlined above. Preferred phenyl-, naphtyl- and heterocyclic structures are mentioned below.

Cycloalkyl groups are preferably (C₃-C₈)-cycloalkyl and especially preferably cyclopentyl and cyclohexyl. The term cyloalkyl comprises for the purpose of the present application substituted cycloalkyl groups and unsaturated cycloalkyl groups as well. A preferred group of this type is cyclopentenyl or cyclohexenyl. Preferred substituents are alkyl, hydroxyalkyl, halogen, hydroxyl, alkoxy, acyl, cyano, nitro, amino, monoalkylamino, dialkylamino, mono(hydroxyalkyl)amino, bis-(hydroxyalkyl)amino, monoalkyl-mono(hydroxyalkyl)amino, carbamoyl, sulfamoyl, acylamino, ureido, aminosulfonylamino, alkoxycarbonyl and acyloxy.

(C₂-C₆)-alkenyl groups may be straight-chain or branched and are for example vinyl and allyl. The term alkenyl comprises for the purpose of the present application alkynyl groups as well, for example ethynyl and propargyl.

Heteroaryl groups or a heteroaryl rest appearing in this application are preferably pyridine, pyrimidine, pyridazine, pyrazine, pyrrole, benzimidazole, benzotriazole, imidazole, pyrazole, 1,2,4-thiadiazole, 1,2,4-triazole, tetrazole, thiophene, thiazole, isothiazole, benzothiazole, benzoisothiazole, 1,3,4-thiadiazole, furane, oxazole, 1,2,4-oxadiazole, 1,3,4-oxadiazole, benzoxazole or isoxazole. The terms heteroaryl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis(hydroxylalkyl)amino, monoalkyl-mono(hydroxyalkyl)amino, carbamoyl, sulfamoyl, acylamino, ureido, aminosulfonylamino, alkoxycarbonyl and acyloxy.

Heterocycloalkyl groups are preferably pyrrolidine, piperidine, morpholine, tetrahydrofuran or piperazine. The term heterocycloalkyl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis-(hydroxyalkyl)amino, monoalkyl-mono(hydroxyalkyl)amino, carbamoyl, sulfamoyl, acylamino, aminocarbonylamino, aminosulfonylamino, alkoxycarbonyl and acyloxy.

Aryl or aryl rest appearing in this application is in particular phenyl or naphthyl. The terms phenyl and naphthyl comprise unsubstituted as well as substituted phenyl and naphthyl. Preferred substituents are alkyl, cycloalkyl, heterocycloalkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkylmono(hydroxyalkyl)amino, carbamoyl, sulfamoyl, acylamino, ureido, aminosulfonylamino, alkoxycarbonyl or acyloxy.

Halogen is preferably chlorine, bromine or fluorine.

There also exist preferred structures. Thus a Dye as described above, wherein independent from each other
R¹ to R⁴ are identical and are hydrogen, (C₁-C₄)-alkyl or (C₁-C₆)-alkyl substituted by hydroxyl, cyano or alkenyl,
R⁵ and R⁶ are identical and are
hydrogen,
(C₁-C₆)-alkyl,
(C₁-C₆)-alkyl substituted by hydroxy,
(C₃-C₈)-cycloalkyl or (C₁-C₆)-alkyl substituted by -SO₃M or a group of formula (iii) as defined in claim 1, wherein each R²⁶ and R²⁷ independent from each other is
   hydrogen,
   (C₁-C₆)-alkyl,
   (C₁-C₆)-alkyl substituted by hydroxy,
   (C₁-C₆)-alkoxy, trifluoromethyl, hydroxy, cyano, halogen,
   n is 0 or 1,
   p is 0 or 1 to 4,
R⁷ and R⁸ are identical and are hydrogen, methyl or ethyl and
R⁹ and R¹⁰ are identical and are hydrogen, methyl, ethyl, halogen, trifluoromethyl, methoxy or ethoxy is preferred.

"Independent from each other" in this context means that a selection of e.g. R⁷ and R⁸ being identical and being e.g. hydrogen has no influence on what is selected for e.g. R⁹ and R¹⁰. R⁹ and R¹⁰ in this case may be different to each other or identical. A dye where R¹ to R⁴ are identical and R⁵ and R⁶ are identical and R⁷ and R⁸ are identical and R⁹ and R¹⁰ are identical is preferred.

Even more preferred is a Dye as described above, having formula (1 a), (1a¹), (1a²) or (1a³) 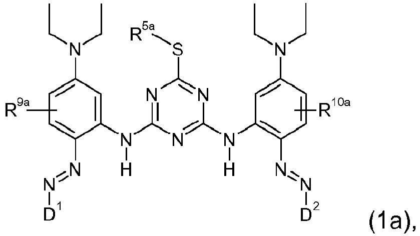 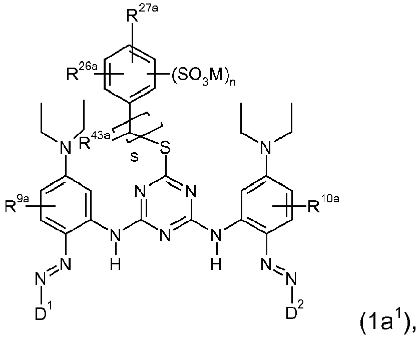 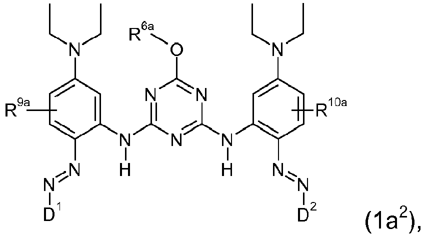 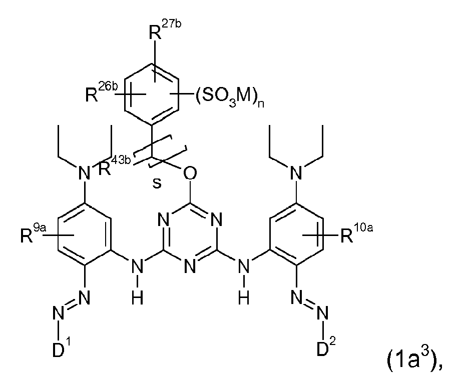 wherein
R^{5a} and R^{6a} are hydrogen, (C₁-C₆)-alkyl, (C₁-C₆)-alkyl substituted by hydroxy, (C₃-C₈)-cycloalkyl or (C₁-C₆)-alkyl substituted by SO₃M,
R^{9a} and R^{10a} are identical and are hydrogen or methoxy,
each of R^{26a}, R^{27a}, R^{26b} and R^{27b} is hydrogen, (C₁-C₄)-alkyl, (C₁-C₄)-alkoxy, trifluoromethyl, cyano, nitro or halogen,
R^{43a} and R^{43b} is hydrogen or (C₁ - C₄) alkyl,
s is 0 or 1 to 6 and
D¹ and D² are as defined above.

Still more preferred is a Dye as described above, in which independent from each other
D¹ and D² is selected from the group consisting of groups of formula (I) to (XIV): 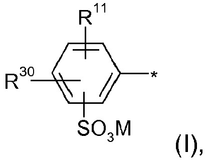 wherein
R¹¹ and R³⁰ independent of each other is hydrogen, (C₁-C₄)-alkyl, (C₁-C₄)-alkoxy, trifluoromethyl, cyano, nitro, NHC(O)R³¹, CONH₂, S(O)₂R³² or halogen, R³¹ and R³² is hydrogen, (C₁-C₄)-alkyl or (C₁-C₄)-alkyl substituted by hydroxyl,
M is hydrogen, an alkali metal or ammonium, 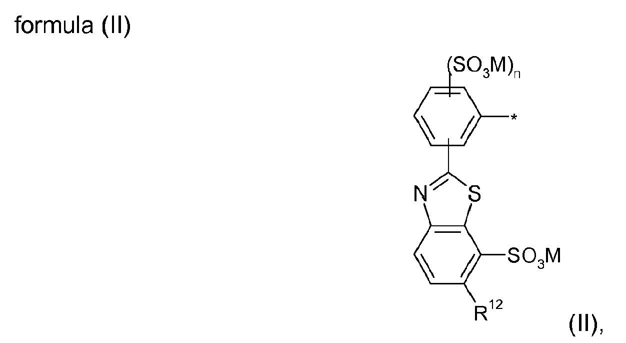
wherein
R¹² is hydrogen or (C₁-C₄)-alkyl,
n is 0 or 1 and
M is defined as given above, 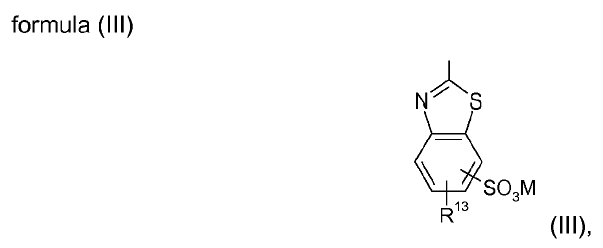
wherein
R¹³ is hydrogen, (C₁-C₄)-alkyl, (C₁-C₄)-alkoxy, cyano, nitro, CONH₂ or halogen and
M is defined as given above, 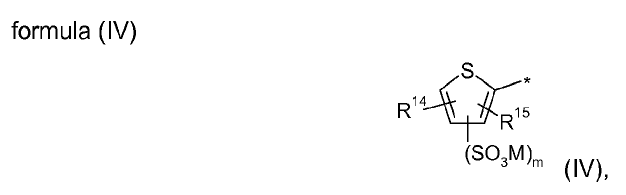
wherein
R¹⁴ is hydrogen, cyano, CONH₂, C(O)R³³ or COOR³⁴,
R³³ is hydrogen or (C₁-C₄)-alkyl,
R³⁴ is hydrogen or (C₁-C₄)-alkyl,
R¹⁵ is hydrogen, -CHO or a group of formula (a) or (c) 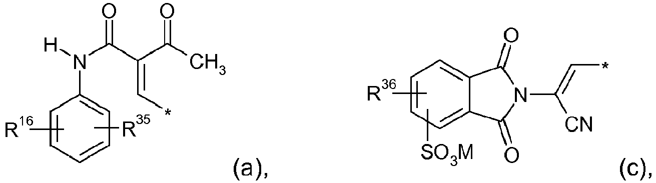 wherein
   R¹⁶, R³⁵ and R³⁶ independent of each other is hydrogen, halogen, (C₁-C₄)-alkyl, (C₁-C₄)-alkoxy, SO₃M or -CONH₂,
   m is 0 or 1 and
   M is defined as given above, 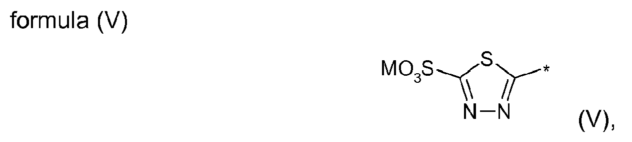
   wherein
   M is defined as given above, 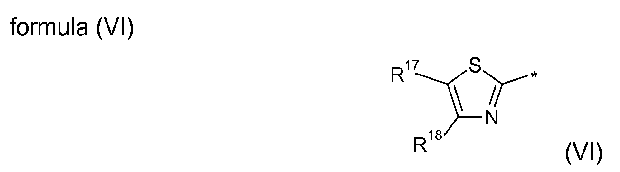 wherein
   R¹⁷ is -SO₃M, -CHO, -CH=C(CN)₂, a group of formula (a) as defined above or a group of formula (b) or (d) 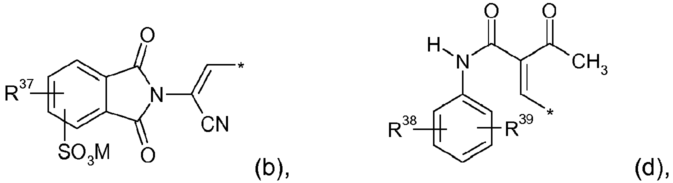 wherein
   R³⁷, R³⁸ and R³⁹ independent of each other is hydrogen, halogen, (C₁-C₄)-alkyl, (C₁-C₄)-alkoxy, SO₃M or -CONH₂,
   R¹⁸ is -SO₃M, (C₁-C₄)-alkyl, sulfophenyl (C₁-C₄)-alkylamino, (C₁-C₁₂)-alkylamino, (C₅-C₆)-cycloalkylamino, morpholino or piperidino and
   M is defined as given above, 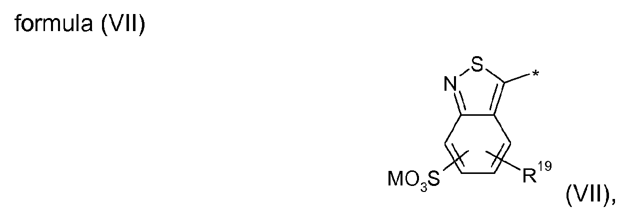
   wherein
   R¹⁹ is hydrogen, (C₁-C₄)-alkyl, (C₁-C₄)-alkoxy, nitro, NHC(O)R⁴⁰, NHSO₂R⁴⁷ or halogen,
   R⁴⁰ is hydrogen or (C₁-C₆) alkyl,
   R⁴⁷ is (C₁-C₆)-alkyl, 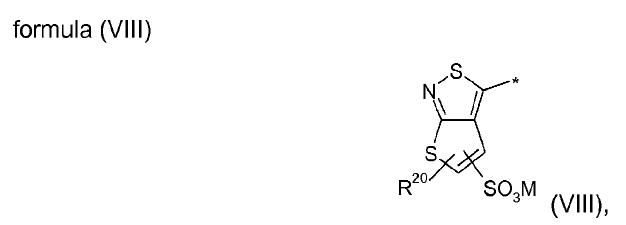
   wherein
   R²⁰ is hydrogen, (C₁-C₄)-alkyl, (C₁-C₄)-alkoxy, cyano, nitro, CONH₂ or halogen, 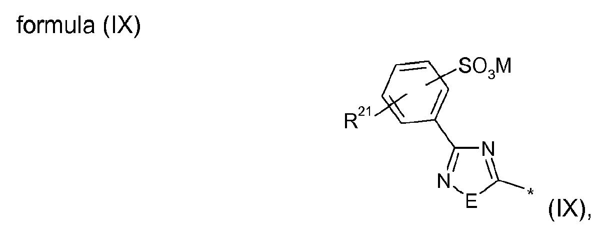 wherein
   R²¹ is hydrogen, (C₁-C₄)-alkyl, (C₁-C₄)-alkoxy, halogen, cyano, nitro or CONH₂
   and
   E is sulphur or oxygen, 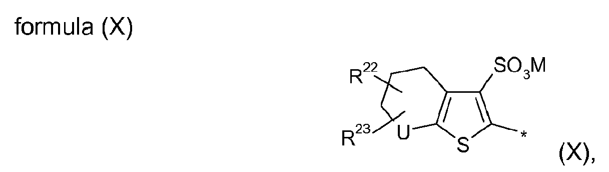
   wherein
   R²² and R²³ independent of each other is hydrogen, (C₁-C₄)-alkyl, (C₁-C₄)-alkoxy, halogen, cyano or CONH₂ and
   U is methylene or C=O, 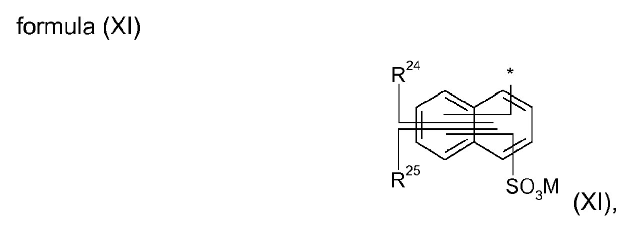
   wherein
   R²⁴ and R²⁵ independent of each other is hydrogen, (C₁-C₄)-alkyl, (C₁-C₄)-alkoxy, halogen, cyano, nitro, trifluoromethyl or CONH₂, 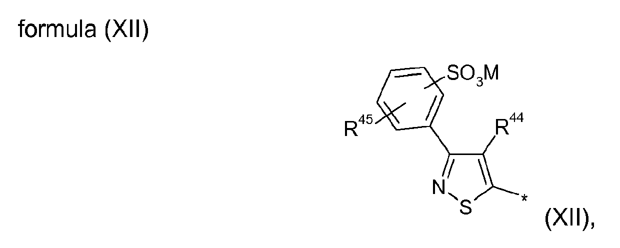 wherein
   R⁴⁴ and R⁴⁵ independent of each other is hydrogen, (C₁-C₄)-alkyl, (C₁-C₄)-alkoxy, halogen, cyano, nitro, trifluoromethyl, CONH₂ or SO₃M, 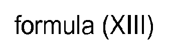 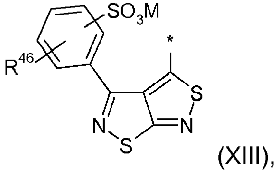 wherein
   R⁴⁶ is hydrogen, (C₁-C₄)-alkyl, (C₁-C₄)-alkoxy, halogen, cyano, nitro, trifluoromethyl, CONH₂ or SO₃M,
   and 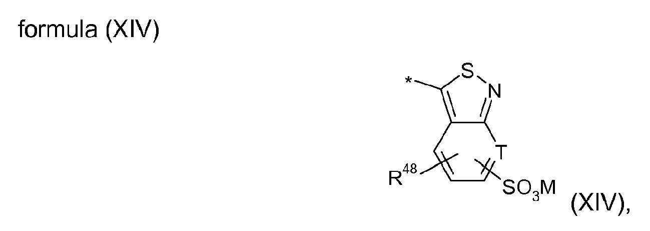 wherein
   R⁴⁸ is hydrogen, (C₁-C₄)-alkyl, (C₁-C₄)-alkoxy, nitro, NHC(O)R⁴⁹, NHSO₂R⁵⁰ or halogen,
   R⁴⁹ is hydrogen or (C₁-C₆)-alkyl,
   R⁵⁰ is (C₁-C₆)-alkyl;
   and
   M is defined as given above.

M is preferably hydrogen, lithium, sodium or potassium.

There exist groups of preferred dyes. One preferred group consists of dyes as described above, wherein D¹ and D² are selected from the same group (I) to (XIV). Another preferred group consists of dyes as described above, wherein D¹ and D² are selected from different groups (I) to (XIV). Most preferred, however, is a Dye as described above, wherein D¹ and D² are identical.

The most preferred dyes of the present invention are the dyes of the formulae (1 aa) to (1 an), (1a¹a) to (1a¹n), (1a²a) to (1a²n) and (1a³a) to (1a³n) 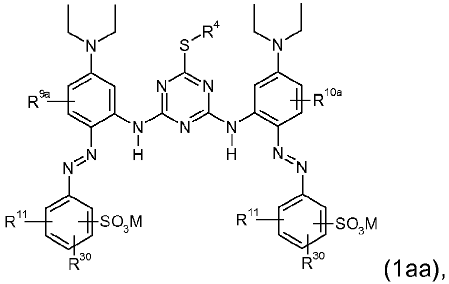 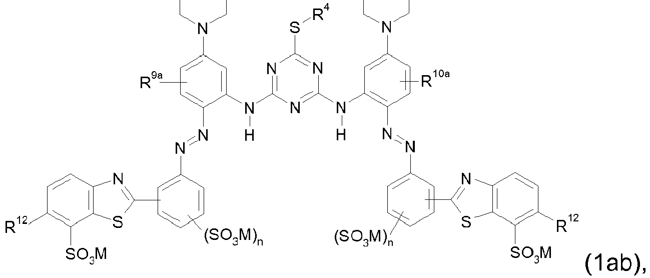 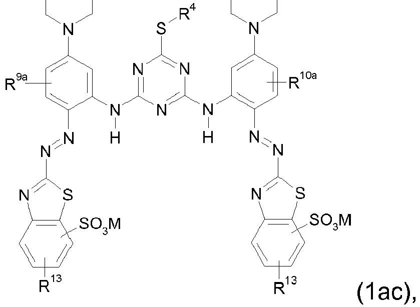 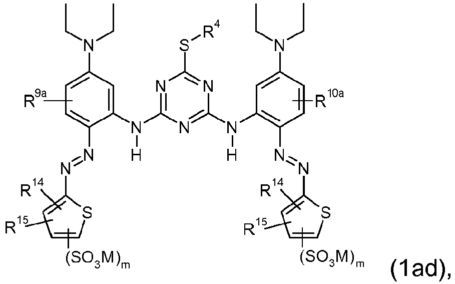 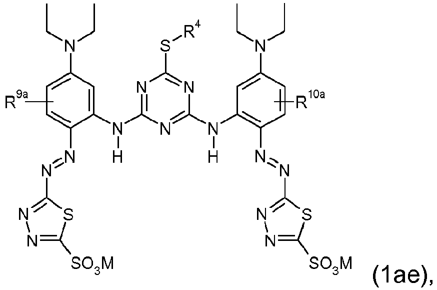 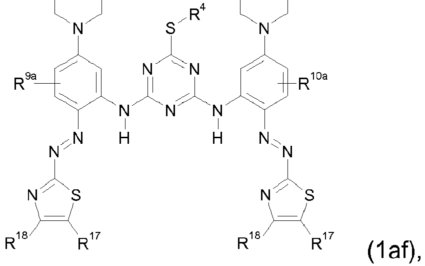 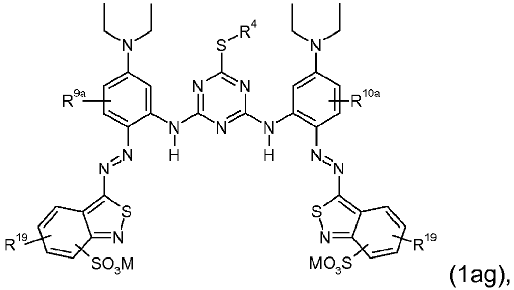 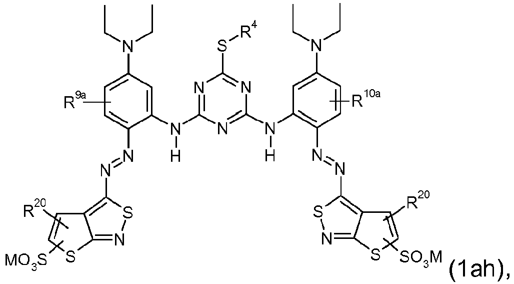 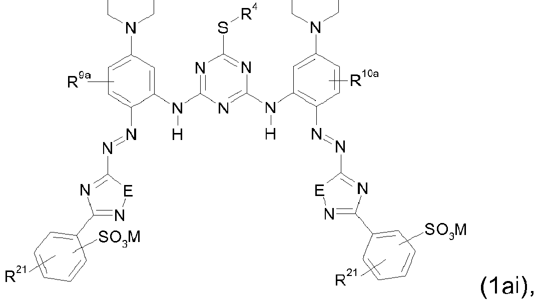 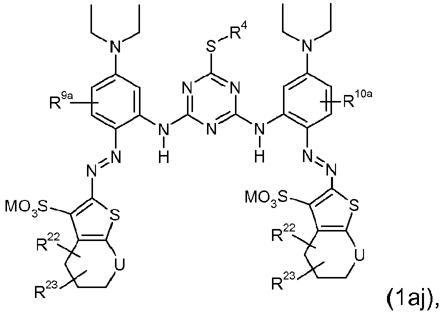 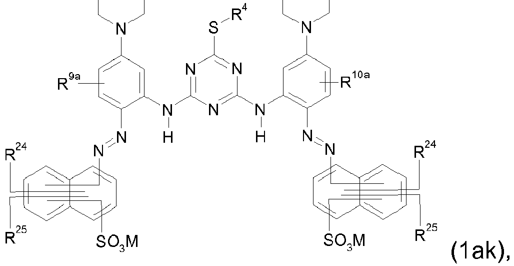 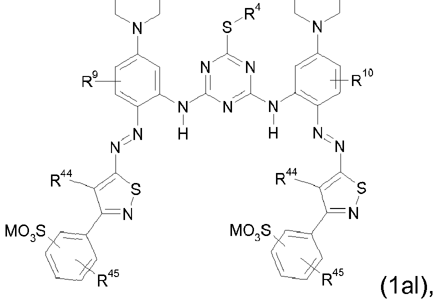 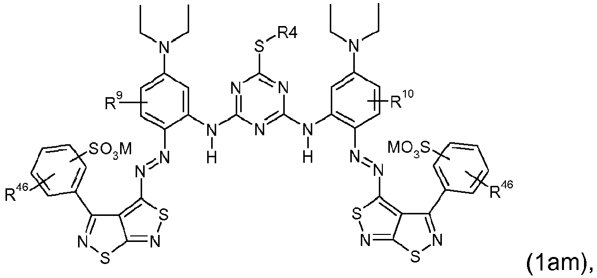 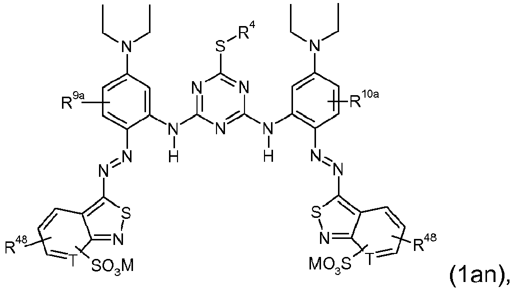 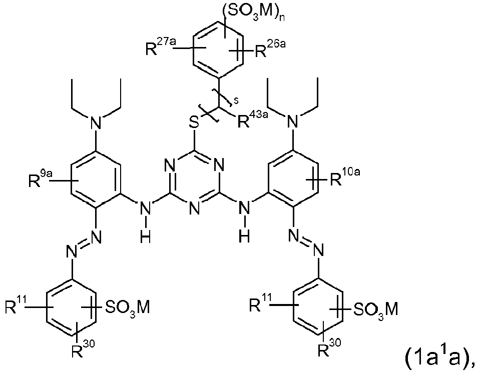 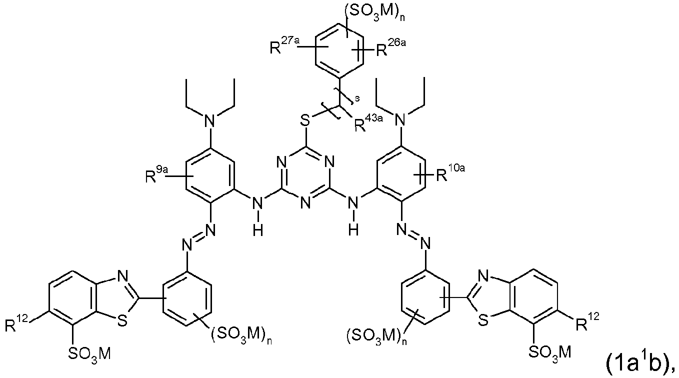 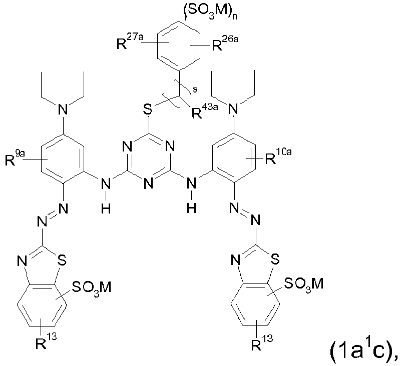 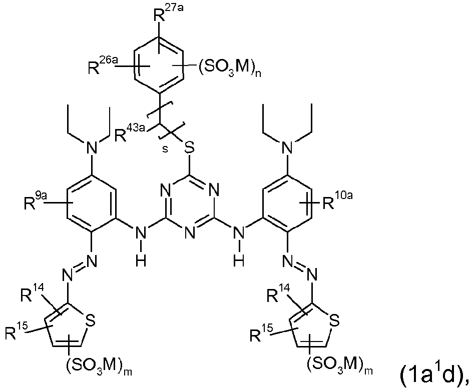 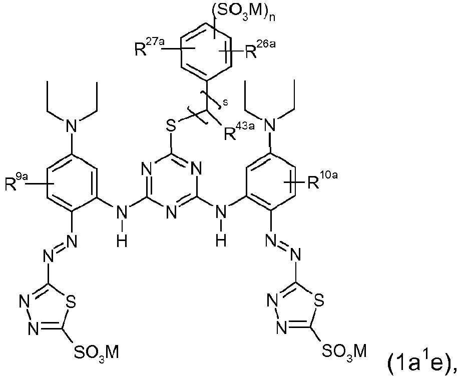 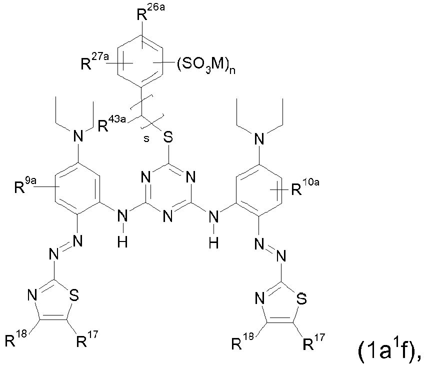 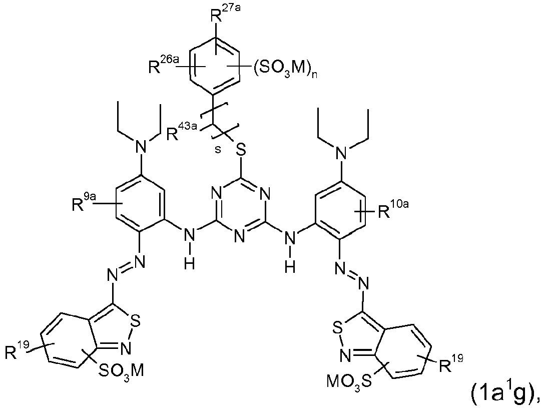 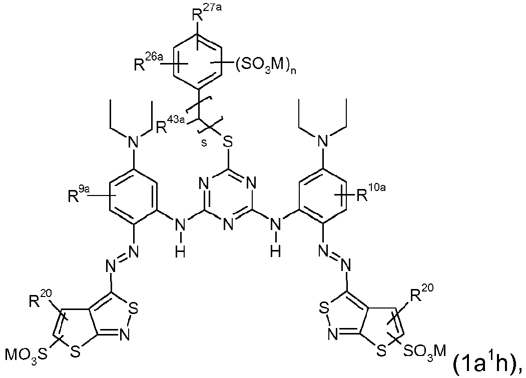 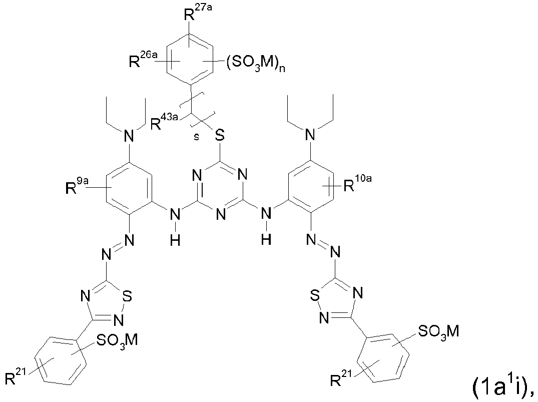 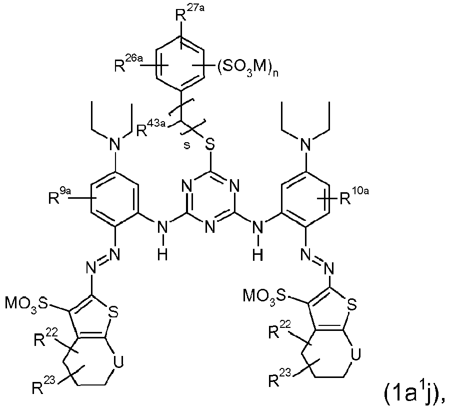 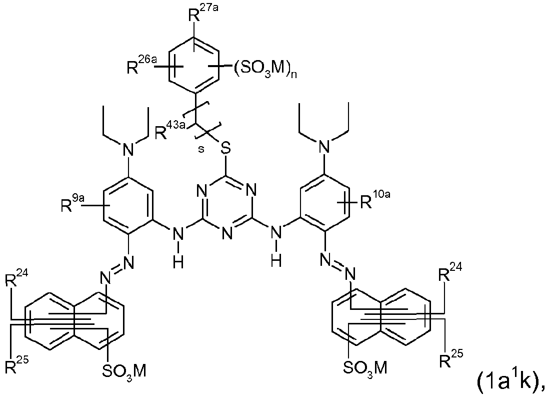 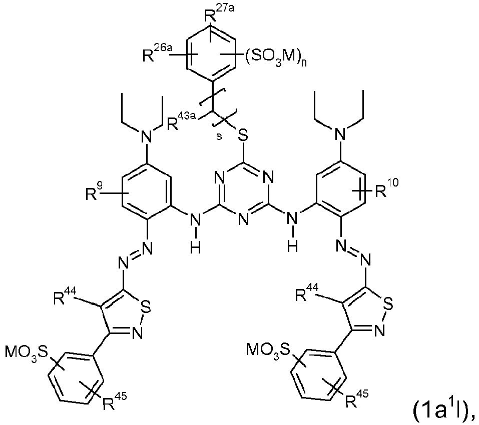 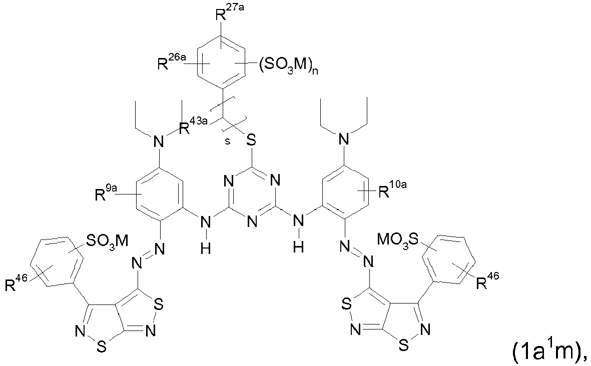 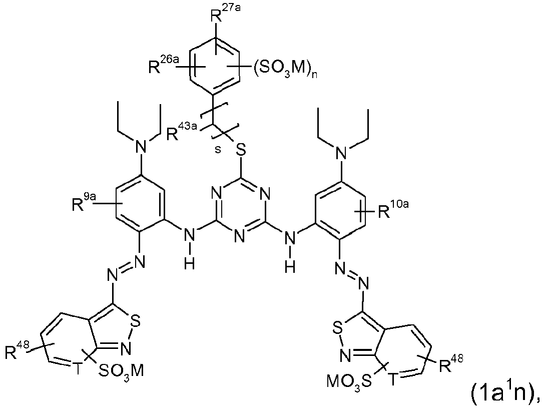 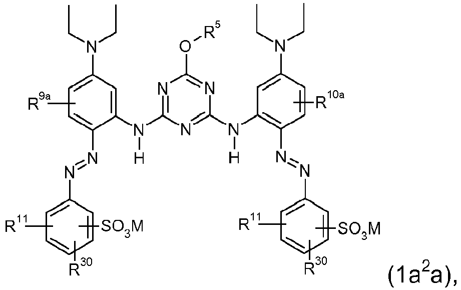 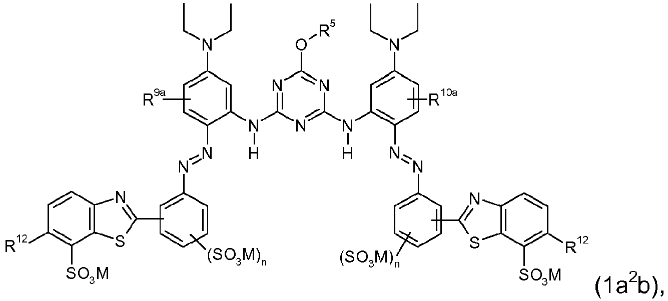 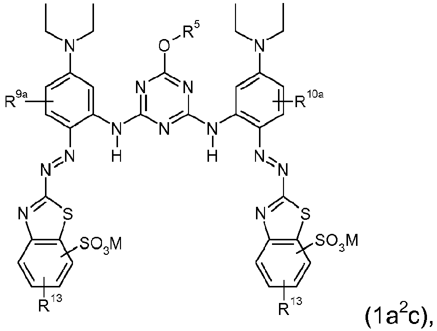 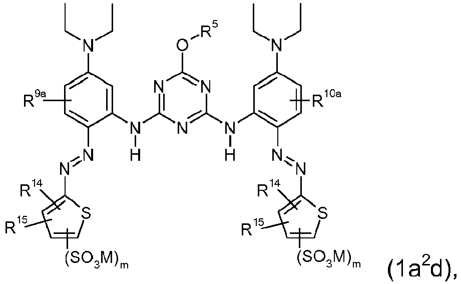 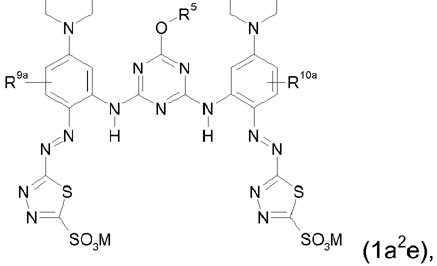 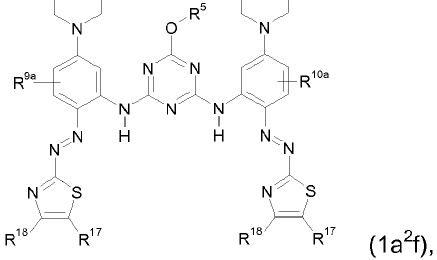 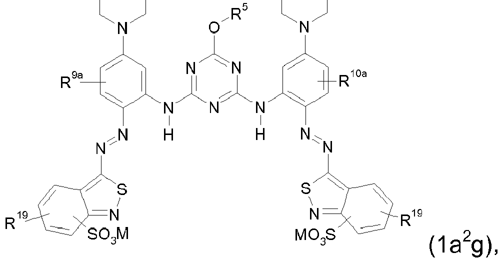 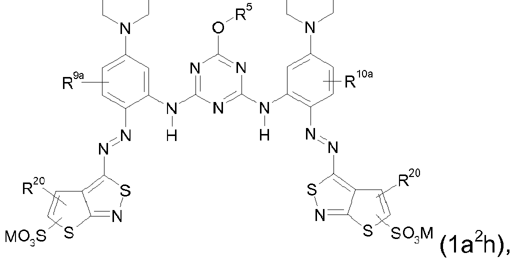 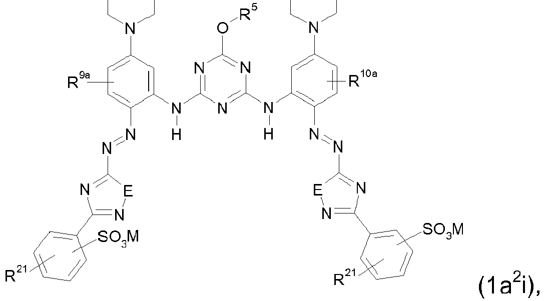 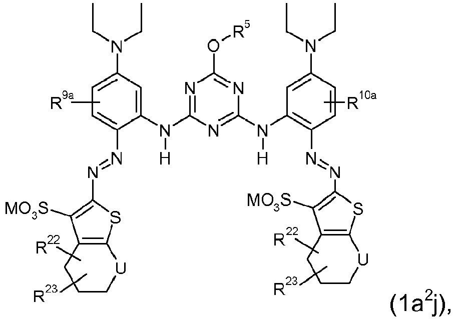 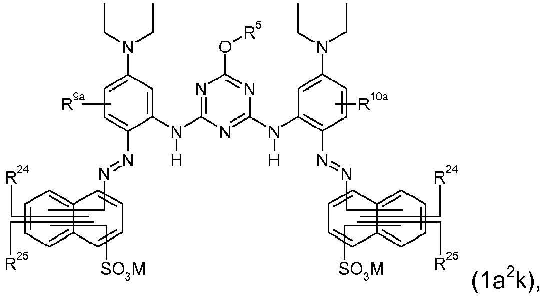 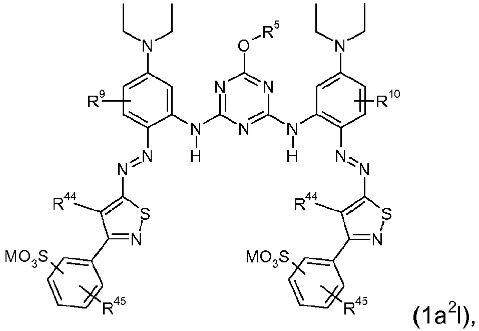 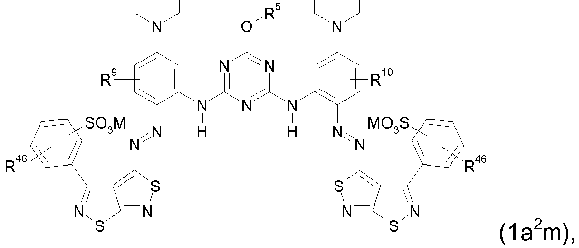 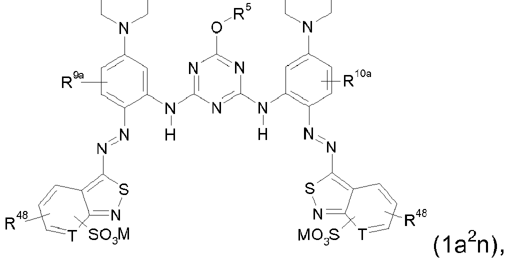 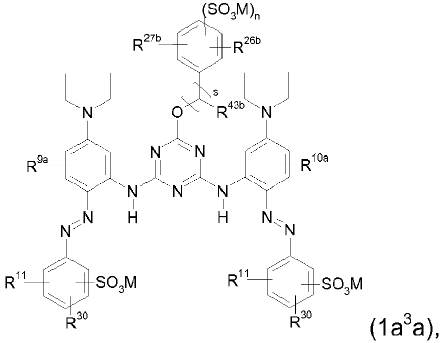 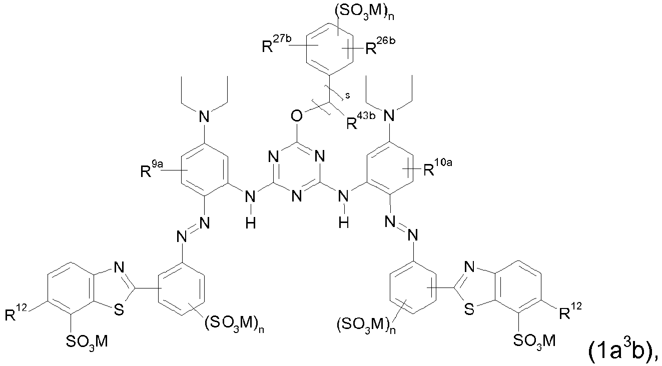 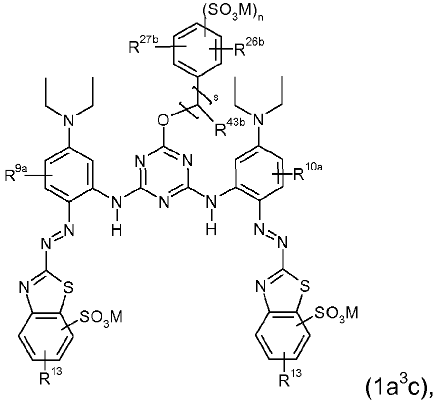 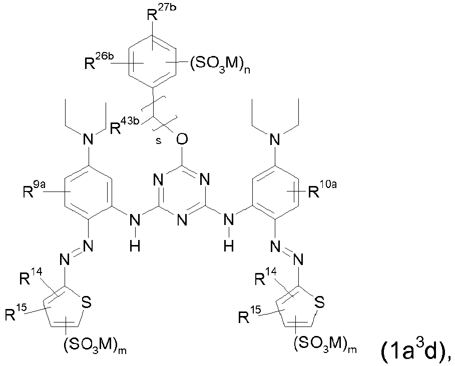 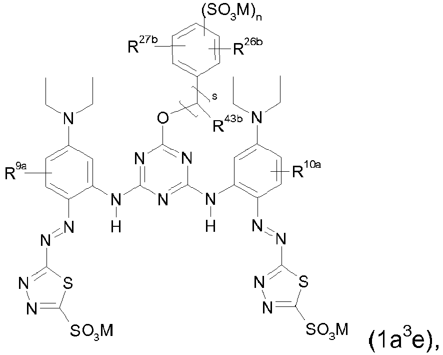 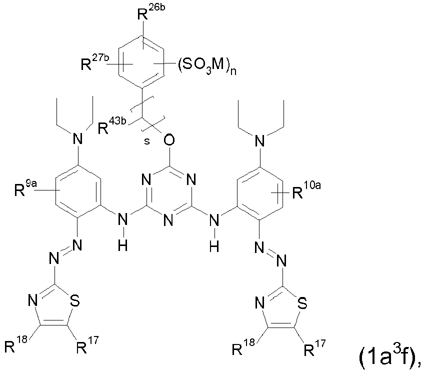 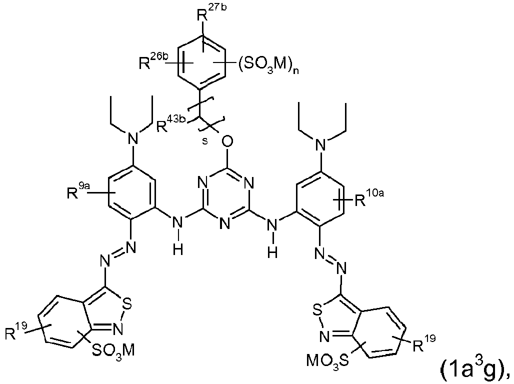 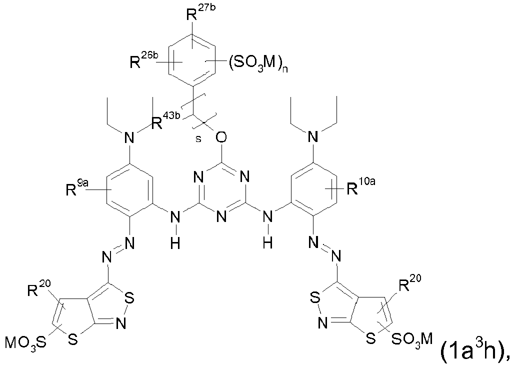 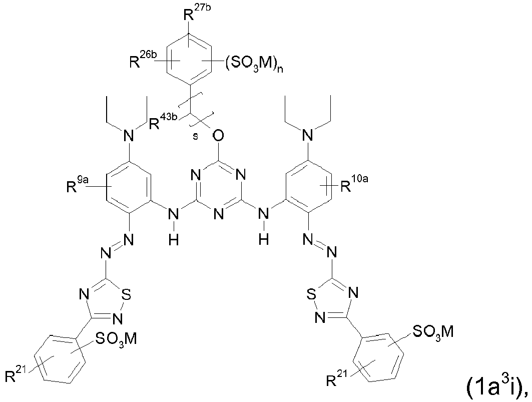 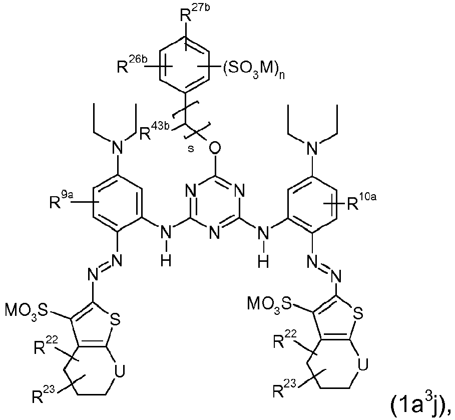 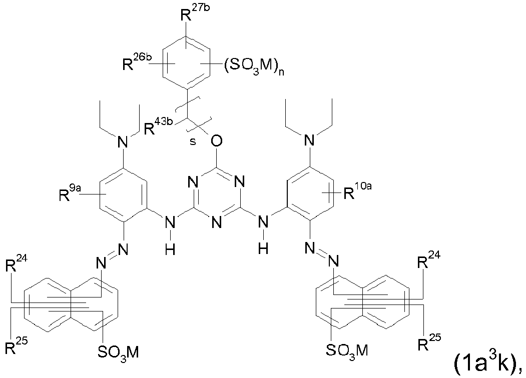 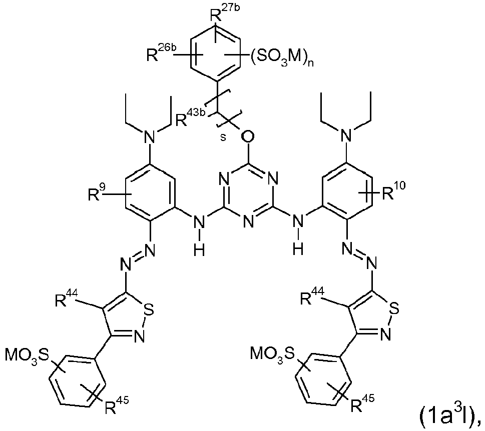 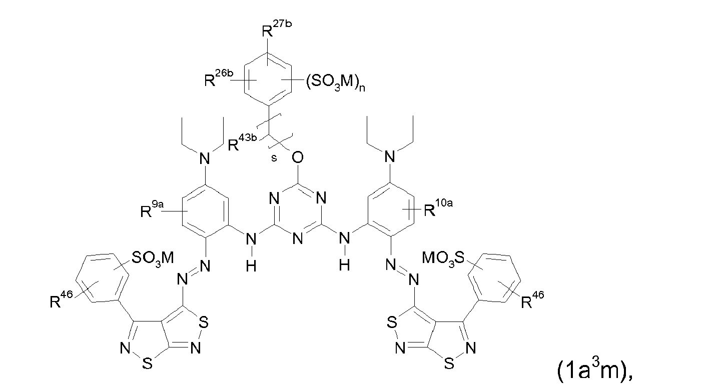 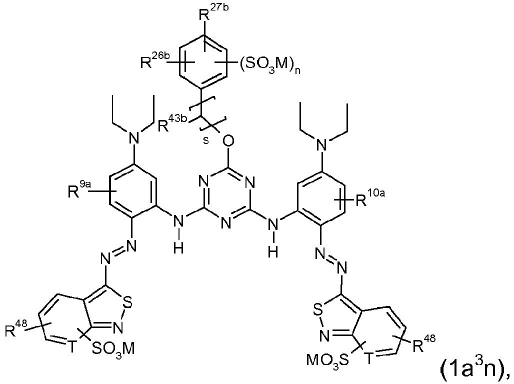 wherein R⁴, R⁵, R^{9a}, R^{10a} R¹¹ to R¹⁵, R¹⁷, R¹⁸, R²² to R²⁵, R^{26a}, R^{27a}, R³⁰, R^{43a}, R⁴⁴, R⁴⁵, R⁴⁶, R⁴⁸, E, T, U, M, n, s and m are defined as given above.

Examples of preferred embodiments of this invention are the dyes from 1-1 to 1-288 (Table 1) and mixtures thereof.

**Table 1**

| Example | Structure | Example | Structure |
|---|---|---|---|
| 1-1 | 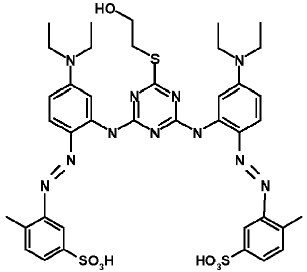 | 1-2 | 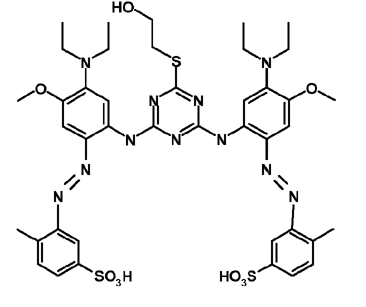 |
| 1-3 | 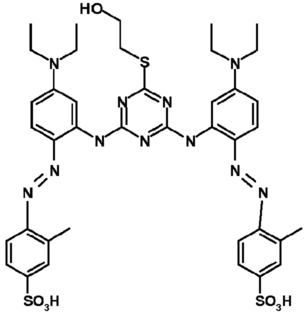 | 1-4 | 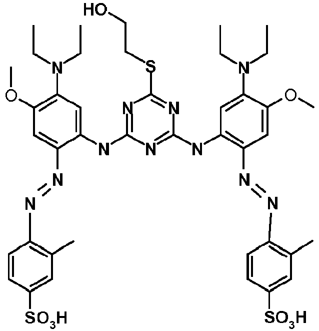 |
| 1-5 | 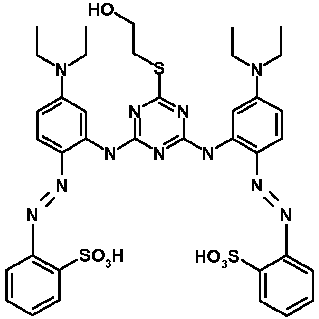 | 1-6 | 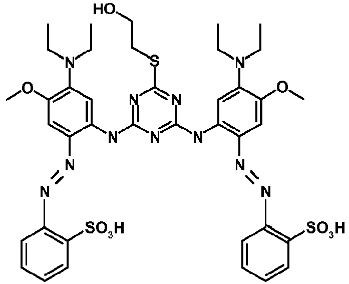 |
| 1-7 | 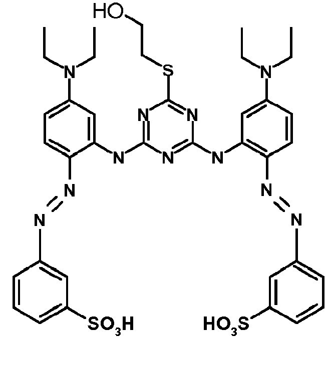 | 1-8 | 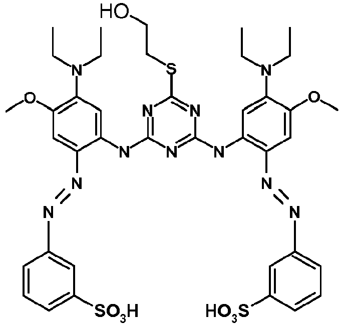 |
| 1-9 | 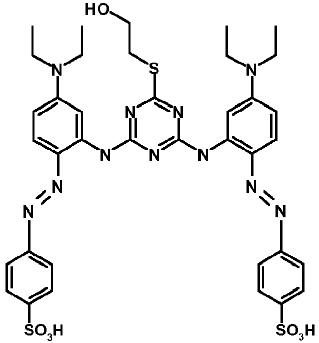 | 1-10 | 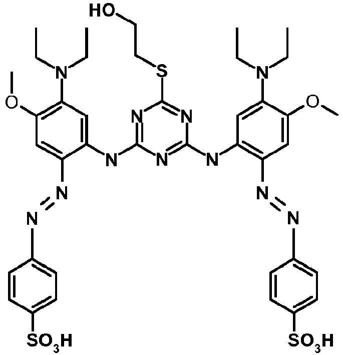 |
| 1-11 | 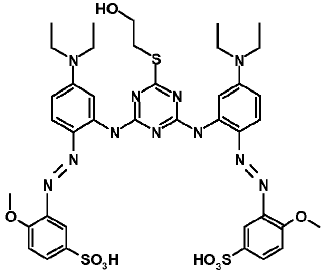 | 1-12 | 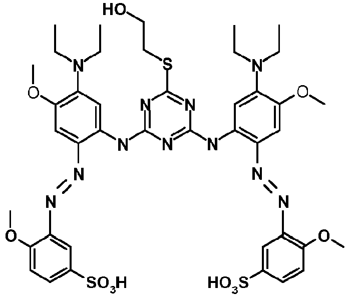 |
| 1-13 | 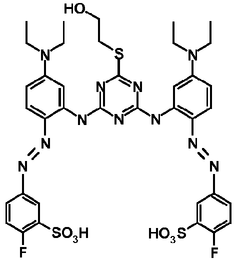 | 1-14 | 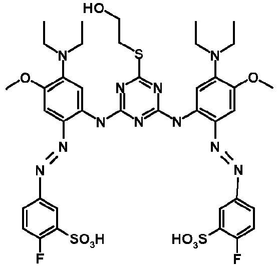 |
| 1-15 | 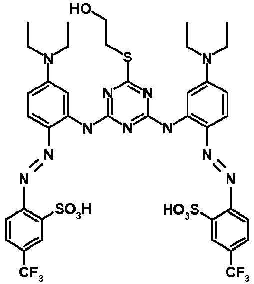 | 1-16 | 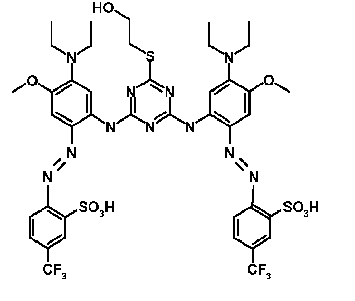 |
| 1-17 | 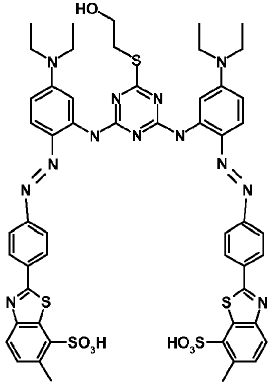 | 1-18 | 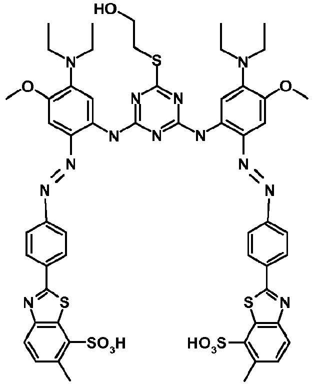 |
| 1-19 | 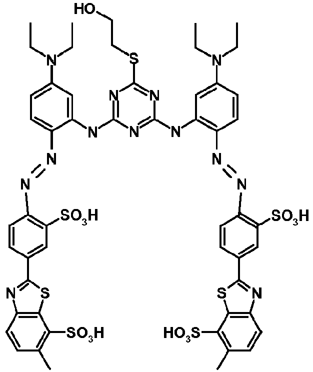 | 1-20 | 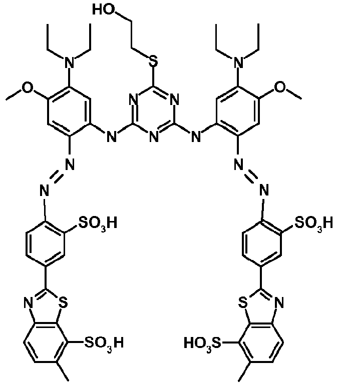 |
| 1-21 | 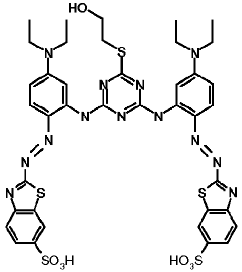 | 1-22 | 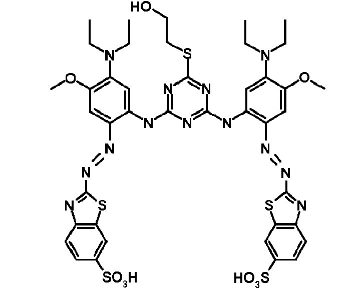 |
| 1-23 | 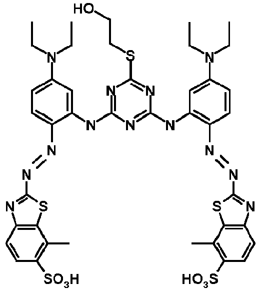 | 1-24 | 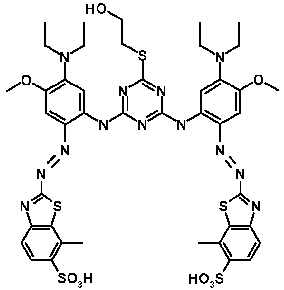 |
| 1-25 | 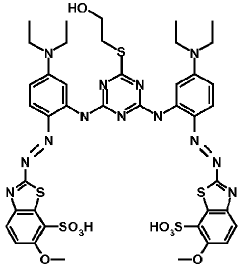 | 1-26 | 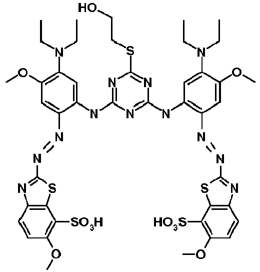 |
| 1-27 | 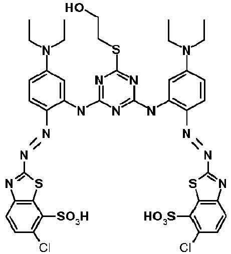 | 1-28 | 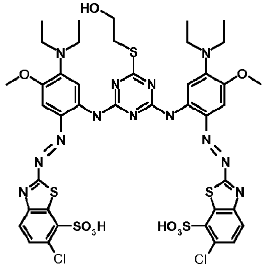 |
| 1-29 | 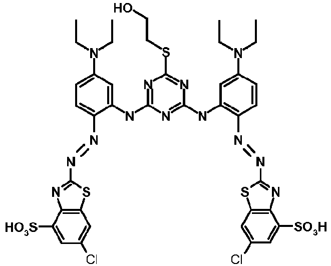 | 1-30 | 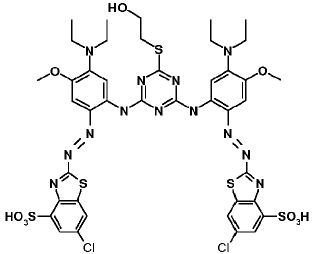 |
| 1-31 | 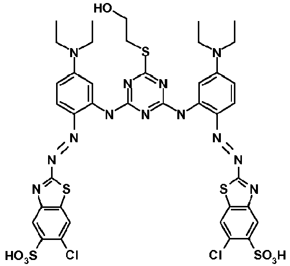 | 1-32 | 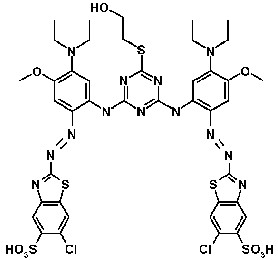 |
| 1-33 | 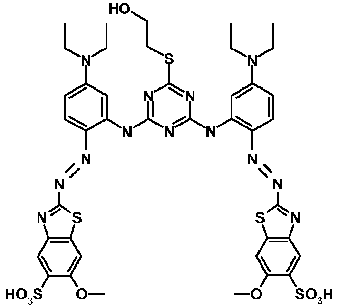 | 1-34 | 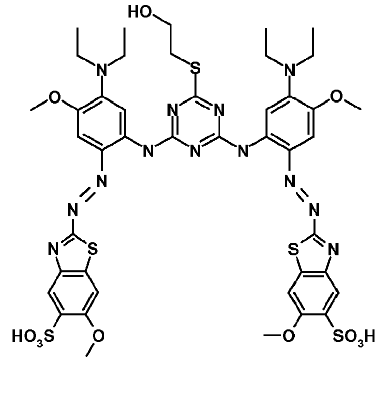 |
| 1-35 | 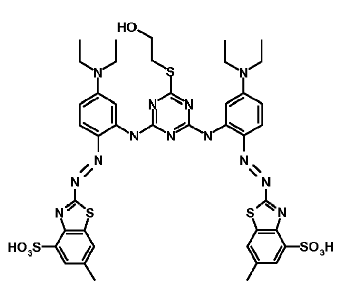 | 1-36 | 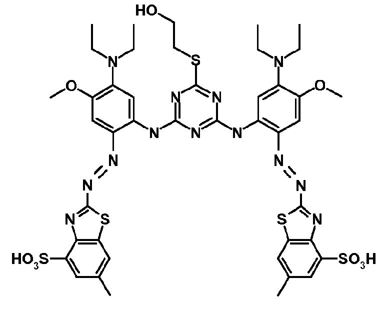 |
| 1-37 | 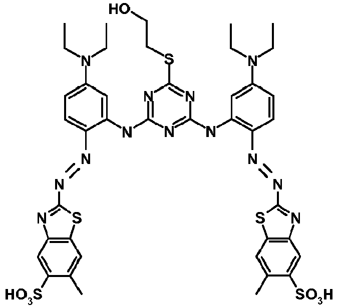 | 1-38 | 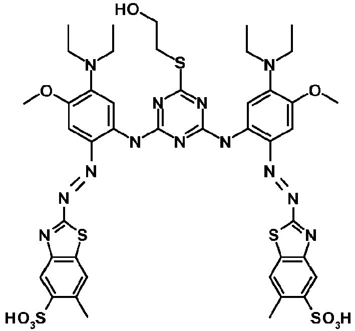 |
| 1-39 | 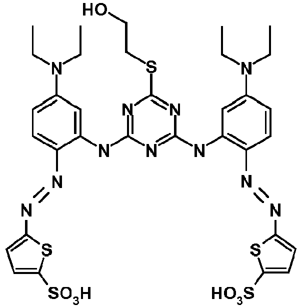 | 1-40 | 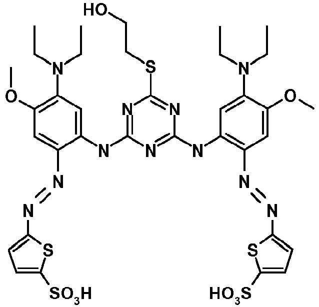 |
| 1-41 | 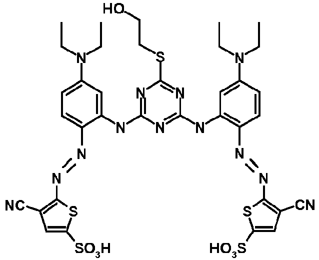 | 1-42 | 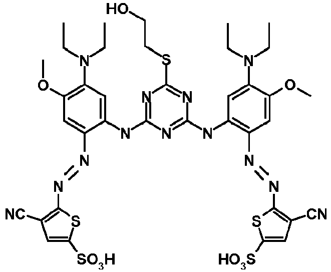 |
| 1-43 | 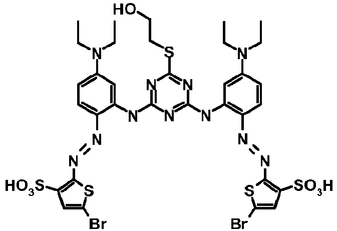 | 1-44 | 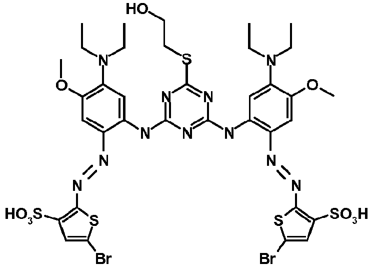 |
| 1-45 | 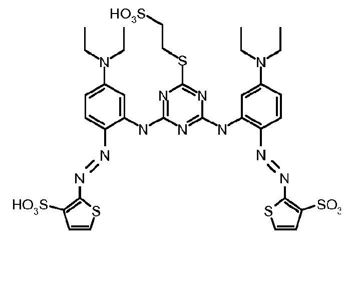 | 1-46 | 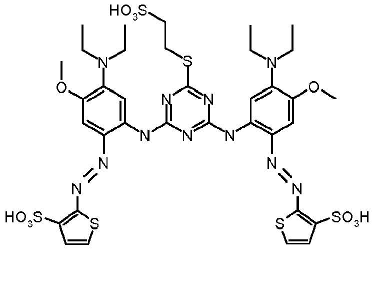 |
| 1-47 | 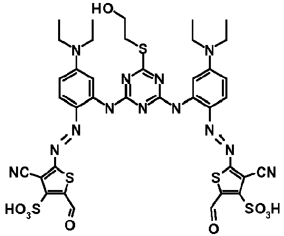 | 1-48 | 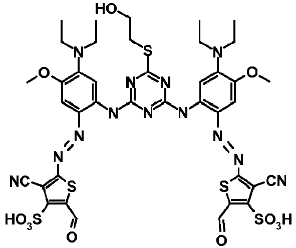 |
| 1-49 | 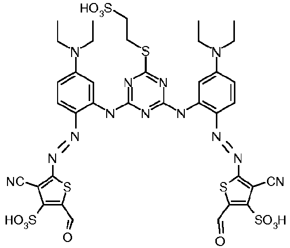 | 1-50 | 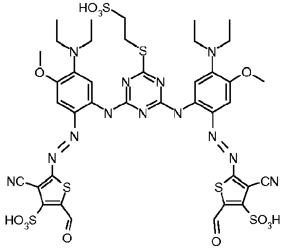 |
| 1-51 | 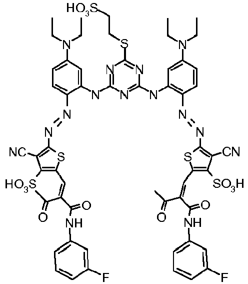 | 1-52 | 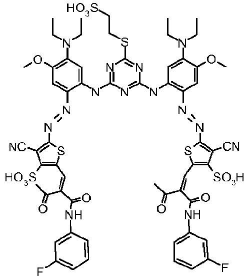 |
| 1-53 | 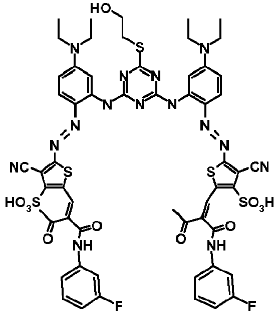 | 1-54 | 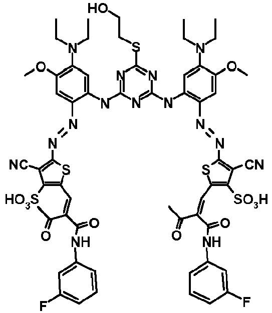 |
| 1-55 | 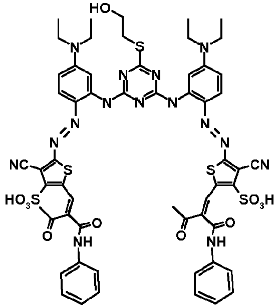 | 1-56 | 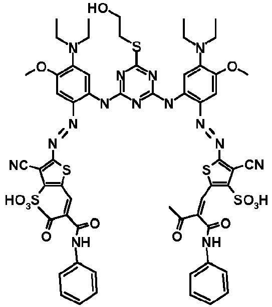 |
| 1-57 | 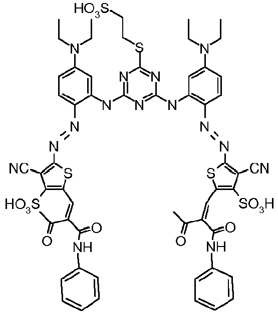 | 1-58 | 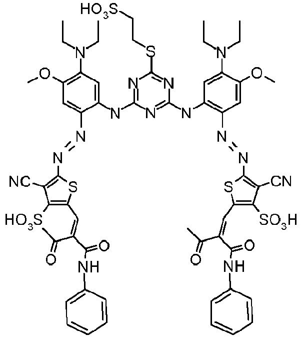 |
| 1-59 | 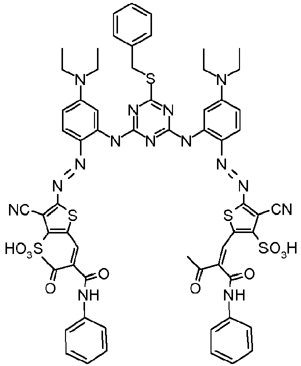 | 1-60 | 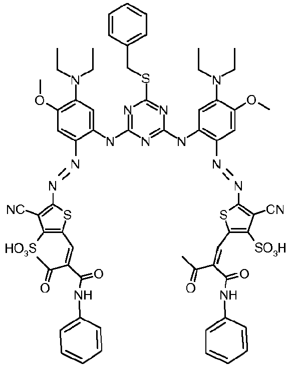 |
| 1-61 | 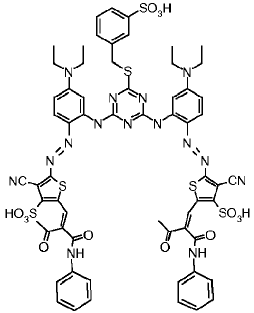 | 1-62 | 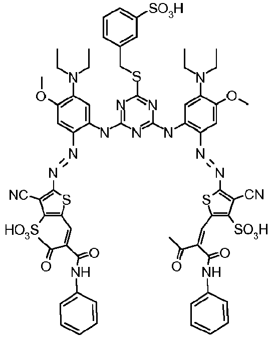 |
| 1-63 | 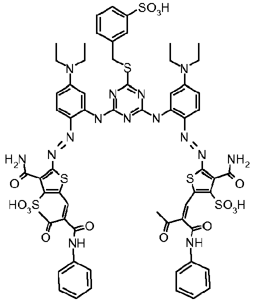 | 1-64 | 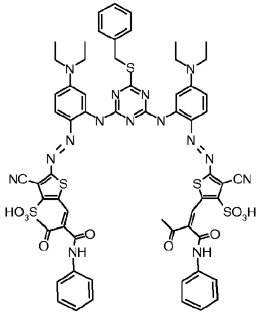 |
| 1-65 | 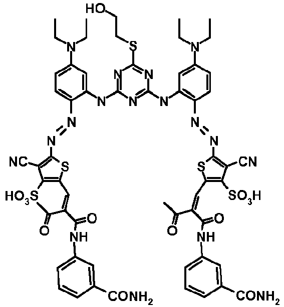 | 1-66 | 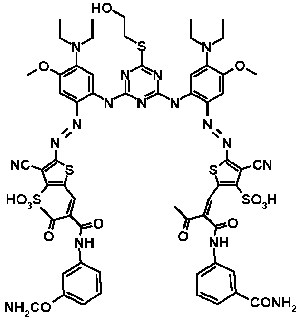 |
| 1-67 | 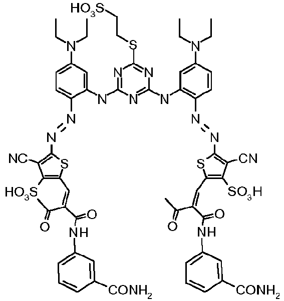 | 1-68 | 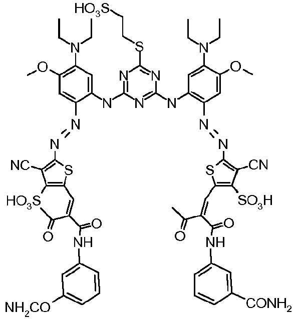 |
| 1-69 | 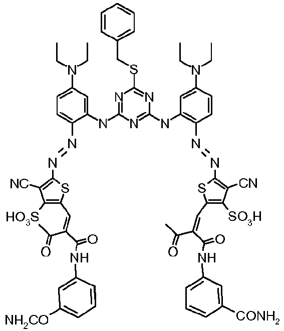 | 1-70 | 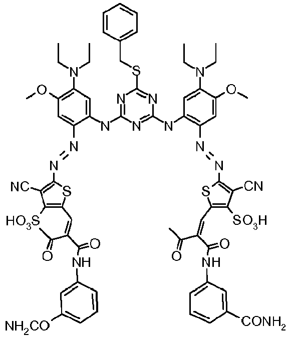 |
| 1-71 | 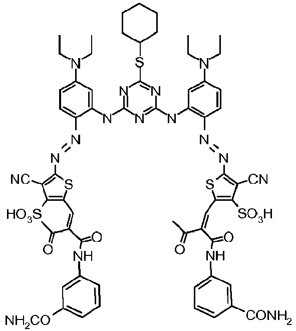 | 1-72 | 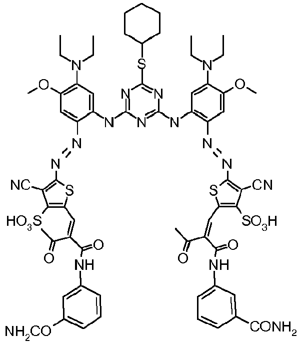 |
| 1-73 | 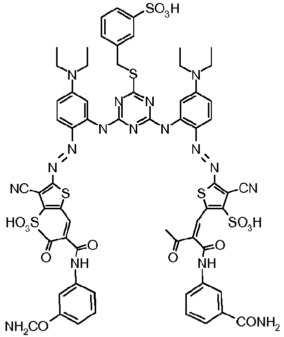 | 1-74 | 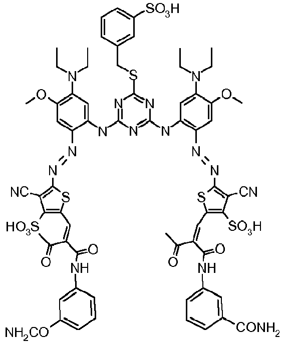 |
| 1-75 | 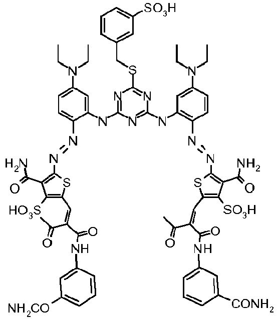 | 1-76 | 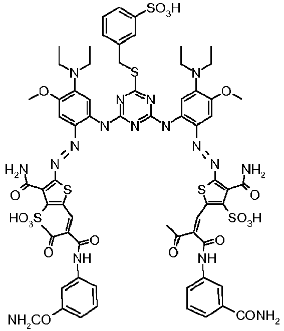 |
| 1-77 | 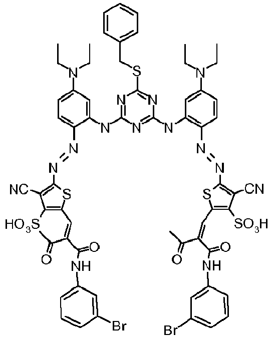 | 1-78 | 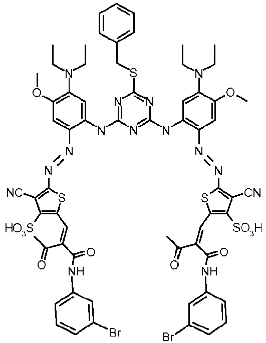 |
| 1-79 | 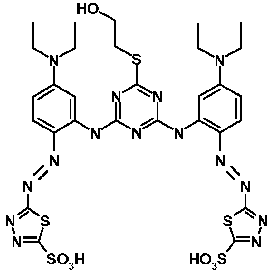 | 1-80 | 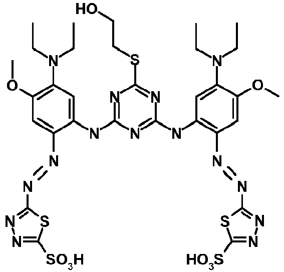 |
| 1-81 | 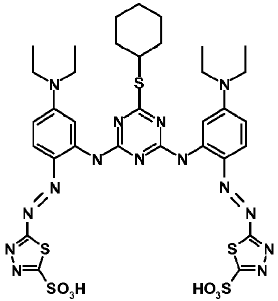 | 1-82 | 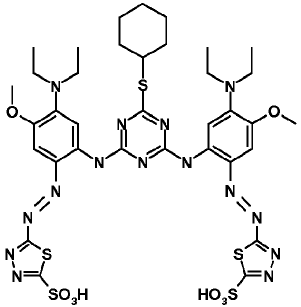 |
| 1-83 | 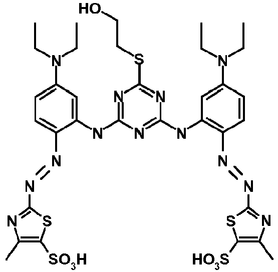 | 1-84 | 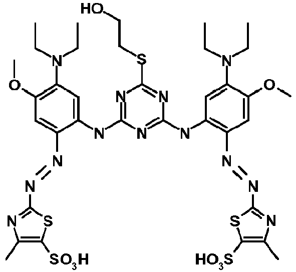 |
| 1-85 | 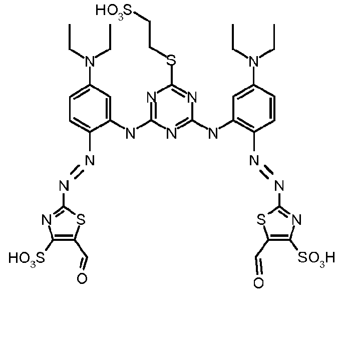 | 1-86 | 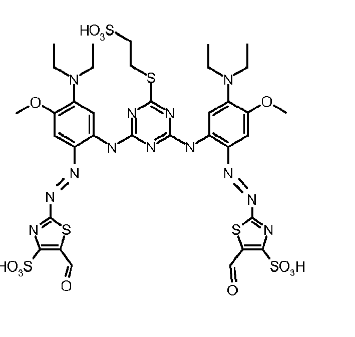 |
| 1-87 | 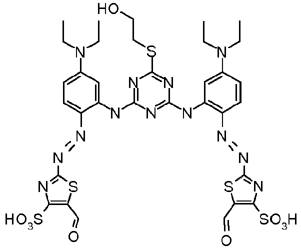 | 1-88 | 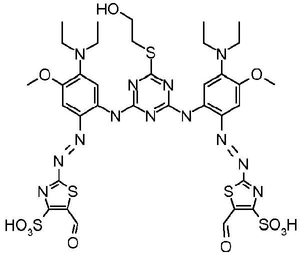 |
| 1-89 | 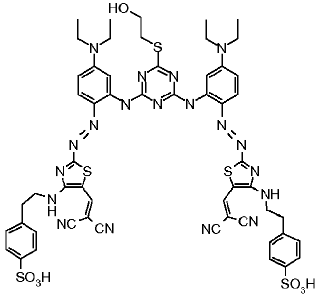 | 1-90 | 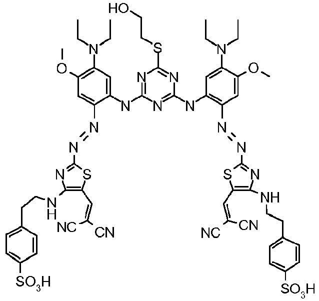 |
| 1-91 | 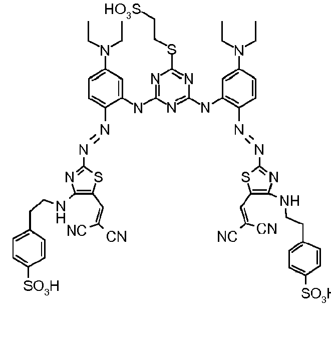 | 1-92 | 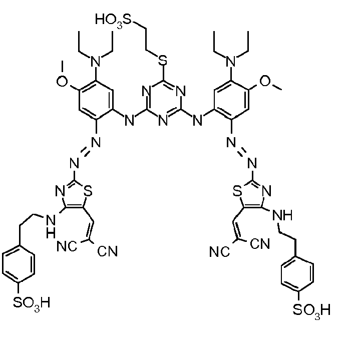 |
| 1-93 | 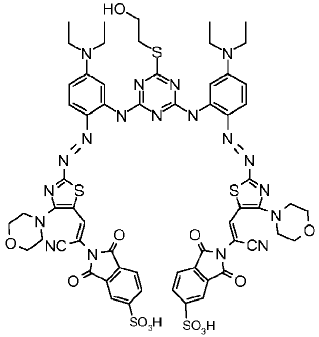 | 1-94 | 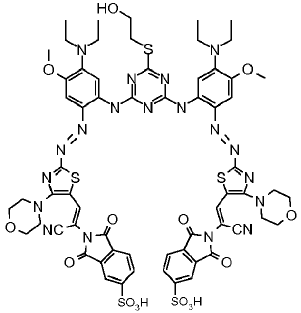 |
| 1-95 | 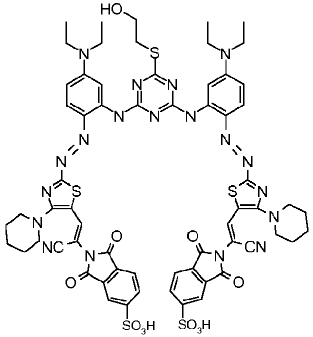 | 1-96 | 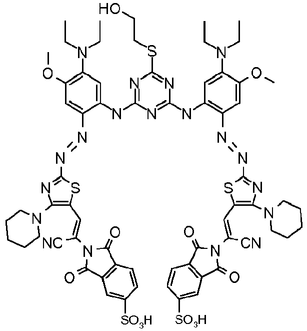 |
| 1-97 | 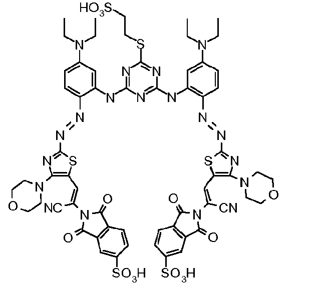 | 1-98 | 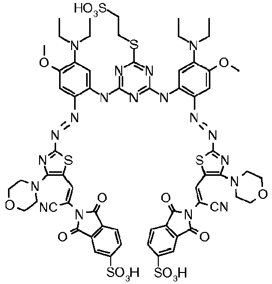 |
| 1-99 | 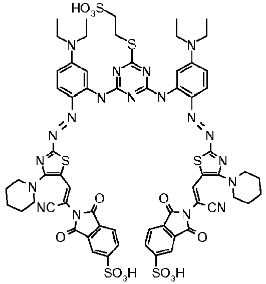 | 1-100 | 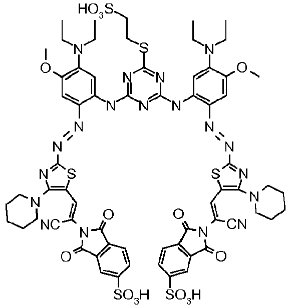 |
| 1-101 | 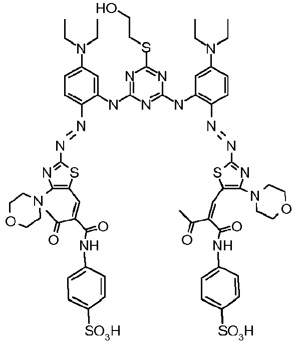 | 1-102 | 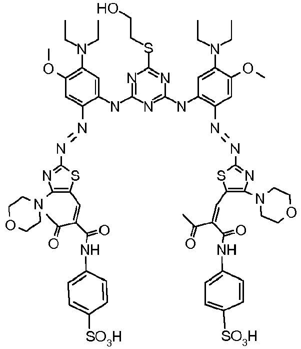 |
| 1-103 | 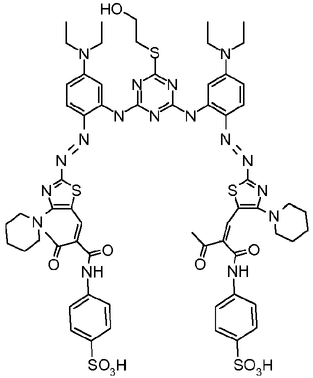 | 1-104 | 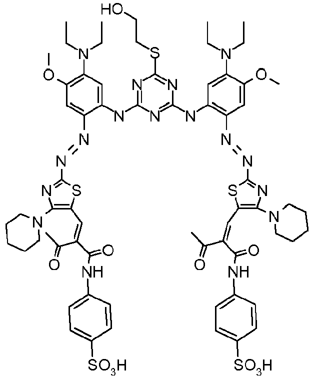 |
| 1-105 | 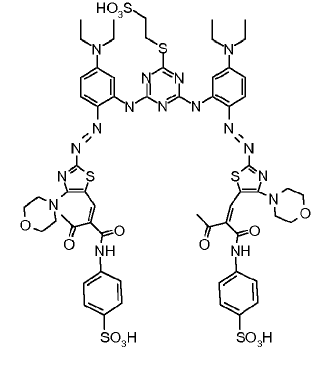 | 1-106 | 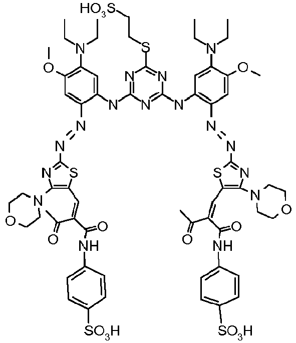 |
| 1-107 | 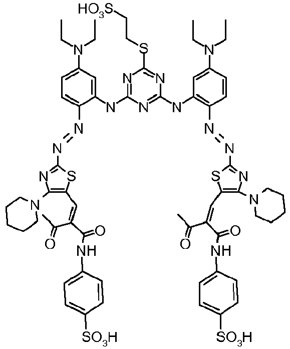 | 1-108 | 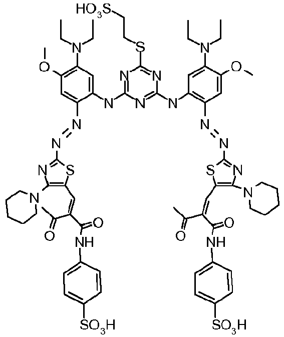 |
| 1-109 | 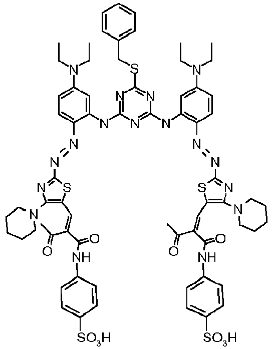 | 1-110 | 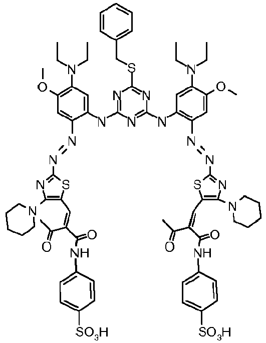 |
| 1-111 | 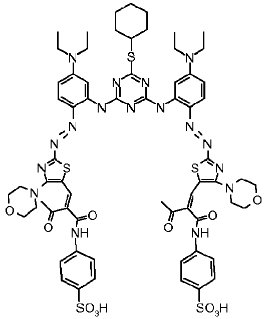 | 1-112 | 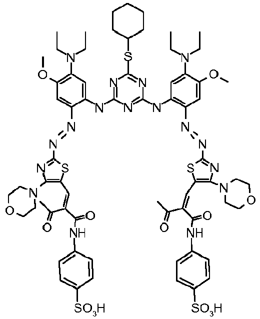 |
| 1-113 | 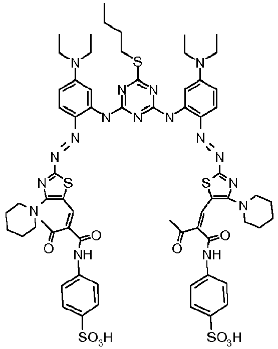 | 1-114 | 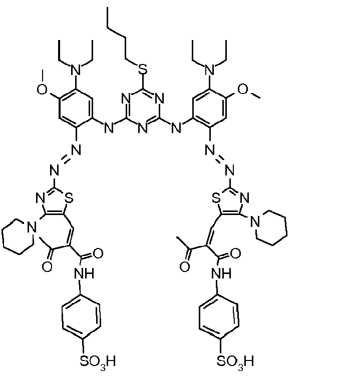 |
| 1-115 | 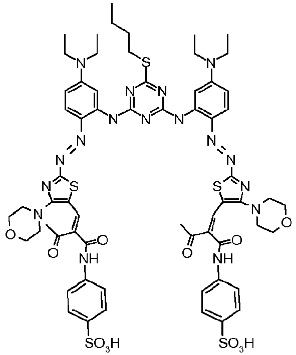 | 1-116 | 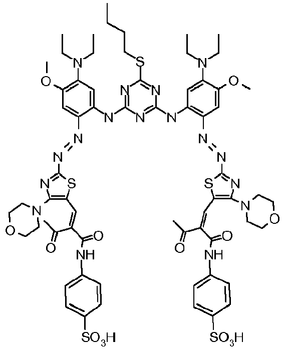 |
| 1-117 | 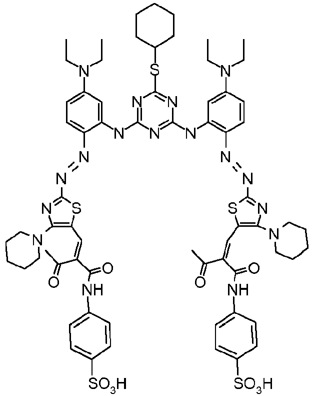 | 1-118 | 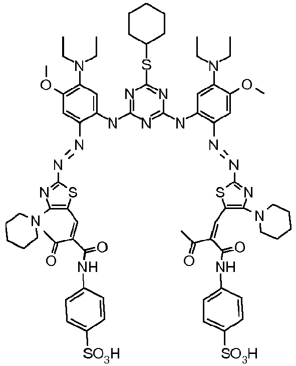 |
| 1-119 | 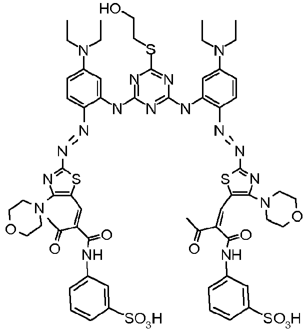 | 1-120 | 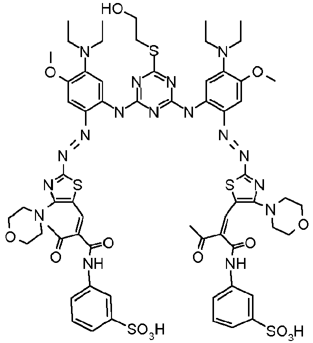 |
| 1-121 | 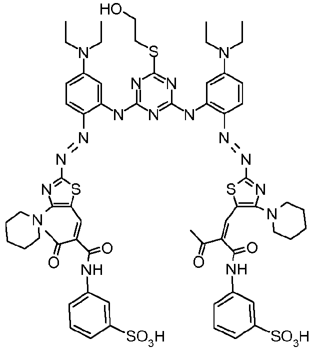 | 1-122 | 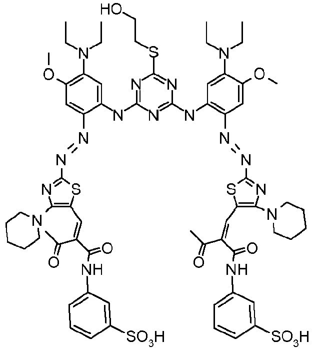 |
| 1-123 | 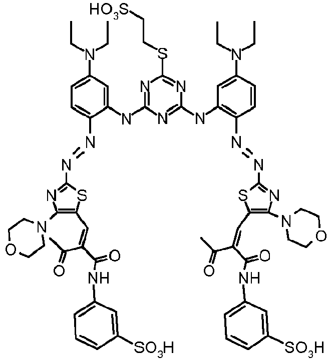 | 1-124 | 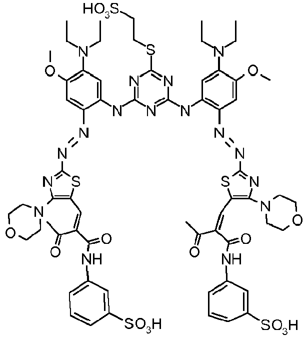 |
| 1-125 | 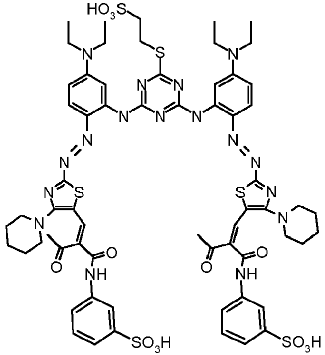 | 1-126 | 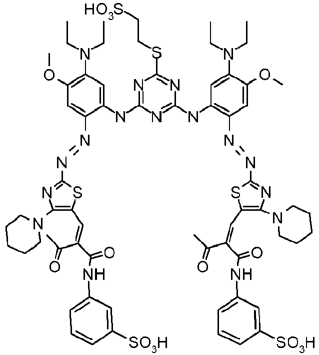 |
| 1-127 | 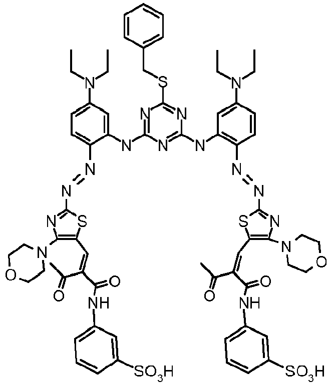 | 1-128 | 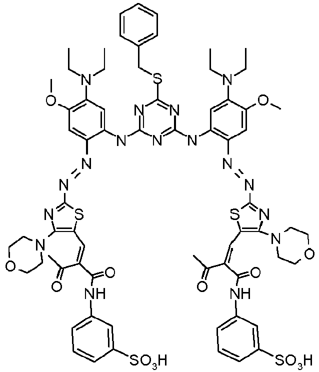 |
| 1-129 | 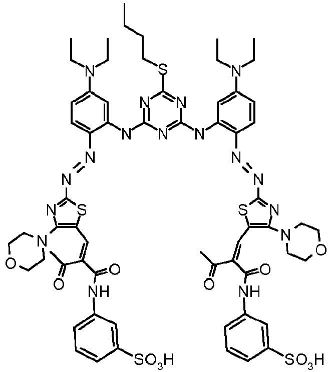 | 1-130 | 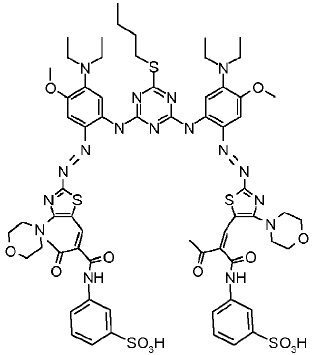 |
| 1-131 | 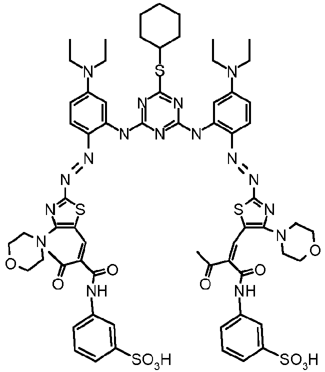 | 1-132 | 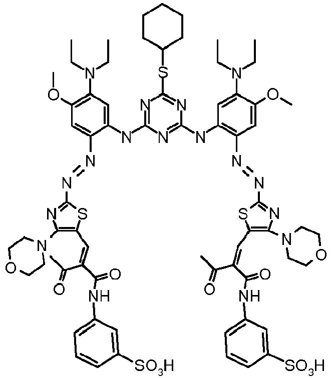 |
| 1-133 | 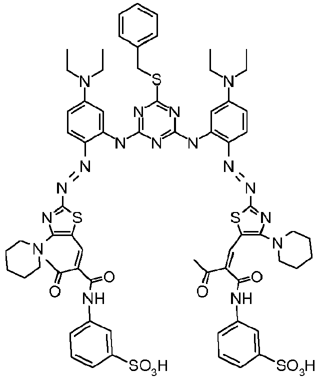 | 1-134 | 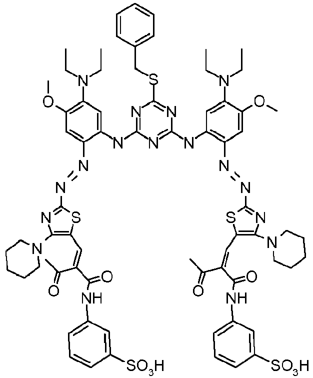 |
| 1-135 | 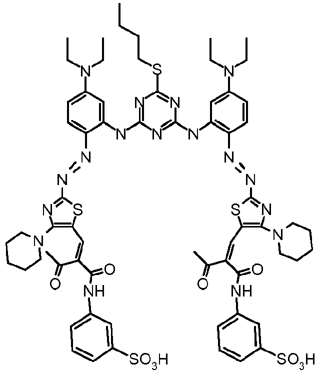 | 1-136 | 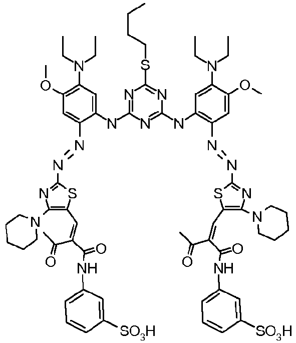 |
| 1-137 | 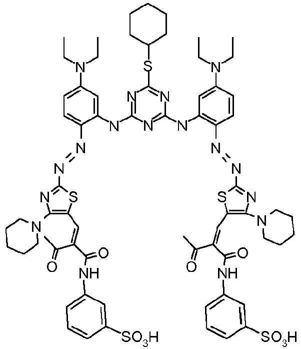 | 1-138 | 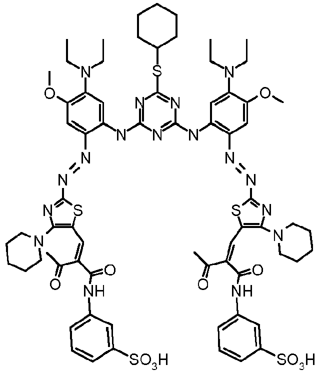 |
| 1-139 | 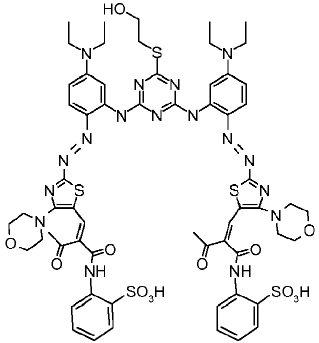 | 1-140 | 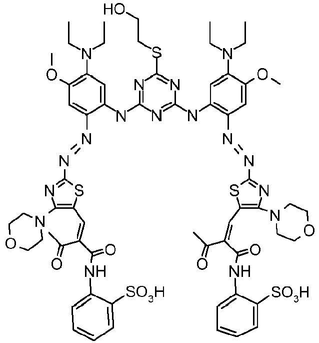 |
| 1-141 | 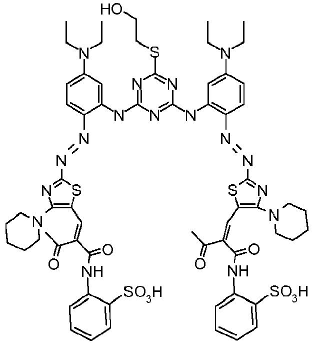 | 1-142 | 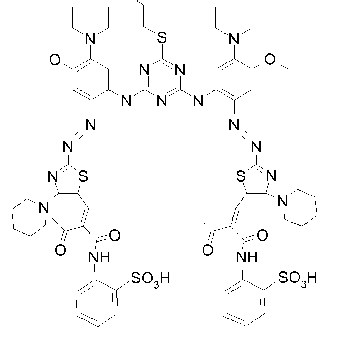 |
| 1-143 | 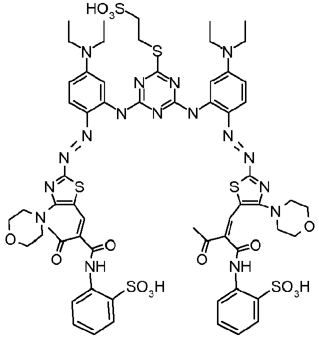 | 1-144 | 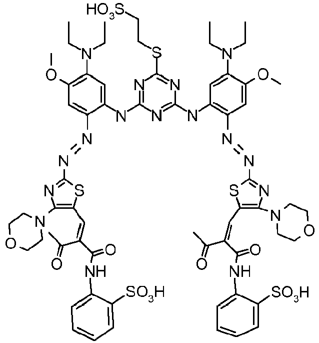 |
| 1-145 | 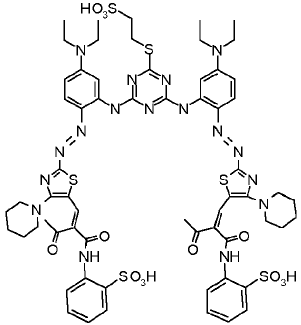 | 1-146 | 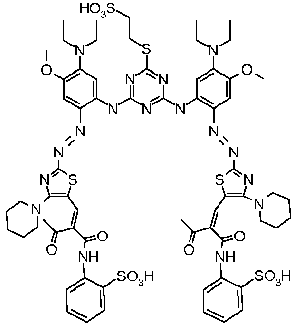 |
| 1-147 | 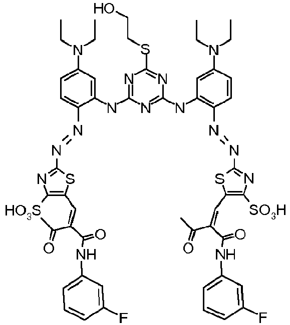 | 1-148 | 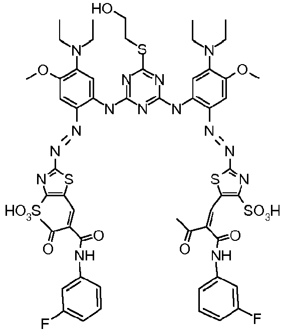 |
| 1-149 | 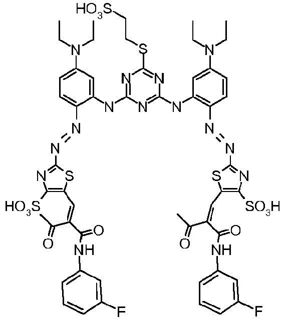 | 1-150 | 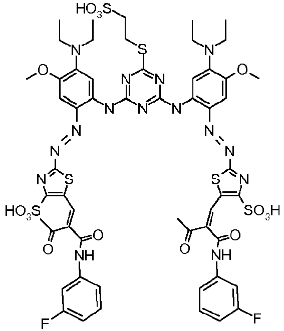 |
| 1-151 | 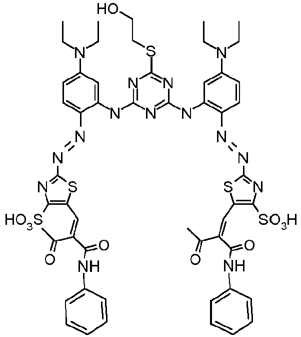 | 1-152 | 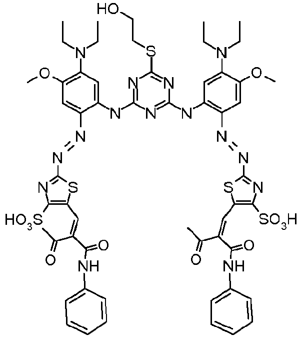 |
| 1-153 | 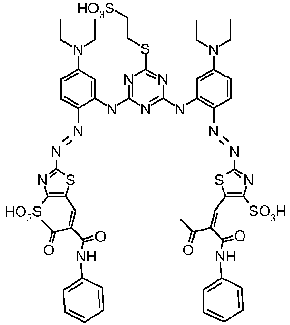 | 1-154 | 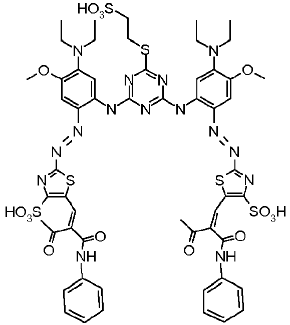 |
| 1-155 | 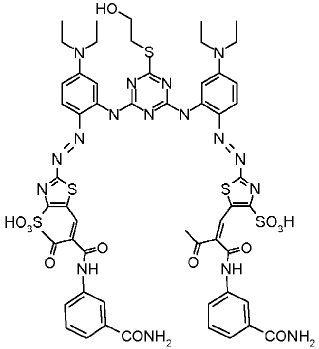 | 1-156 | 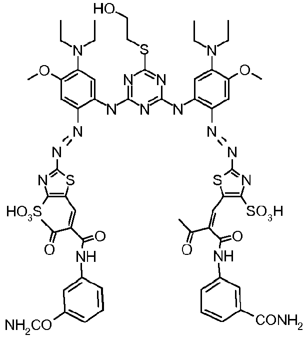 |
| 1-157 | 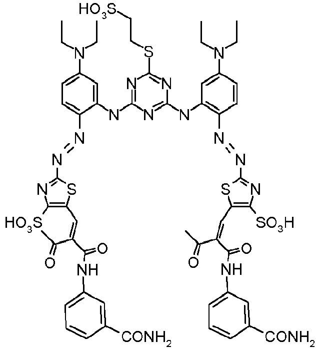 | 1-158 | 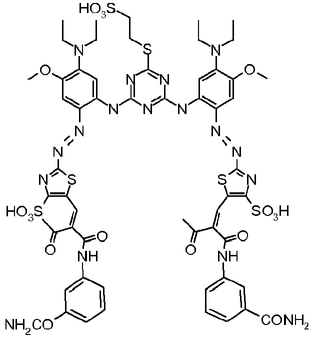 |
| 1-159 | 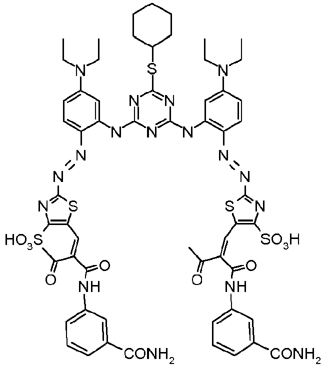 | 1-160 | 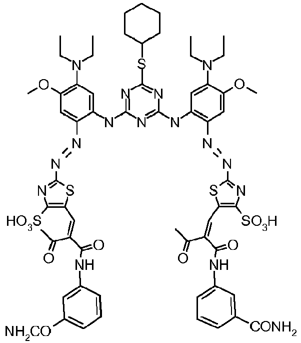 |
| 1-161 | 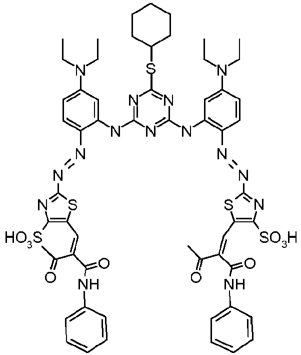 | 1-162 | 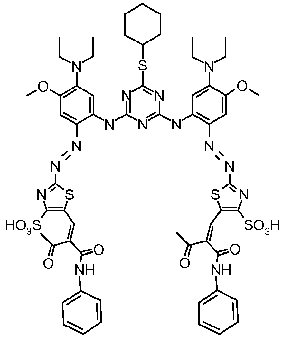 |
| 1-163 | 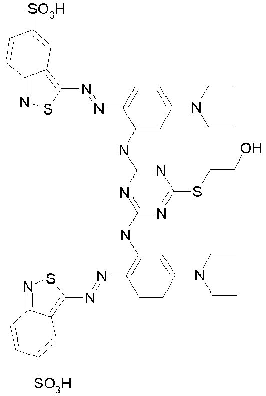 | 1-164 | 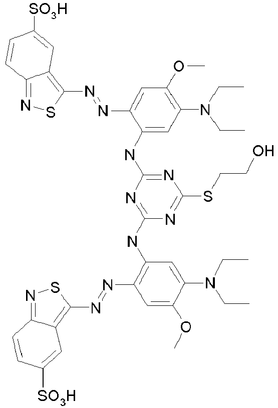 |
| 1-165 | 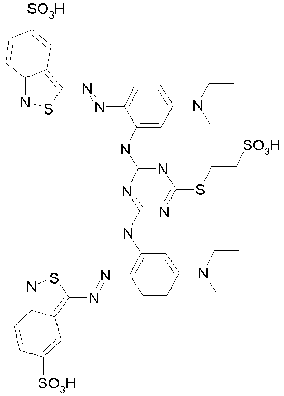 | 1-166 | 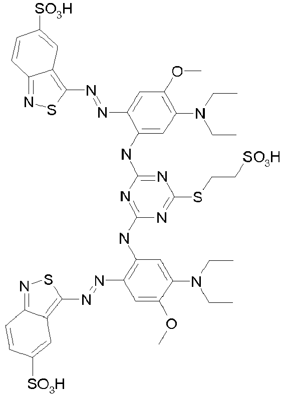 |
| 1-167 | 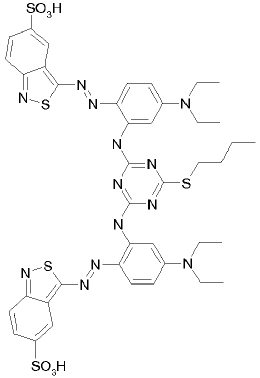 | 1-168 | 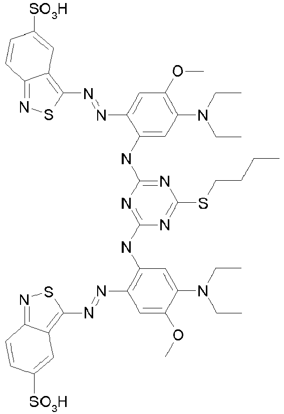 |
| 1-169 | 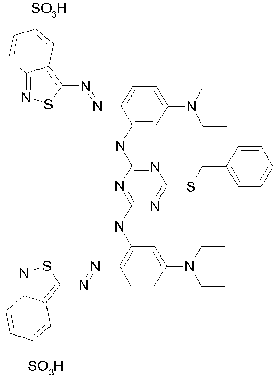 | 1-170 | 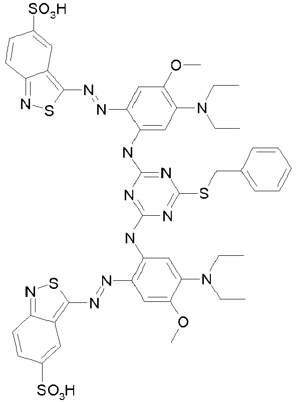 |
| 1-171 | 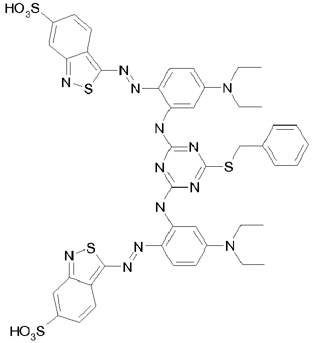 | 1-172 | 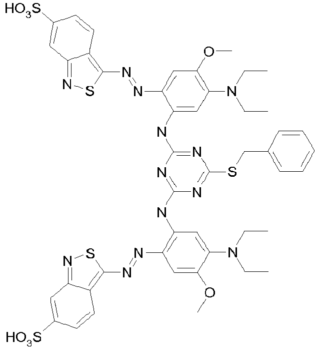 |
| 1-173 | 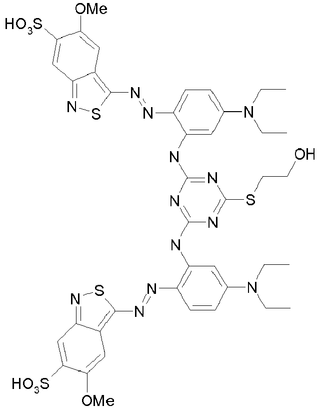 | 1-174 | 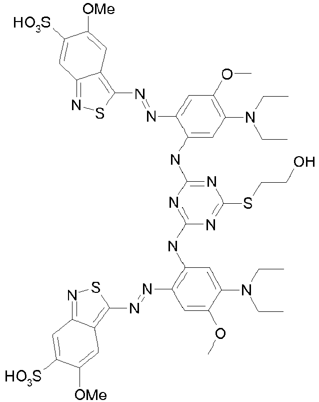 |
| 1-175 | 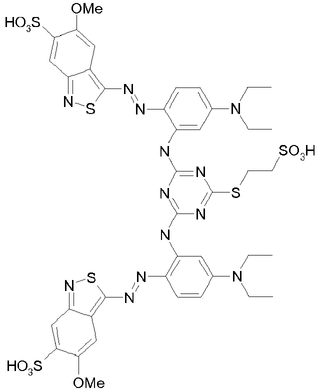 | 1-176 | 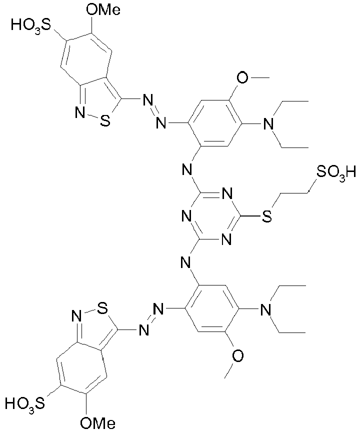 |
| 1-177 | 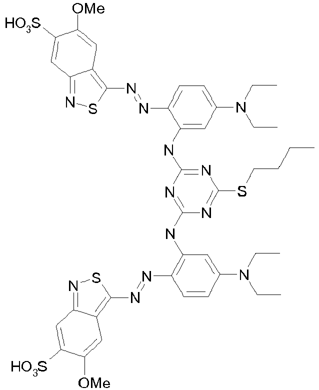 | 1-178 | 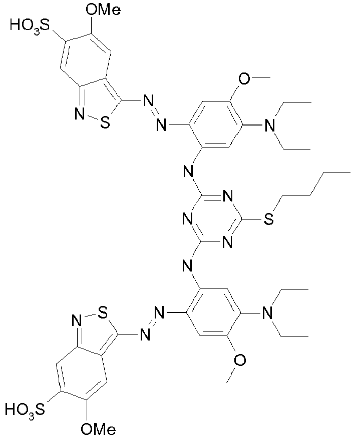 |
| 1-179 | 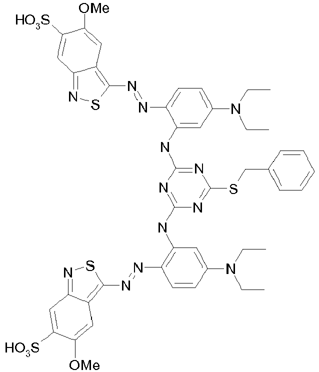 | 1-180 | 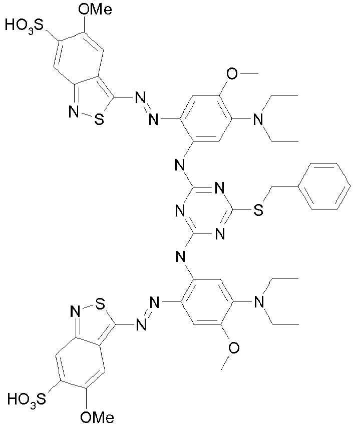 |
| 1-181 | 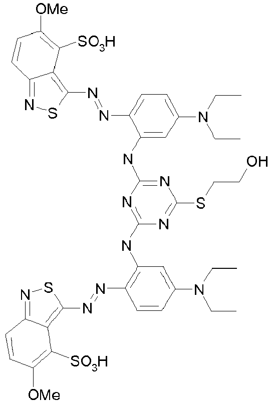 | 1-182 | 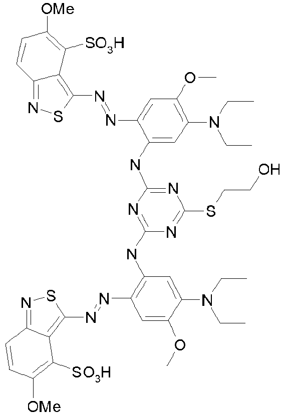 |
| 1-183 | 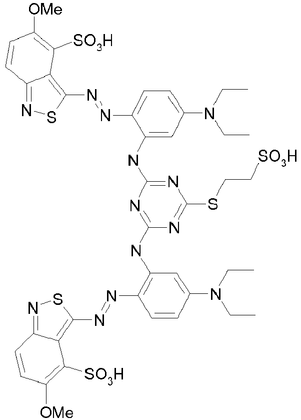 | 1-184 | 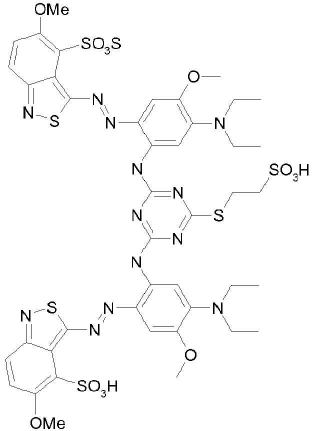 |
| 1-185 | 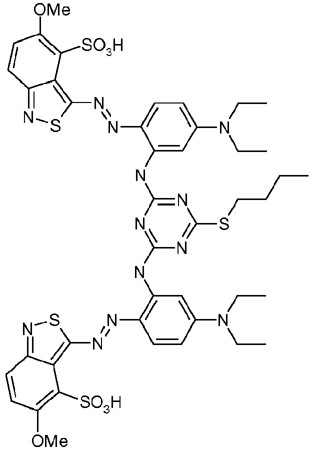 | 1-186 | 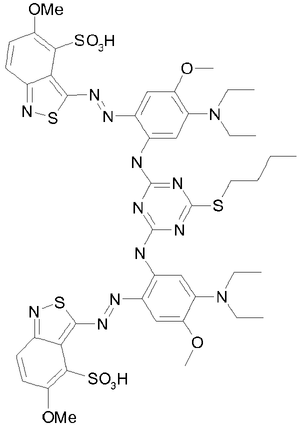 |
| 1-187 | 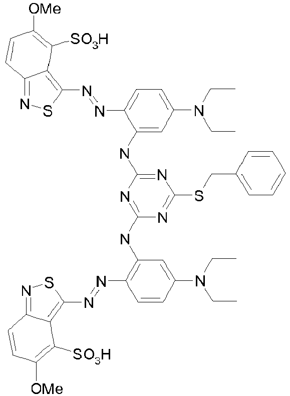 | 1-188 | 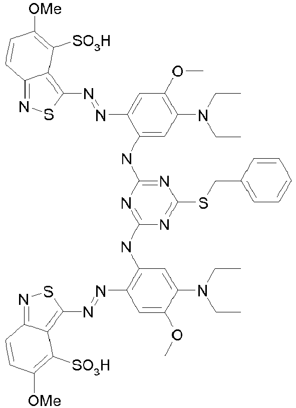 |
| 1-189 | 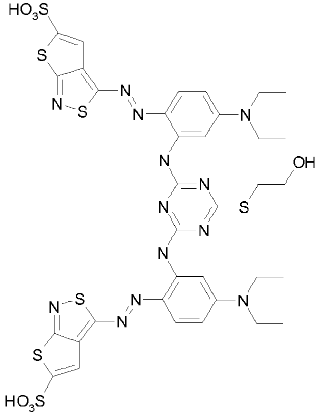 | 1-190 | 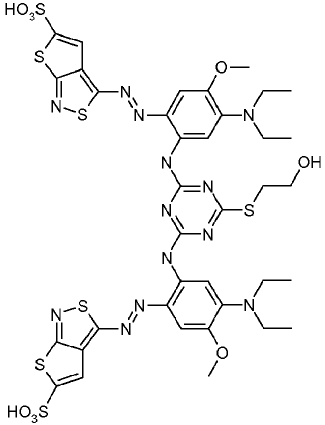 |
| 1-191 | 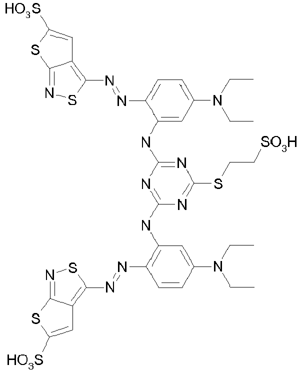 | 1-192 | 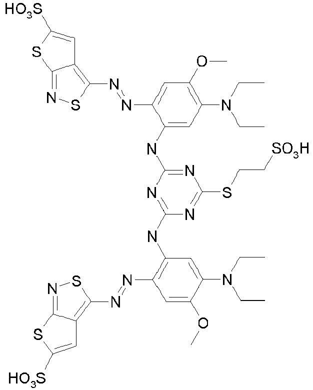 |
| 1-193 | 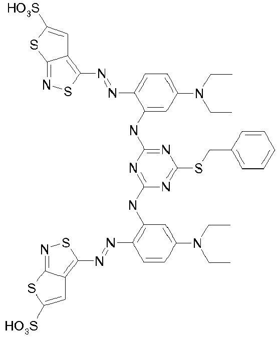 | 1-194 | 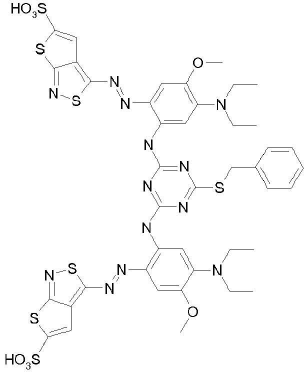 |
| 1-195 | 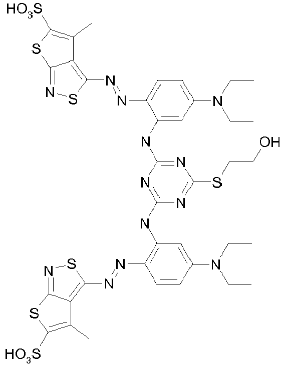 | 1-196 | 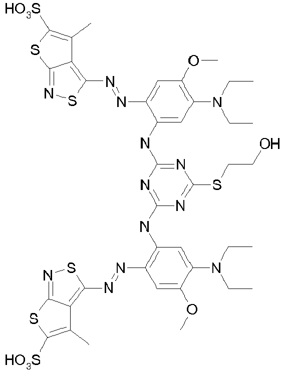 |
| 1-197 | 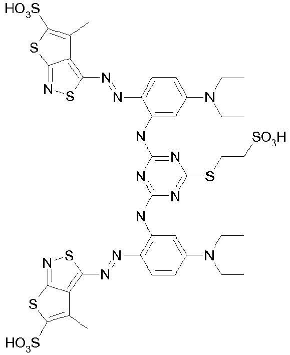 | 1-198 | 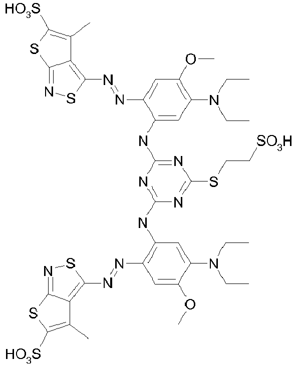 |
| 1-199 | 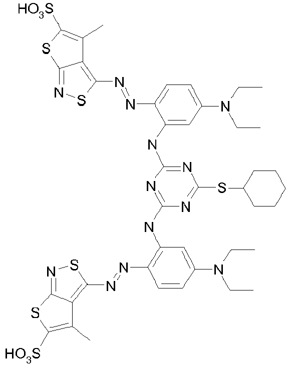 | 1-200 | 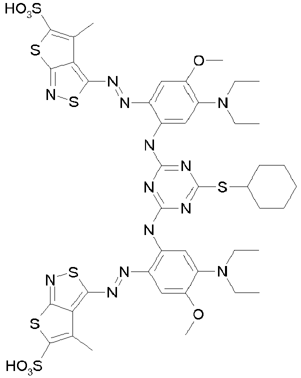 |
| 1-201 | 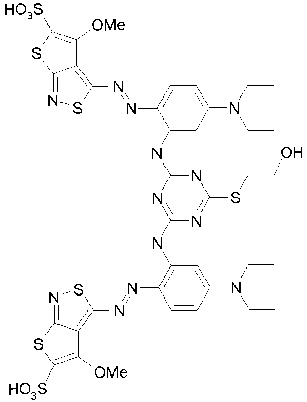 | 1-202 | 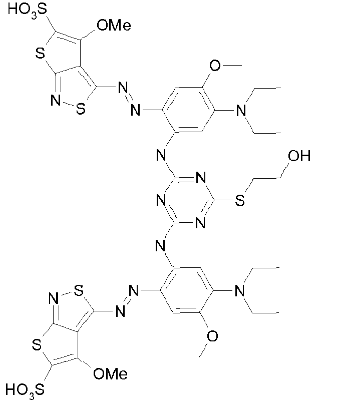 |
| 1-203 | 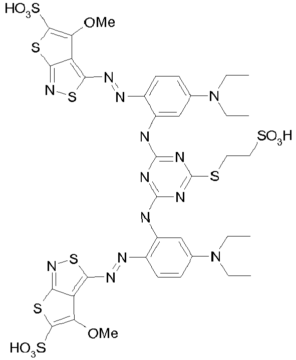 | 1-204 | 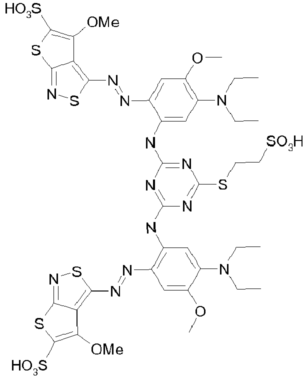 |
| 1-205 | 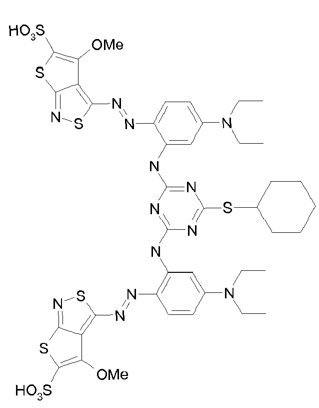 | 1-206 | 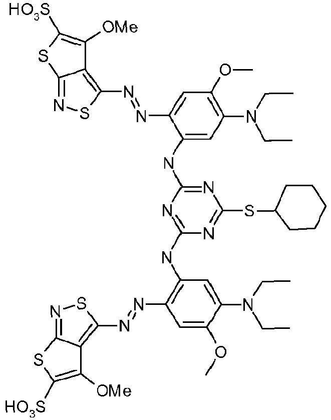 |
| 1-207 | 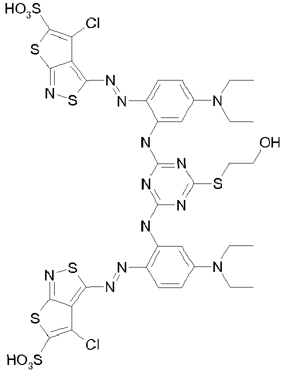 | 1-208 | 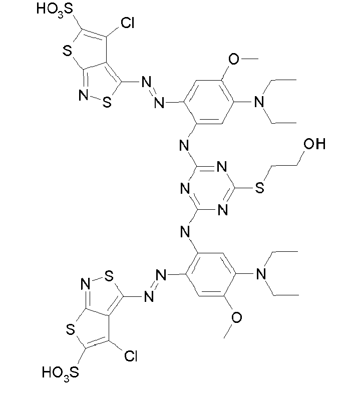 |
| 1-209 | 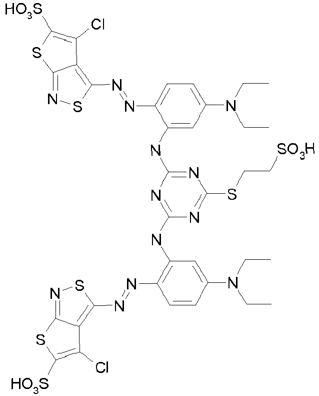 | 1-210 | 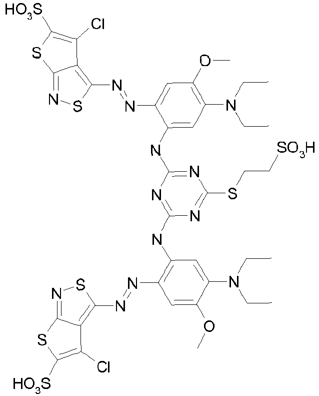 |
| 1-211 | 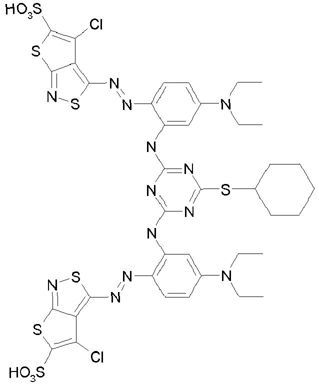 | 1-212 | 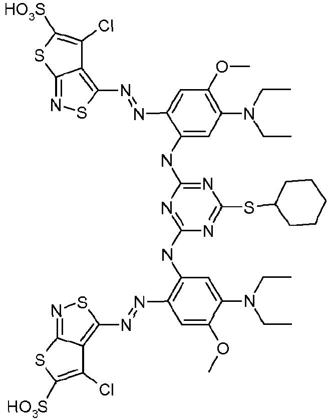 |
| 1-213 | 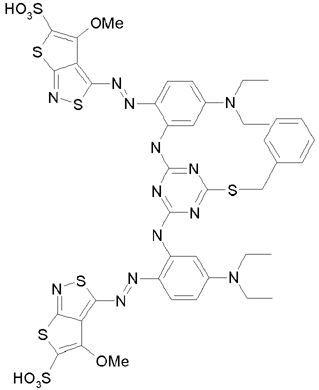 | 1-214 | 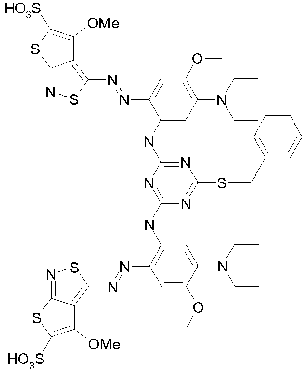 |
| 1-215 | 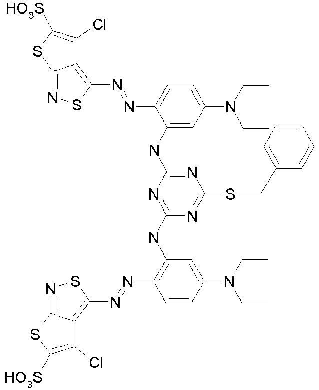 | 1-216 | 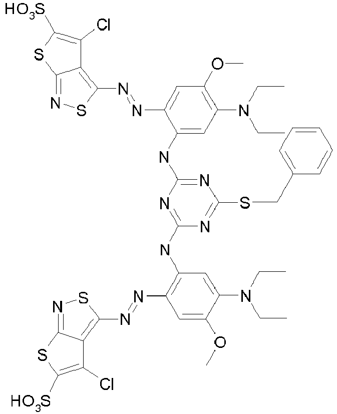 |
| 1-217 | 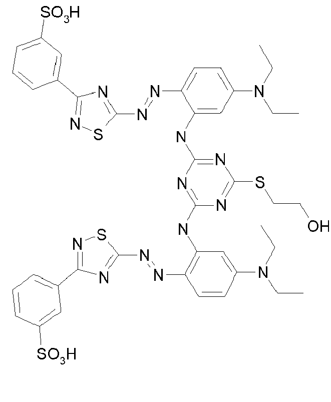 | 1-218 | 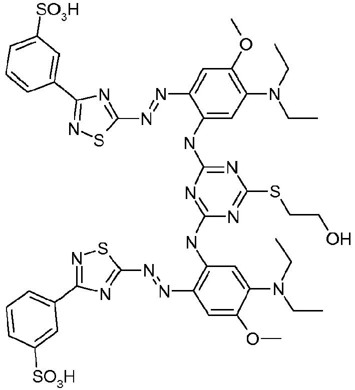 |
| 1-219 | 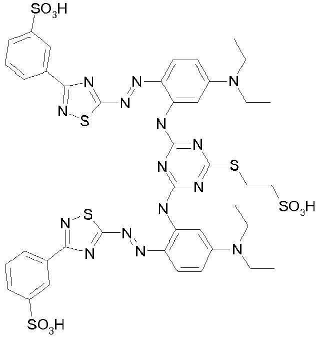 | 1-220 | 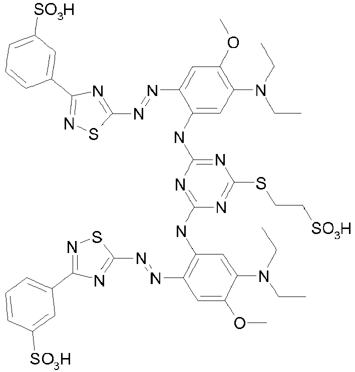 |
| 1-221 | 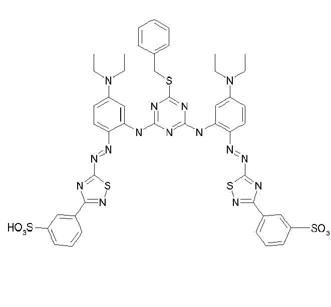 | 1-222 | 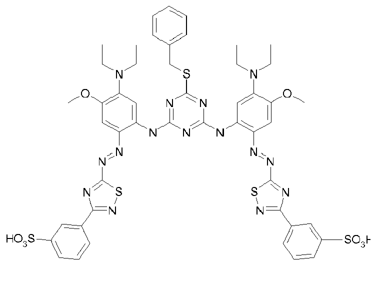 |
| 1-223 | 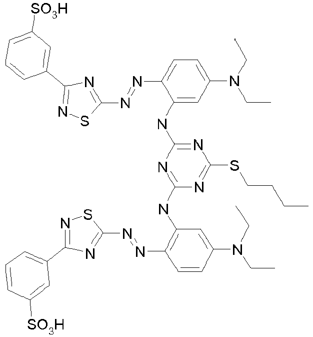 | 1-224 | 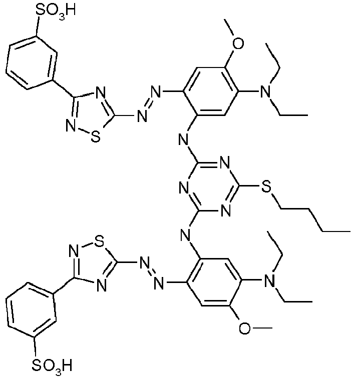 |
| 1-225 | 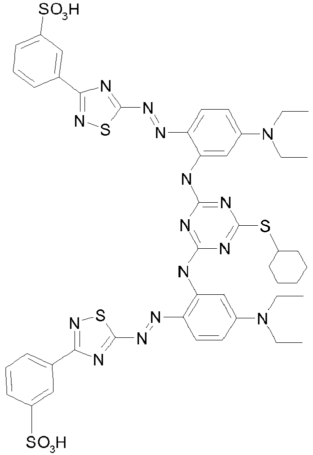 | 1-226 | 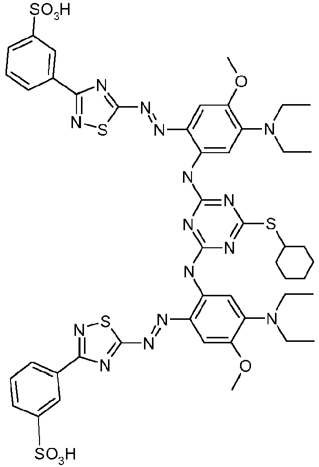 |
| 1-227 | 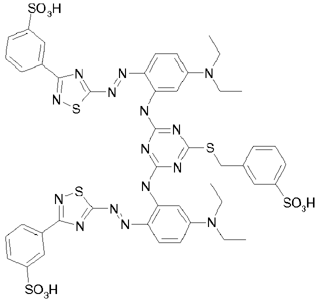 | 1-228 | 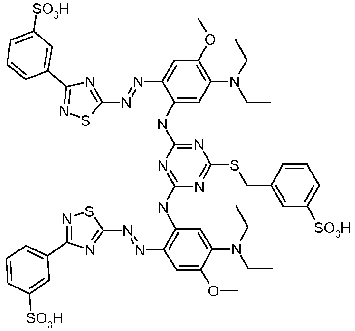 |
| 1-229 | 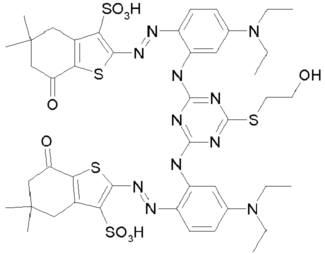 | 1-230 | 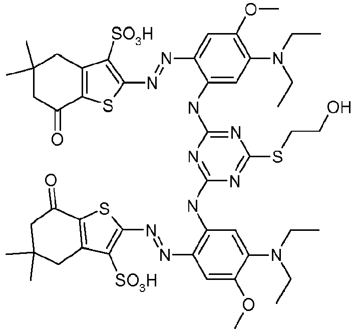 |
| 1-231 | 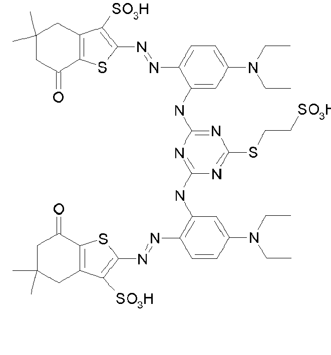 | 1-232 | 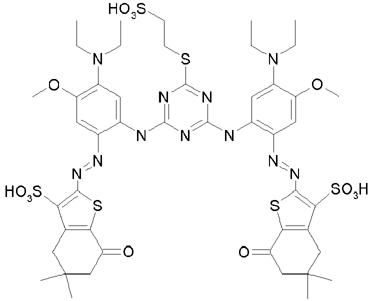 |
| 1-233 | 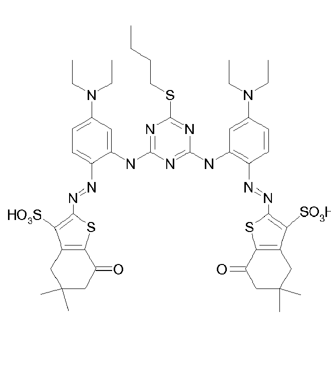 | 1-234 | 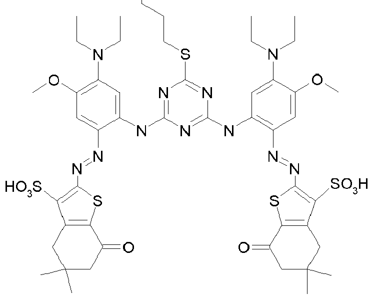 |
| 1-235 | 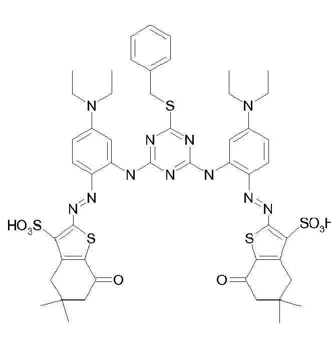 | 1-236 | 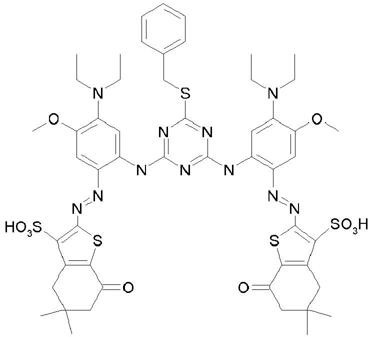 |
| 1-237 | 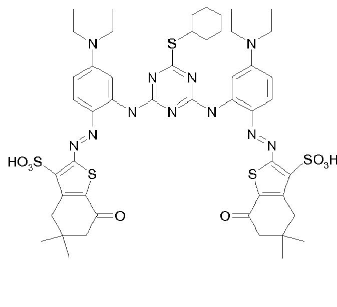 | 1-238 | 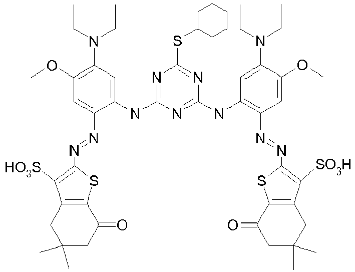 |
| 1-239 | 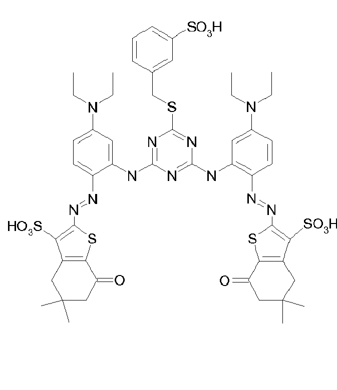 | 1-240 | 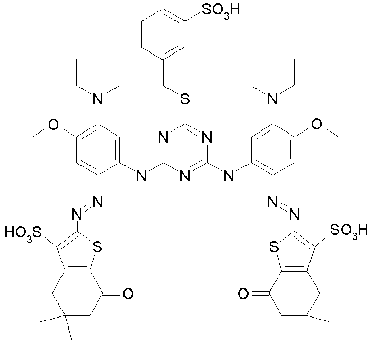 |
| 1-241 | 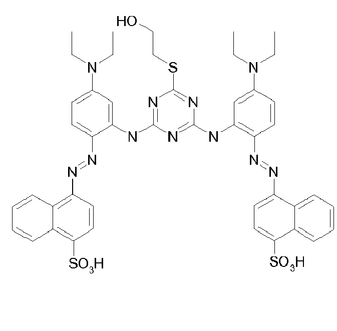 | 1-242 | 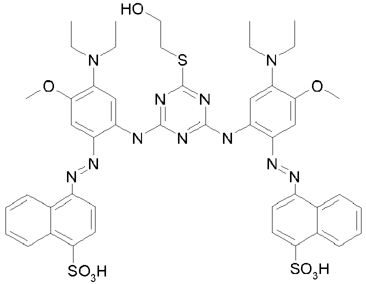 |
| 1-243 | 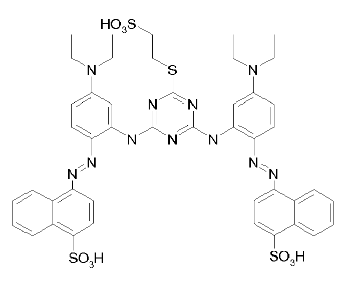 | 1-244 | 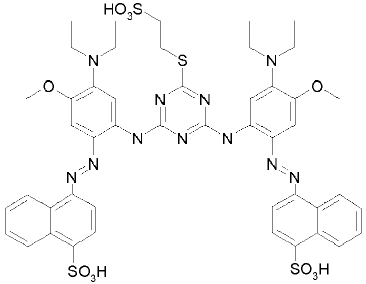 |
| 1-245 | 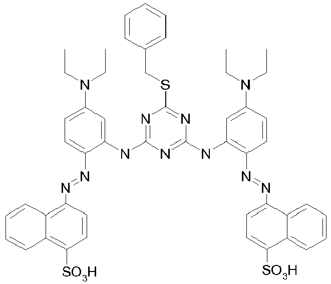 | 1-246 | 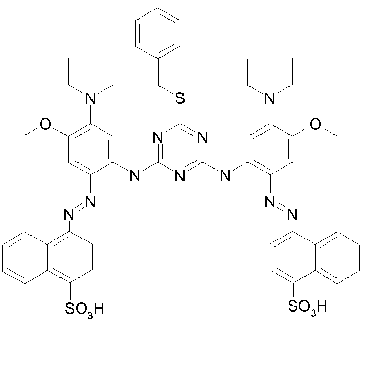 |
| 1-247 | 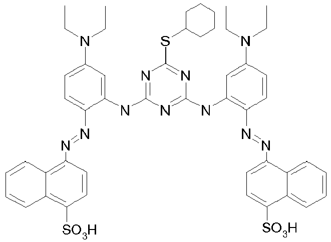 | 1-248 | 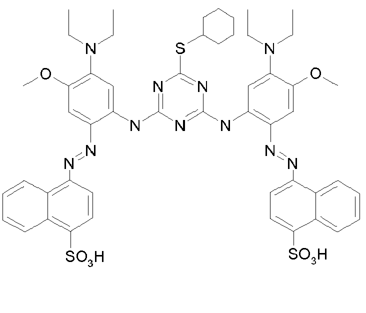 |
| 1-249 | 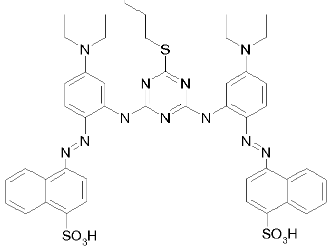 | 1-250 | 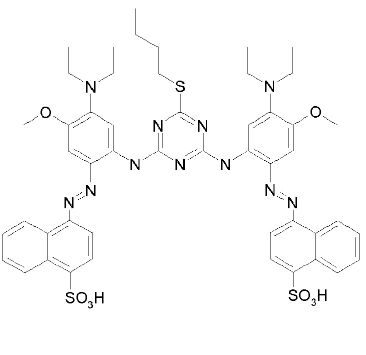 |
| 1-251 | 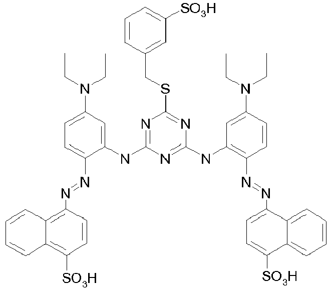 | 1-252 | 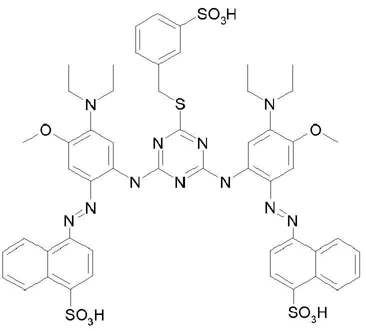 |
| 1-253 | 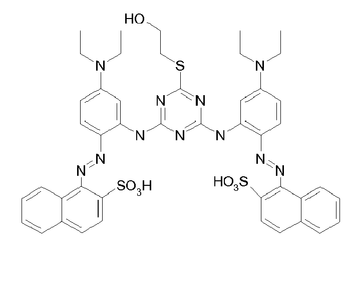 | 1-254 | 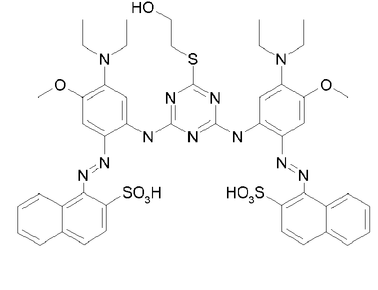 |
| 1-255 | 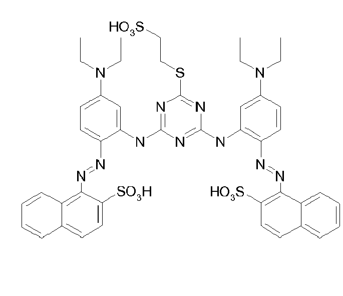 | 1-256 | 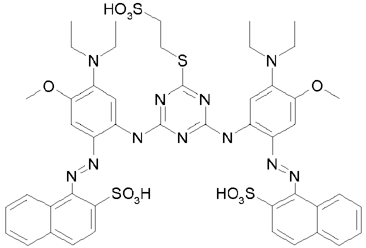 |
| 1-257 | 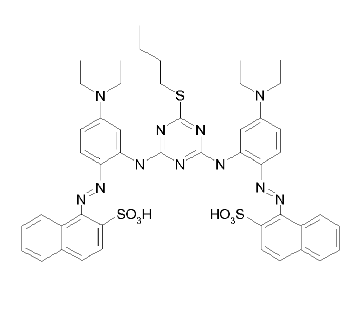 | 1-258 | 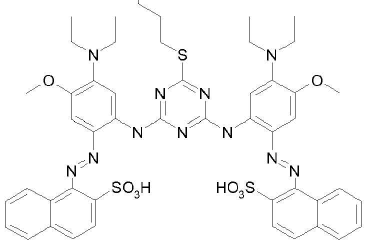 |
| 1-259 | 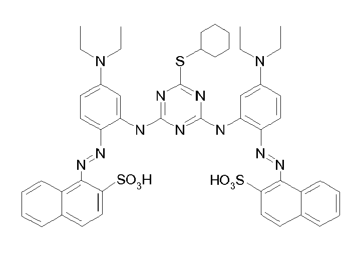 | 1-260 | 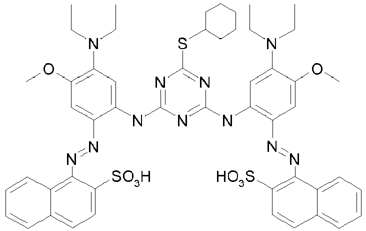 |
| 1-261 | 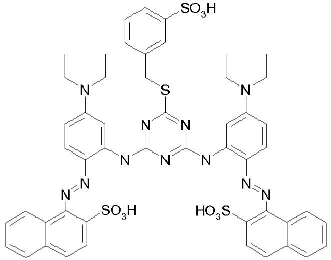 | 1-262 | 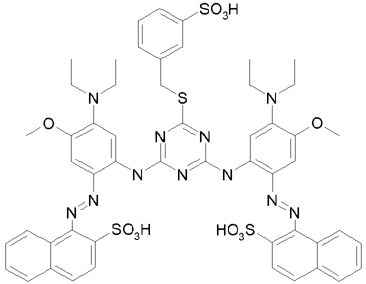 |
| 1-263 | 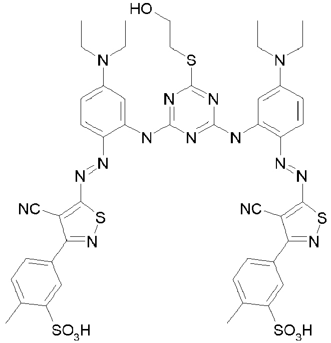 | 1-264 | 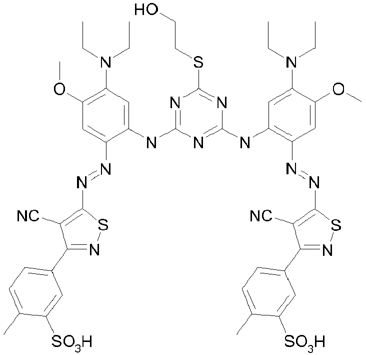 |
| 1-265 | 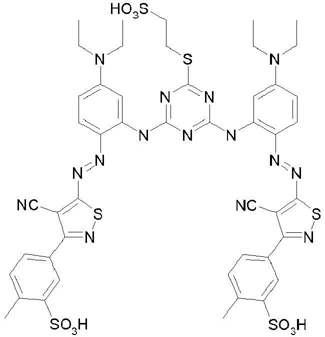 | 1-266 | 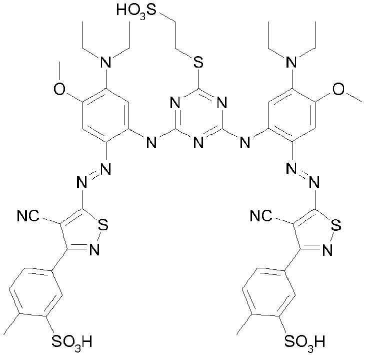 |
| 1-267 | 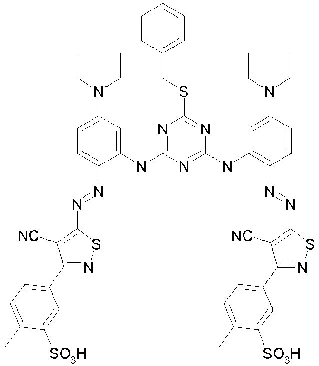 | 1-268 | 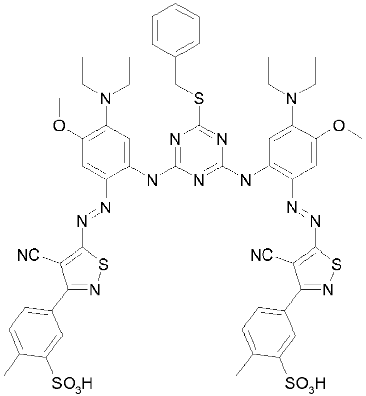 |
| 1-269 | 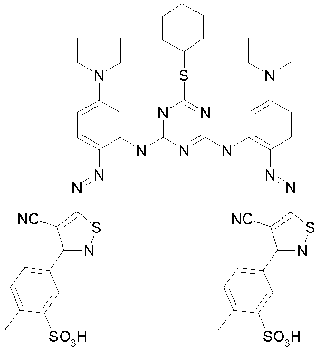 | 1-270 | 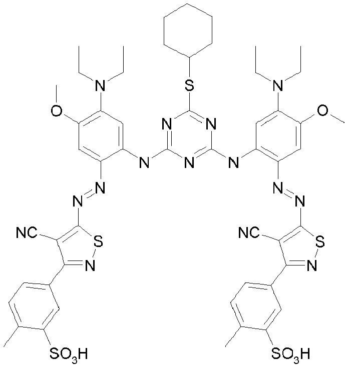 |
| 1-271 | 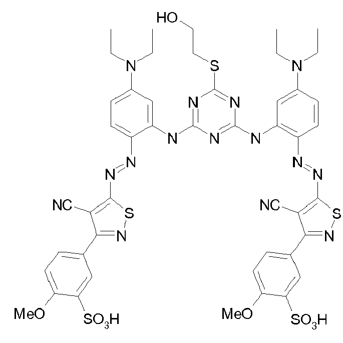 | 1-272 | 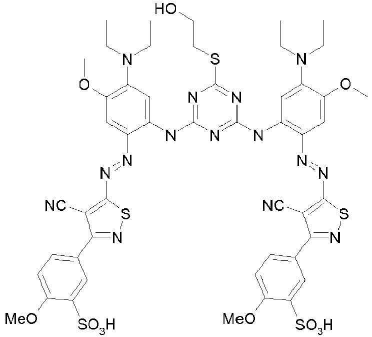 |
| 1-273 | 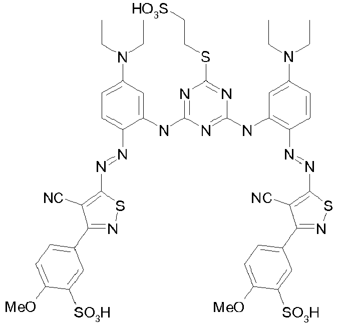 | 1-274 | 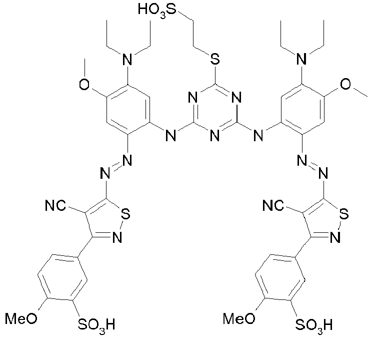 |
| 1-275 | 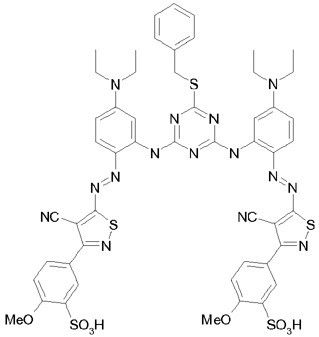 | 1-276 | 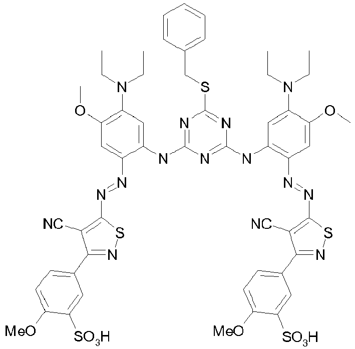 |
| 1-277 | 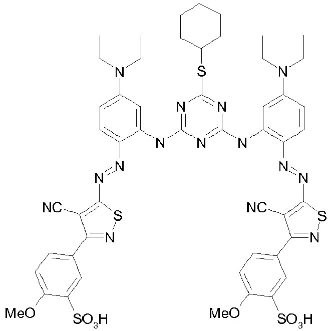 | 1-278 | 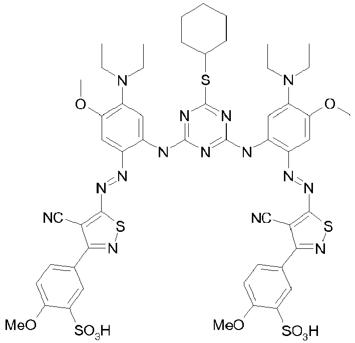 |
| 1-279 | 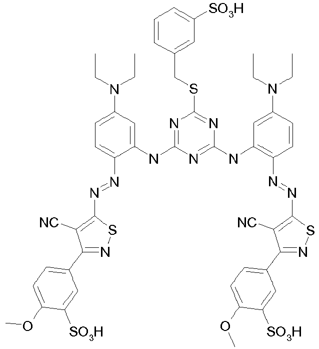 | 1-280 | 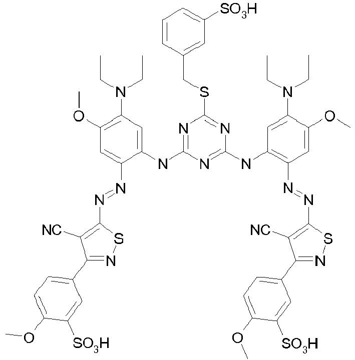 |
| 1-281 | 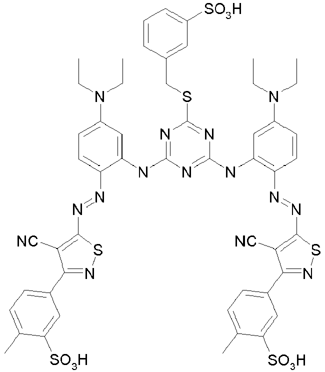 | 1-282 | 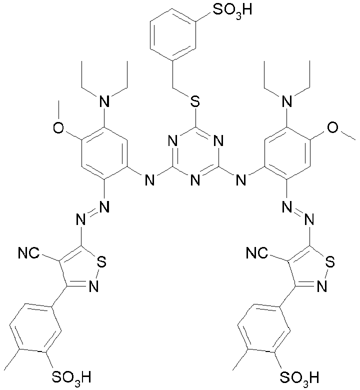 |
| 1-283 | 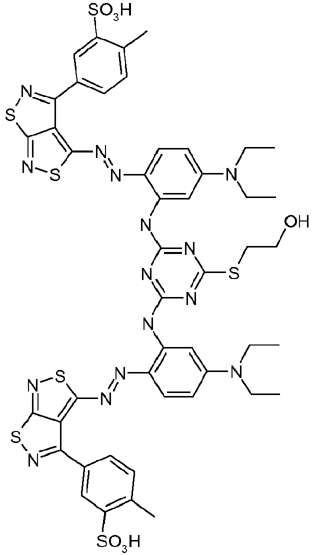 | 1-284 | 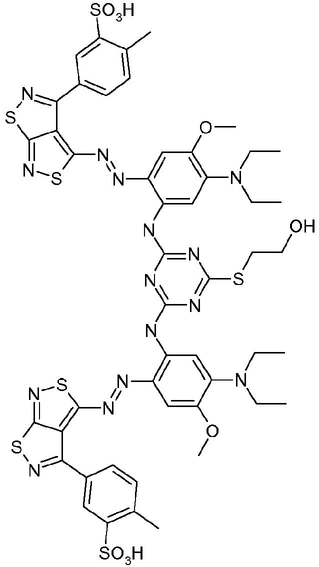 |
| 1-285 | 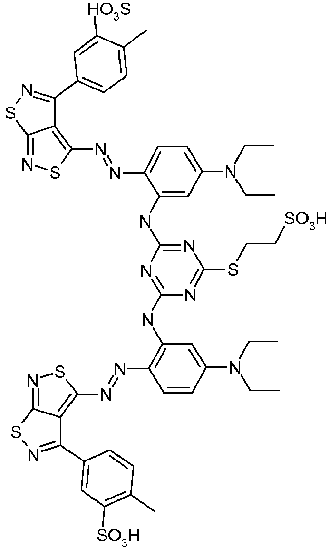 | 1-286 | 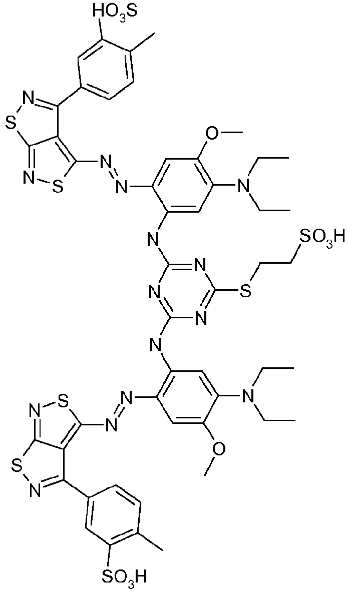 |
| 1-287 | 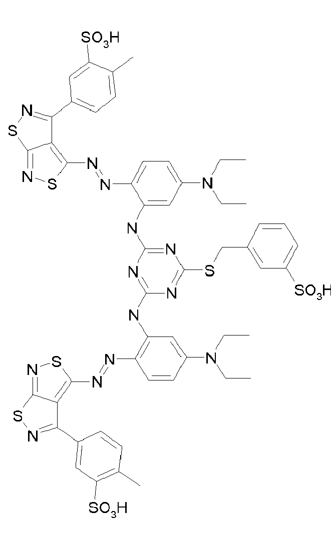 | 1-288 | 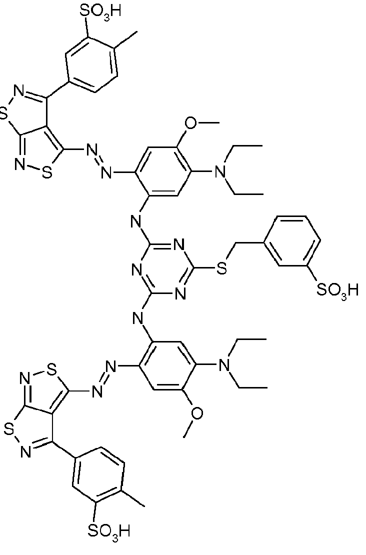 |

The dyes of the present invention can be used alone or as a mixture with other dyes according to the present invention and/or other substances.

Thus a chemical composition comprising one or more dye(s) as described above is also an aspect of the present invention.

A chemical composition consisting of two or more dyes as described above forms another preferred aspect of the present invention.

Also an aqueous solution for dying comprising one or more dye(s) as described above forms an aspect of the present invention.

A process for the production of a dye according to the invention, comprising
a) diazotization of compounds of formulae (2) and (3)

   D'-NH₂ (2) D²-NH₂ (3),

   wherein D¹ and D² are defined as given in claim 1,
b) reacting the products obtained in step a) with a compound of formula (4) 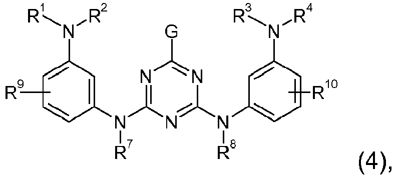 wherein R¹ to R¹⁰ and G are defined as given above is another aspect of the present invention.

The diazotization of the compounds of formulae (2) and (3) can be performed by means of diazotization methods that are known to a person skilled in the art, preferably by using sodium nitrite or nitrosylsulfuric acid in acidic medium using inorganic acids such as hydrochloric acid, sulfuric acid or phosphoric acid or mixtures thereof or organic acids such as acetic acid or propionic acid or mixtures thereof. Also mixtures of inorganic acid with organic acids can be used advantageously.

The coupling reaction of the diazotized compounds of formulae (2) and (3) onto the compound of formula (4) can likewise be performed by known methods.

The compounds of the formula (2) to (4) are known and commercially available or can be synthesised by means of common chemical reactions known to a person skilled in the art.

The compound of formula (4) can for example be obtained by reacting 2,4,6-trichlorotriazine with the compounds of the formulae (5) - (8) 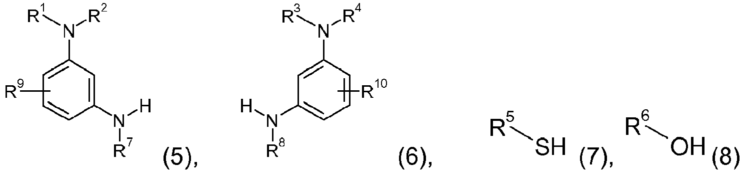 wherein R¹ to R¹⁰ are defined as given above, according to condensation reactions which are known to a person skilled in the art.

The dyes of the present invention are suitable for dyeing and printing of natural, manufactured regenerated, modified or synthetic hydroxyl- amino-, and/or carboxamido-containing fiber materials and their blends by the application methods numerously described in the art for acid dyes.

Therefore, the present invention also is directed to a Process for dyeing or printing carboxamido- and/or hydroxyl-containing material, comprising contacting the carboxamido- and/or hydroxyl-containing material with a dye as described above.

The use of a dye as described above, a chemical composition as described above or of an aqueous solution as described above for dying fibers, as well as blends of such fibres selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers forms another aspect of the present invention.

Still another aspect of the present invention is/are: Fiber and blends containing such fiber selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers, and Lyocell fibers comprising one or more dye(s) of the present invention in physically bound form.

The above-mentioned substrates to be dyed can be present in various forms such as but not limited to yarn, woven fabric, loop-formingly knitted fabric or carpet. For instance in the form of sheetlike structures, such as paper and leather, in the form of films, such as nylon films, or in the form of a bulk mass, for example composed of polyamide and polyurethane, in particular in the form of fibers, for example cellulose fibers. The fibers are preferably textile fibers, for example in the form of woven fabrics or yarns or in the form of hanks or wound packages.

The dyes of the present invention and their salts and/or mixtures can be used as a single dyeing colorant in dyeing or printing processes or can be part of a di-, tri- or multi-component combination colorant in dyeing or in printing compositions. The di-, tri- or multi-component shade dyeings show similar fastness level as compared to dyeing performed with a single colorant component.

Dyes of the present invention and their salts or mixtures are highly compatible with other known and/or commercially available acid dyes and they can be used together with such dyes of related chromophores and similar technical performance to obtain specific hues. Similar technical performance includes: comparable build-up, comparable fastness properties and comparable exhaustion rates during dyeings.

The dyes according to the invention can be applied to the materials mentioned, especially the fiber materials mentioned, by the application techniques known for water-soluble dyes. This applies to both, dyeing and printing processes.

It applies in particular to the production of dyeings on fiber materials composed of wool or other natural polyamides or of synthetic polyamides and their mixtures with other fiber material. In general, the material to be dyed is introduced into the bath at a temperature of about 40 °C, agitated therein for some time, the dyebath is then adjusted to the desired weakly acidic, preferably weakly acetic acid, pH and the actual dyeing is carried out at a temperature between 60 and 98 °C. However, the dyeings can also be carried out at the boil or in a sealed dyeing apparatus at temperatures of up to 106 °C.

Since the water solubility of the dyes according to the invention is very good, they can also be used with advantage in customary continuous dyeing processes.

The dyes of the present invention can also be used in digital printing processes, in particular in digital textile printing. For this the dyes of the present invention need to be formulated in aqueous inks.

An Ink for digital textile printing, comprising a dye of the present invention is another aspect of the present invention.

The inks of the present invention comprise the dye of the present invention in amounts which preferably range from 0.1 to 50 % by weight, more preferably from 0.5 to 30 % by weight and most preferably from 1 to 15 % by weight, based on the total weight of the ink.

If desired the inks may contain further dyes used in digital printing in addition to the one or more dyes of the present invention.

For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1 to 50 % by weight and preferably 5 to 30 % by weight. Suitable organic solvents are for example alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 1 to 8 alkylene groups, for example: monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as for example: methylamine, ethylamine, triethylamine, diethylamine, dimethylamine, trimethylamine, dibutylamine, diethanolamine, triethanolamine, N-acetylethanolamine, N-formylethanolamine, ethylenediamine, urea derivatives, such as for example: urea, thiourea, N-methylurea, N,N'-epsilon dimethylurea, ethyleneurea, 1,1,3,3-tetramethylurea, amides, such as for example: dimethylformamide, dimethylacetamide, acetamide, ketones or keto alcohols, such as for example: acetone, diacetone alcohol, cyclic ethers, such as for example: tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethyl-imidazolidine, 2-(2-methoxyethoxy)ethanol, 2-(2-ethoxyethoxy)ethanol, 2-(2-butoxyethoxy)ethanol, 2-(2-propoxyethoxy)ethanol, pyridine, piperidine, butyrolactone, trimethylpropane, 1,2-dimethoxypropane, dioxane ethyl acetate, ethylenediaminetetraacetate ethyl pentyl ether, 1,2-dimethoxypropane and trimethylpropane.

The inks of the present invention may further include customary additives, for example viscosity moderators to set viscosities in the range from 1.5 to 40.0 mPas in a temperature range from 20 to 50 °C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example: all surfactants, preferably nonionic surfactants, butyldiglycol, 1,2-hexanediol.

The inks of the present invention may further comprise customary additives, for example substances to inhibit fungal and bacterial growth in amounts from 0.01 to 1 % by weight based on the total weight of the ink.

The inks may be prepared in a conventional manner by mixing the components in water.

The inks of the invention are particularly useful in inkjet printing processes for printing a wide variety of pretreated materials, such as silk, leather, wool, polyamide fibers and polyurethanes, and cellulosic fiber materials of any kind. Blend fabrics, for example blends of cotton, silk, wool with polyester fibers or polyamide fibers can similarly be printed.

In contrast to conventional textile printing, where the printing ink already contains all necessary chemicals, in digital or inkjet printing the auxiliaries have to be applied to the textile substrate in a separate pretreatment step.

The pretreatment of the textile substrate, for example cellulose and regenerated cellulose fibers and also silk and wool, is effected with an aqueous alkaline liquor prior to printing. In addition there is a need for thickeners to prevent flowing of the motives when the printing ink is applied, for example sodium alginates, modified polyacrylates or highly etherified galactomannans.

These pretreatment reagents are uniformly applied to the textile substrate in a defined amount using suitable applicators, for example using a 2- or 3-roll pad, contactless spraying technologies, by means of foam application or using appropriately adapted inkjet technologies, and subsequently dried.

The examples below serve to illustrate the invention. Parts and percentages are by weight unless noted otherwise. The relationship between parts by weight and parts by volume is that of the kilogram to the liter.

### Example 1

a) 63.22 parts of hydrochloric acid (30 %) were transferred into a 250 ml round bottom flask equipped with mechanical stirrer, temperature controller and condenser. 50 parts of 3-(diethylamino)acetanilide (A) were added slowly. The reaction mixture was heated to 80 °C gradually within 1 hour. The reaction mixture was kept at 80 °C until the reaction was completed. The reaction mixture was cooled down and diluted with deionized water. After the pH was adjusted to slightly alkaline with 90 parts of 30 % NaOH solution the reaction mixture was extracted with organic solvent. The organic layer was washed three times with 500 parts of deionised water and dried over anhydrous sodium sulfate. The organic layer was distilled to dryness. 35 parts of the product (B) as dark brown viscous oil were obtained. The analytic data are consistent with the assigned structure for product (B). 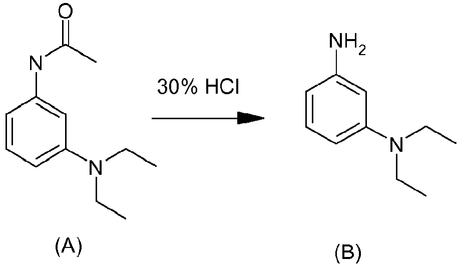
b) 109 parts of acetonitrile and 109 parts of deionised water were transferred to a 11 round bottom flask equipped with mechanical stirrer, temperature sensor and pH probe. The reaction mixture was cooled to 0 to 2 °C using an ice bath. 19.81 parts of cyanuric chloride (C) were then gradually added to the reaction mixture. 35.28 parts of 3-N,N-Diethylamino aniline (B) were dissolved in 50 parts of acetonitrile and added dropwise to the reaction mixture. The pH was maintained at values of 4 to 4.5 using sodium hydroxide solution and the temperature was maintained below 2 °C. After 3 hours, the temperature was raised to room temperature and the pH was maintained at 5 to 5.5 using sodium hydroxide solution. The reaction mixture was stirred until completion. The reaction mixture was diluted with deionised water and the resulting solid was filtered and washed neutral. Upon drying 47.26 parts of solid (H) were obtained. The analytic data are consistent with the assigned structure for product (H). 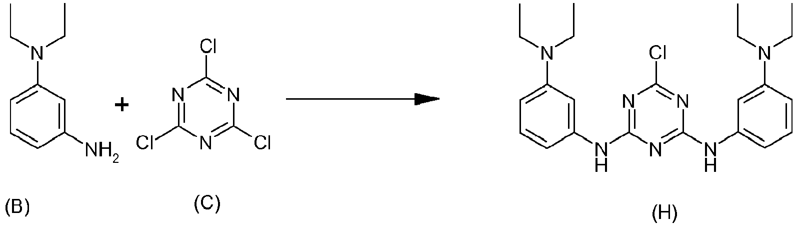
c) A reaction mixture comprising 10 parts of intermediate (H), 50 parts of acetonitrile, 2.26 parts of sodium bicarbonate dissolved in 3 parts of water and 2.71 parts of 2-mercapto ethanol (I) was heated to 80 °C until completion. After cooling to room temperature, the reaction mixture was diluted with deionised water. The pH of the reaction mixture was adjusted to 6.5 to 7 using hydrochloric acid solution. The slurry was stirred overnight and then filtered and washed neutral with deionised water. Upon drying 10.94 parts of the product (J) as a dark grey solid were obtained. The analytic data are consistent with the assigned structure for product (J). 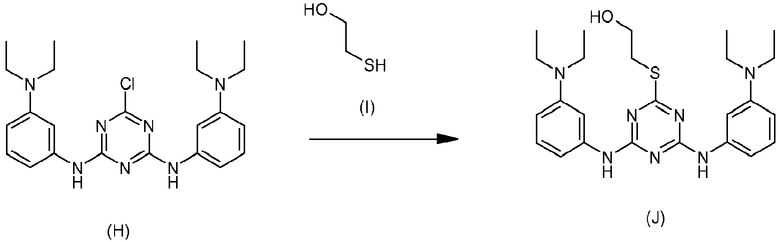
d) 8.16 parts of 3-amino-4-methyl phenylsulfanilic acid (K) were taken into 80 parts of deionised water. The pH of the mixture was adjusted to 6.3 when a clear solution was obtained. The solution was cooled down to 0 to 5 °C using an ice-salt mixture. 9.15 parts of 5N sodium nitrite solution were added dropwise into the reaction mixture, followed by fast addition of 15.07 parts of 37 % HCl to the reaction mixture. The reaction mixture was stirred for 2.5 hours at 0 to 5 °C and the resulting diazonium salt was used for the following coupling step. 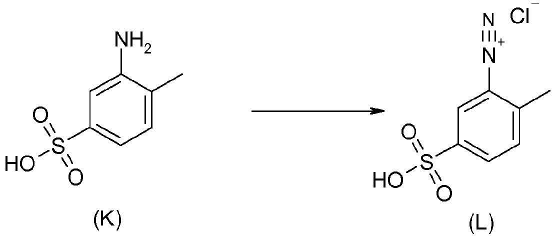
e) 10 parts of the coupler (J) and 0.36 parts of sulphamic acid were mixed with 50 ml of deionised water and 150 ml of acetonitrile. The pH of the resulting mixture was adjusted to pH 2.5 using 37 % hydrochloric acid. The reaction mixture was cooled down to 0 to 5 °C using ice-salt mixture. The diazonium salt (L) was added dropwise to the coupler solution while maintaining the pH between 2.5 and 5.5 using sodium hydroxide solution. The reaction mixture was stirred for 3 hrs and the reaction was completed. After distillation under reduced pressure the pH was adjusted to 5 using hydrochloric acid. Upon addition of sodium chloride, the resulting slurry was filtered and washed neutral. Upon drying 18.22 parts of the acid dye (1-1) were obtained. The analytical data is consistent with the assigned structure for the dye (1-1).

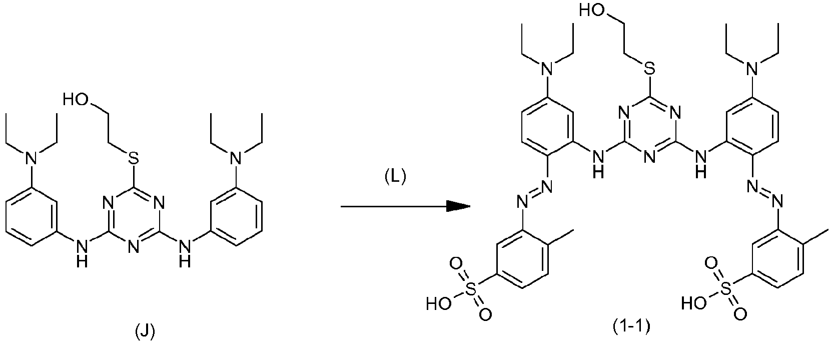

Through analogy, all the inventive dyes - and those in Table 1 in particular - can be obtained by processes similar to those described above in Example 1-1.

### Dyeing example 1

1 part of the dye, example 1-1 of this invention is dissolved in 2000 parts of water and 1 part of levelling assistant (based on condensation product of a higher aliphatic amine and ethylene oxide) and 6 parts of sodium acetate are added. The pH is then adjusted to 5 using acetic acid (80 %). The dyebath is heated to 50 °C for 10 minutes and then entered with 100 parts of a woven polyamide-6 fabric. The temperature is raised to 98 °C over the course of 50 minutes and then dyeing is carried out at this temperature for 60 minutes. This is followed by cooling to 60 °C and removal of the dyed material. The polyamide-6 fabric is washed with hot and cold water, soaped and then spun dried. The scarlet dyeings obtained have very good light and wet fastness and also good levelness in the fibre.

### Dyeing example 2

1 part of the dye, example 1-1 of this invention is dissolved in 2000 parts of water and 1 part of levelling assistant (based on condensation product of a higher aliphatic amine and ethylene oxide) and 6 parts of sodium acetate are added. The pH is then adjusted to 5.5 using acetic acid (80 %). The dyebath is heated to 50 °C for 10 minutes and then entered with 100 parts of a woven polyamide-6,6 fabric. The temperature is raised to 120 °C over the course of 50 minutes and then dyeing is carried out at this temperature for 60 minutes. This is followed by cooling to 60 °C and removal of the dyed material. The polyamide-6,6 fabric is washed with hot and cold water, soaped and then spun dried. The scarlet dyeings obtained have very good light and wet fastness and also good levelness in the fibre.

### Dyeing example 3

100 parts of polyamide-6 material are padded with a 1000 parts 50 °C liquor solution that consists of 40 parts of the dye, example 1-1, 100 parts of urea, 20 parts of a non ionic solubilizer based on butyldiglycol, 20 parts of acetic acid to adjust the pH to 4.0, 10 parts of levelling assistant (based on ethoxylated aminopropyl fatty acid amide) and 810 parts of water. The material is rolled up and placed into a steaming chamber at 85 to 98 °C for 3 to 6 hours. After fixation, the fabric is washed with hot and cold water, soaped and then spun dried. The scarlet dyeings obtained have very good light and wet fastness and also good levelness in the fibre.

### Dyeing example 4

1 part of the dye, example 1-1 of this invention is dissolved in 2000 parts of water and 5 parts of sodium sulphate, and 1 part of levelling assistant (based on condensation product of a higher aliphatic amine and ethylene oxide) and 5 parts of sodium acetate are added. The pH is then adjusted to 4.5 using acetic acid (80 %). The dyebath is heated to 50 °C for 10 minutes and then entered with 100 parts of a woven wool fabric. The temperature is raised to 100 °C over the course of 50 minutes and then dyeing is carried out at this temperature for 60 minutes. This is followed by cooling to 90 °C and removal of the dyed material. The wool fabric is washed with hot and cold water, soaped and then spun and dried. The scarlet dyeings obtained have very good light and wet fastness and also good levelness in the fibre.

### Dyeing example 5

1 part of the dye, example 1-1 of this invention is dissolved in 1000 parts of water and 7.5 parts of sodium sulphate, and 1 part of a wetting agent (anionic) are added. 100 parts of bleached cotton knitted fabric are added to this solution. The dye bath is then heated up to 98 °C with a gradient of 2 °C/min then dyeing is carried out at this temperature for 60 minutes. This is followed by cooling down to 80 °C. At 80 °C the dyeing is continued for another 20 minutes. The dyed material is then removed and is washed with hot and cold water, soaped and then spun and dried. The scarlet dyeings obtained have very good light and wet fastness and also good levelness in the fibre.

### Dyeing example 6

3 parts of the dye, example 1-1 of this invention dissolved in 82 parts of deionized water are added into the dyebath with 15 parts of diethylene glycol at 60 °C. On cooling, a scarlet printing ink is obtained. The scarlet printing ink can be used for ink jet printing on paper, polyamide or wool textiles.

### Dyeing example 7

4 parts of chemically bleached (pine wood) sulphite pulp is mixed up with 100 parts of 55 °C water. 1 part of the dye 1a¹⁶¹ of this invention is dissolved in 100 parts of hot water. 80 parts of this solution is given to the mixed-up pulp and mixed for 2 minutes. After that the mixture is sized with resin size in a conventional manner and mixed for another 2 minutes. 55 parts of this solution are then diluted with 2000 parts of cold water and the paper is produced out of this solution. The orange paper produced from the mixture has good wet fastnesses.

## Claims

1. Dye of formula (1) 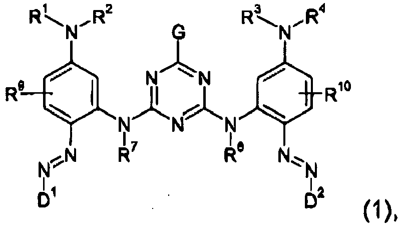 wherein independent from each other G is a rest of formula (i) or (ii) 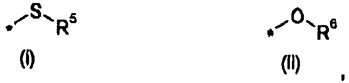
R¹, R², R³ and R⁴ is
hydrogen,
(C₁-C₁₂)-alkyl,
(C₂-C₆)-alkenyl,
(C₃-C₆)-cycloalkyl or
aryl-(C₁-C₁₂)-alkyl,
with the alkyl chain being linear or branched, and optionally being interrupted by one or more heteroatoms and/or substituted by one or more substituents selected from the group consisting of hydroxy, carboxy, SO₃M, halogen, cyano, nitro, acyl, trifluoromethyl, acyloxy, aryloyloxy and carbamoyl,
R⁵ and R⁶ is
hydrogen,
(C₁-C₁₂)-alkyl,
substituted (C₁-C₁₂)-alkyl with the substituents being selected from the group consisting of hydroxy, carboxy, SO₃M, halogen, cyano, nitro, acyl, trifluoromethyl, acyloxy, aryloyloxy and carbamoyl,
(C₃-C₆)-cycloalkyl,
a group of formula (iii) 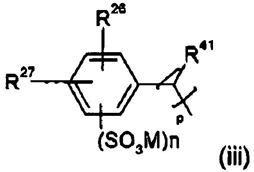 wherein
R²⁶ and R²⁷ is
hydrogen,
(C₁-C₁₂)-alkyl,
(C₁-C₁₂)-alkyl substituted by hydroxy, (C₁-C₁₂)-alkoxy, trifluoromethyl, cyano, nitro, halogen, -NHCO(C₁-C₆)-alkyl or -NHSO₂(C₁-C₆)-alkyl, CONH₂ or SO₂NH₂,
R⁴¹ is hydrogen or (C₁-C₆)-alkyl,
n is 0,1 or 2,
p is 0 or 1 to 6,
or (C₁-C₁₂)-alkyl, whereby the alkyl chain can be interrupted by one or more heteroatoms,
R⁷ and R⁸ is
hydrogen,
(C₁-C₆)-alkyl or
phenyl,
R⁹ and R¹⁰ is hydrogen, (C₁-C₆)-alkyl, (C₁-C₆)-alkoxy, trifluoromethyl, hydroxy, cyano, nitro, halogen, -NHCHO, -NHCO(C₁-C₆)-alkyl, -NHCOaryl, -NHSO₂(C₁-C₆)-alkyl or -NHSO₂aryl,
D¹ and D² is a rest of a phenyl-, naphthyl- or heterocyclic-derivative, which comprises at least one group -SO₃M, wherein M is hydrogen, an alkali metal, ammonium, substituted or unsubstituted tetra(C₁-C₁₂)-alkyl ammonium.

2. Dye according to claim 1, wherein independent from each other R¹ to R⁴ are identical and are hydrogen, (C₁-C₄)-alkyl or (C₁-C₆)-alkyl substituted by hydroxyl, cyano or alkenyl,
R⁵ and R⁶ are identical and are
hydrogen,
(C₁-C₆)-alkyl,
(C₁-C₆)-alkyl substituted by hydroxy,
(C₃-C₆)-cycloalkyl or (C₁-C₆)-alkyl substituted by -SO₃M or a group of formula (iii) as defined in claim 1, wherein each R²⁶ and R²⁷ independent from each other is
hydrogen,
(C₁-C₆)-alkyl,
(C₁-C₆)-alkyl substituted by hydroxy,
(C₁-C₆)-alkoxy, trifluoromethyl, hydroxy, cyano, halogen,
n is 0 or 1,
p is 0 or 1 to 4,
R⁷ and R⁸ are identical and are hydrogen, methyl or ethyl and
R⁹ and R¹⁰ are identical and are hydrogen, methyl, ethyl, halogen, trifluoromethyl, methoxy or ethoxy.

3. Dye according to claim 1 or 2, having formula (1a), (1a¹), (1a²) or (1a³) 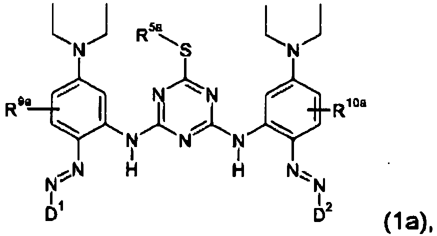 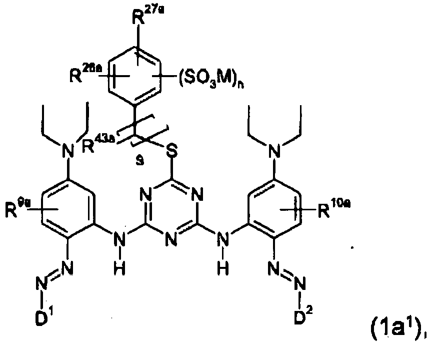 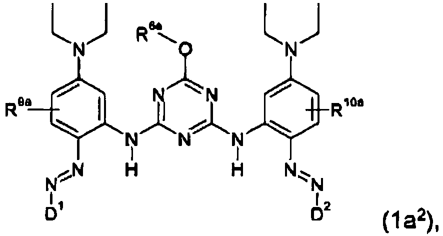 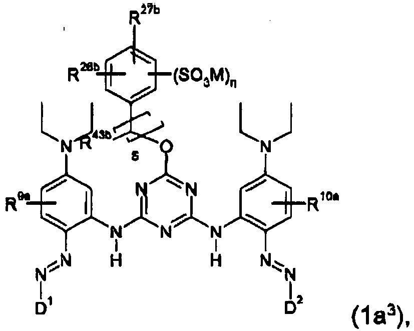 wherein
R^{5a} and R^{6a} are hydrogen, (C₁-C₆)-alkyl, (C₁-C₆)-alkyl substituted by hydroxy, (C₃-C₆)-cycloalkyl or (C₁-C₆)-alkyl substituted by SO₃M,
R^{9a} and R^{10a} are identical and are hydrogen or methoxy,
each of R^{26a}, R^{27a}, R^{26b} and R^{27b} is hydrogen, (C₁-C₄)-alkyl, (C₁-C₄)-alkoxy, trifluoromethyl, cyano, nitro or halogen,
R^{43a} and R^{43b} is hydrogen or (C₁ - C₄) alkyl,
s is 0 or 1 to 6 and
D¹ and D² are as defined in claim 1.

4. Dye according to any one of claims 1 to 3, in which independent from each other
D¹ and D² is selected from the group consisting of groups of formula (I) to (XIV): 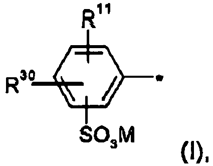 wherein
R" and R³⁰ independent of each other is hydrogen, (C₁-C₄)-alkyl, (C₁-C₄)-alkoxy, trifluoromethyl, cyano, nitro, NHC(O)R³¹, CONH₂, S(O)₂R³² or halogen, R³¹ and R³² is hydrogen, (C₁-C₄)-alkyl or (C₁-C₄)-alkyl substituted by hydroxyl,
M is hydrogen, an alkali metal or ammonium, 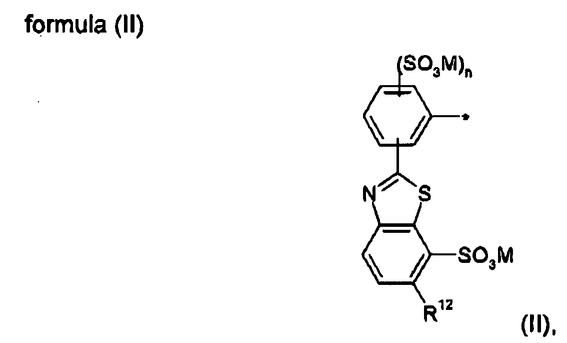
wherein
R¹² is hydrogen or (C₁-C₄)-alkyl,
n is 0 or 1 and
M is defined as given above, 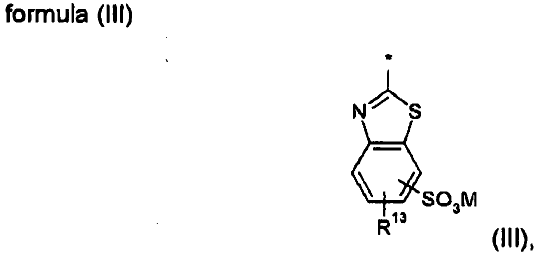
wherein
R¹³ is hydrogen, (C₁-C₄)-alkyl, (C₁-C₄)-alkoxy, cyano, nitro, CONH₂ or halogen and
M is defined as given above, 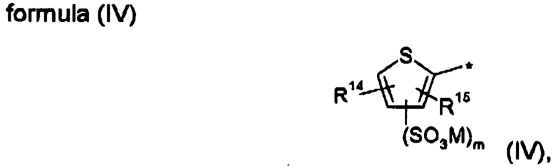
wherein
R¹⁴ is hydrogen, cyano, CONH₂, C(O)R³³ or COOR³⁴,
R³³ is hydrogen or (C₁-C₄)-alkyl,
R³⁴ is hydrogen or (C₁-C₄)-alkyl,
R¹⁵ is hydrogen, -CHO or a group of formula (a) or (c) 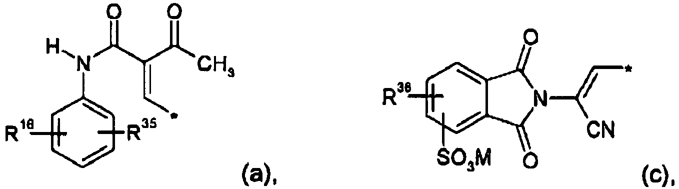
wherein
R¹⁶, R³⁵ and R³⁶ independent of each other is hydrogen, halogen, (C₁-C₄)-alkyl, (C₁-C₄)-alkoxy, SO₃M or -CONH₂,
m is 0 or 1 and
M is defined as given above, 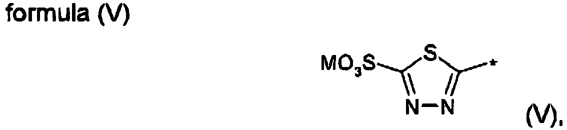
wherein
M is defined as given above, formula (VI) 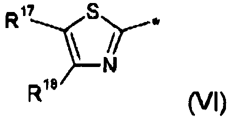 wherein
R¹⁷ is -SO₃M, -CHO, -CH=C(CN)₂, a group of formula (a) as defined above or a group of formula (b) or (d) 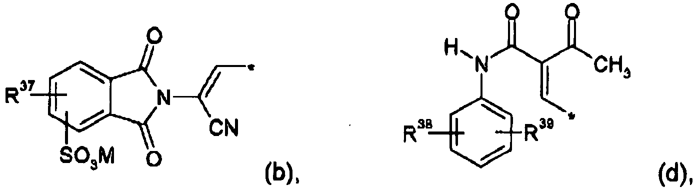 wherein
R³⁷, R³⁸ and R³⁹ independent of each other is hydrogen, halogen, (C₁-C₄)-alkyl, (C₁-C₄)-alkoxy, SO₃M or -CONH₂.
R¹⁸ is -SO₃M, (C₁-C₄)-alkyl, sulfophenyl (C₁-C₄)-alkylamino, (C₁-C₁₂)-alkylamino, (C₅-C₆)-cycloalkylamino, morpholino or piperidino and
M is defined as given above, 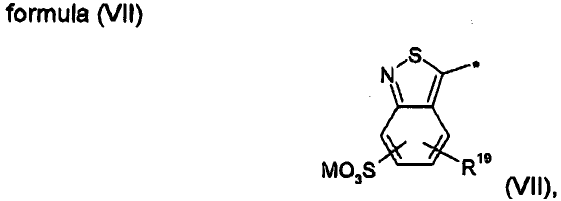
wherein
R¹⁹ is hydrogen, (C₁-C₄)-alkyl, (C₁-C₄)-alkoxy, nitro, NHC(O)R⁴⁰, NHSO₂R⁴⁷ or
halogen,
R⁴⁰ is hydrogen or (C₁-C₆) alkyl,
R⁴⁷ is (C₁-C₆)-alkyl, 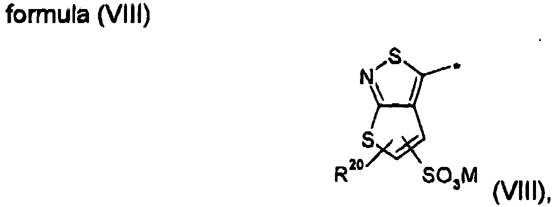
wherein
R²⁰ is hydrogen, (C₁-C₄)-alkyl, (C₁-C₄)-alkoxy, cyano, nitro, CONH₂ or halogen, 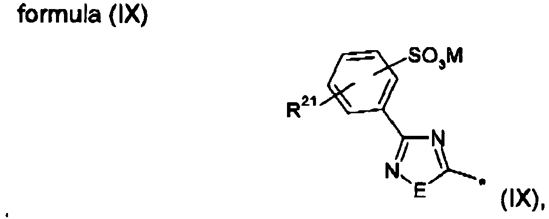 wherein
R²¹ is hydrogen, (C₁-C₄)-alkyl, (C₁-C₄)-alkoxy, halogen, cyano, nitro or CONH₂ and
E is sulphur or oxygen, 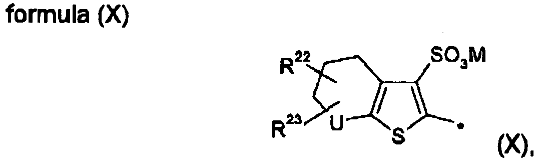
wherein
R²² and R²³ independent of each other is hydrogen, (C₁-C₄)-alkyl, (C₁-C₄)-alkoxy, halogen, cyano or CONH₂ and
U is methylene or C=O, 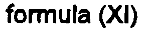 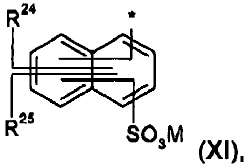
wherein
R²⁴ and R²⁵ independent of each other is hydrogen, (C₁-C₄)-alkyl, (C₁-C₄)-alkoxy, halogen, cyano, nitro, trifluoromethyl or CONH₂, formula (XII) 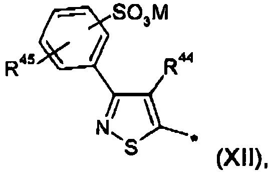 wherein
R⁴⁴ and R⁴⁵ independent of each other is hydrogen, (C₁-C₄)-alkyl, (C₁-C₄)-alkoxy, halogen, cyano, nitro, trifluoromethyl, CONH₂ or SO₃M, formula (XIII) 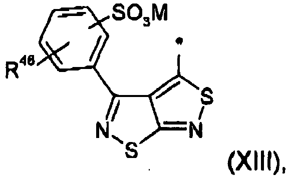 wherein
R⁴⁶ is hydrogen, (C₁-C₄)-alkyl, (C₁-C₄)-alkoxy, halogen, cyano, nitro, trifluoromethyl, CONH₂ or SO₃M
and formula (XIV) 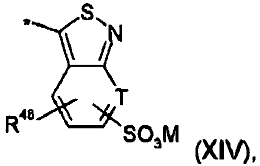 wherein
R⁴⁸ is hydrogen, (C₁-C₄)-alkyl, (C₁-C₄)-alkoxy, nitro, NHC(O)R⁴⁹, NHSO₂R⁵⁰ or halogen,
R⁴⁹ is hydrogen or (C₁-C₆)-alkyl,
R⁵⁰ is (C₁-C₆)-alkyl;
and
M is defined as given above.

5. Dye according to claim 4, wherein D¹ and D² are identical.

6. Chemical composition comprising one or more dye(s) according to any one of claims 1 to 5.

7. Chemical composition consisting of two or more dyes according to any one of claims 1 to 5.

8. Aqueous solution for dying comprising one or more chemical compounds according to any one of claims 1 to 5.

9. Process for the production of a dye according to claim 1, comprising
a) diazotization of compounds of formulae (2) and (3)
D¹-NH₂ (2) D²-NH₂ (3),
wherein D¹ and D² are defined as given in claim 1,
b) reacting the products obtained in step a) with a compound of formula (4) 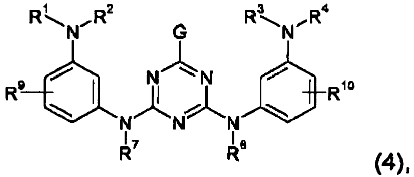 wherein R¹ to R¹⁰ and G are defined as given in claim 1.

10. Process for dyeing or printing carboxamido- and/or hydroxyl-containing material, comprising contacting the carboxamido- and/or hydroxyl-containing material with a dye according to any one of claims 1 to 5.

11. Ink for digital textile printing, comprising a dye according to any one of claims 1 to 5.

12. Use of a dye according to any one of claims 1 to 5, a chemical composition according to claim 6 or 7 or of an aqueous solution according to claim 8 for dying fibers, as well as blends of such fibres selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers.

13. Fiber and blends containing such fiber selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers, and Lyocell fibers comprising one or more dye(s) according to any one of claims 1 to 5 in physically bound form.

## Patentansprüche

1. Farbstoff der Formel (1) 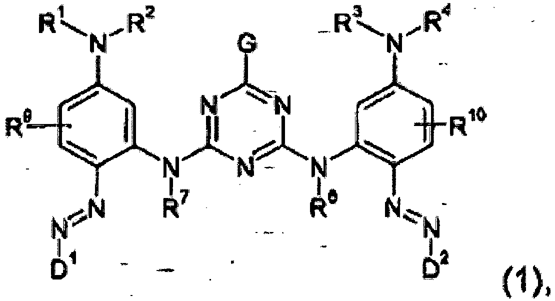 worin jeweils unabhängig voneinander
G für einen Rest der Formel (i) oder (ii) 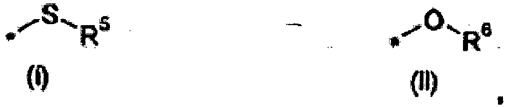
R¹, R², R³ und R⁴ für
Wasserstoff,
(C₁-C₁₂) -Alkyl,
(C₂-C₆) -Alkenyl,
(C₃-C₈)-Cycloalkyl oder
Aryl- (C₁-C₁₂) -alkyl,
wobei die Alkylkette linear oder verzweigt und gegebenenfalls durch mindestens ein Heteroatom unterbrochen und/oder ein- oder mehrfach, gleich oder verschieden durch Hydroxy, Carboxy, SO₃M, Halogen, Cyano, Nitro, Acyl, Trifluormethyl, Acyloxy, Aryloyloxy und/oder Carbamoyl substituiert ist,
R⁵ und R⁶ für
Wasserstoff,
(C₁-C₁₂) -Alkyl,
substituiertes (C₁-C₁₂) -Alkyl, wobei die Substituenten ausgewählt sind aus der Gruppe bestehend aus Hydroxy, Carboxy, SO₃M, Halogen, Cyano, Nitro, Acyl, Trifluormethyl, Acyloxy, Aryloyloxy und Carbamoyl,
(C₃-C₈)-Cycloalkyl,
eine Gruppe der Formel (iii) 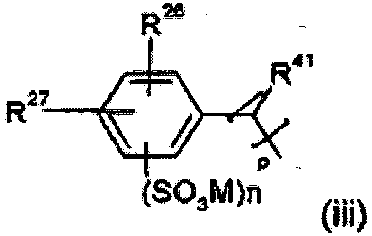 worin
R²⁶ und R²⁷ für
Wasserstoff,
(C₁-C₁₂) -Alkyl,
durch Hydroxy, (C₁-C₁₂)-Alkoxy, Trifluormethyl, Cyano, Nitro, Halogen, -NHCO(C₁-C₆)-Alkyl oder -NHSO₂ (C₁-C₆)-Alkyl substituiertes (C₁-C₁₂)-Alkyl,
CONH₂ oder SO₂NH₂,
R⁴¹ für Wasserstoff oder (C₁-C₆) -Alkyl,
n für 0, 1 oder 2,
p für 0 oder 1 bis 6,
oder (C₁-C₁₂)-Alkyl, wobei die Alkylkette durch mindestens ein Heteroatom unterbrochen sein kann,
R⁷ und R⁸ für
Wasserstoff,
(C₁-C₆) -Alkyl oder
Phenyl,
R⁹ und R¹⁰ für Wasserstoff, (C₁-C₆)-Alkyl, (C₁-C₆) - Alkoxy, Trifluormethyl, Hydroxy, Cyano, Nitro, Halogen, -NHCHO, -NHCO(C₁-C₆)-Alkyl, -NHCO-Aryl, -NHSO₂(C₁-C₆)-Alkyl oder -NHSO₂-Aryl,
D¹ und D² für einen Rest eines Phenyl-, Naphthyl- oder Heterocyclusderivats, das mindestens eine Gruppe -SO₃M enthält, wobei M für Wasserstoff, ein Alkalimetall, Ammonium, substituiertes oder unsubstituiertes Tetra- (C₁-C₁₂) -alkylammonium steht, stehen.

2. Farbstoff nach Anspruch 1, bei dem jeweils unabhängig voneinander
R¹ bis R⁴ gleich sind und für Wasserstoff, (C₁-C₄) - Alkyl oder durch Hydroxyl, Cyano oder Alkenyl substituiertes (C₁-C₆)-Alkyl,
R⁵ und R⁶ gleich sind und für
Wasserstoff,
(C₁-C₆)-Alkyl,
durch Hydroxy substituiertes (C₁-C₆)-Alkyl, (C₃-C₈) -Cycloalkyl oder (C₁-C₆) -Alkyl, substituiert durch -SO₃M oder eine Gruppe der Formel (iii) gemäß Anspruch 1, wobei R²⁶ und R²⁷ jeweils unabhängig voneinander für
Wasserstoff,
(C₁-C₆)-Alkyl,
durch Hydroxy substituiertes (C₁-C₆)-Alkyl, (C₁-C₆)-Alkoxy, Trifluormethyl, Hydroxy, Cyano, Halogen,
n für 0 oder 1,
p für 0 oder 1 bis 4,
R⁷ und R⁸ gleich sind und für Wasserstoff, Methyl oder Ethyl und
R⁹ und R¹⁰ gleich sind und für Wasserstoff, Methyl, Ethyl, Halogen, Trifluormethyl, Methoxy oder Ethoxy stehen.

3. Farbstoff nach Anspruch 1 oder 2, entsprechend der Formel (1a), (1a¹), (1a²) oder (1a³) 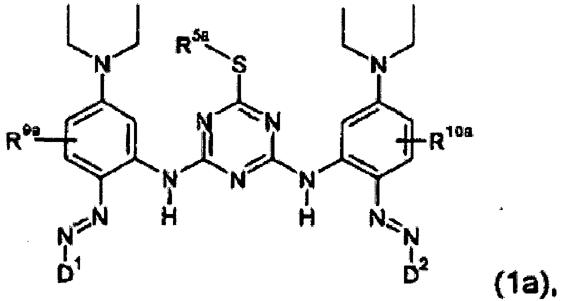 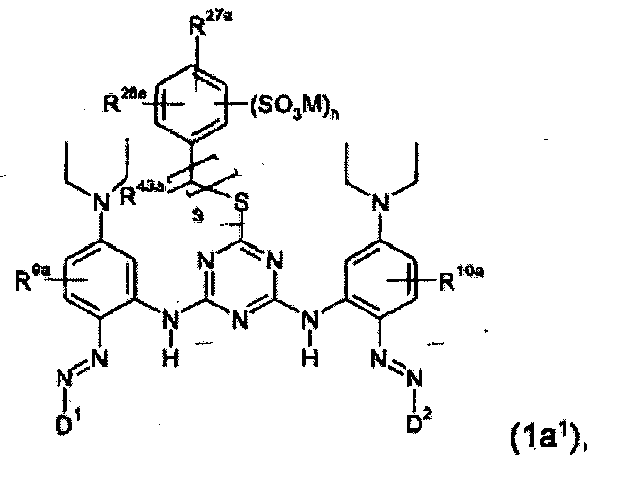 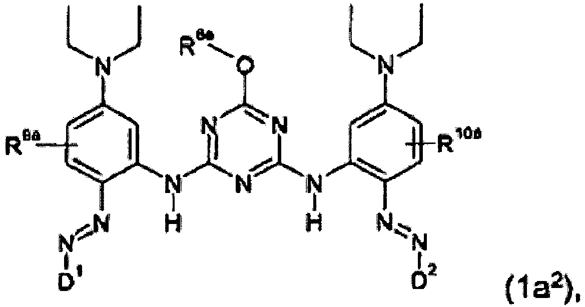 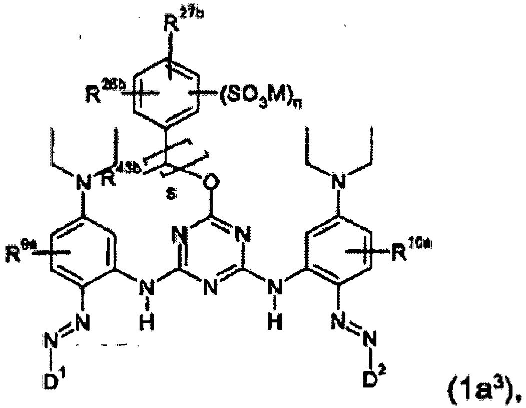 worin
R^{5a} und R^{6a} für Wasserstoff, (C₁-C₆-Alkyl, (C₁-C₆) - Alkyl, substituiert durch Hydroxy, (C₃-C₈)-Cycloalkyl oder (C₁-C₆)-Alkyl, substituiert durch SO₃M,
R^{9a} und R^{10a} gleich sind und für Wasserstoff oder Methoxy,
R^{26a}, R^{27a}, R^{26b} und R^{27b} jeweils für Wasserstoff, (C₁-C₄)-Alkyl, (C₁-C₄)-Alkoxy, Trifluormethyl, Cyano, Nitro oder Halogen,
R^{43a} und R^{43b} für Wasserstoff oder (C₁-C₄)-Alkyl,
s für 0 oder 1 bis 6 stehen sowie
D¹ und D² die in Anspruch 1 genannte Bedeutung haben.

4. Farbstoff nach einem der Ansprüche 1 bis 3, bei dem jeweils unabhängig voneinander
D¹ und D² ausgewählt sind aus der Gruppe bestehend aus Gruppen der Formeln (I) bis (XIV): 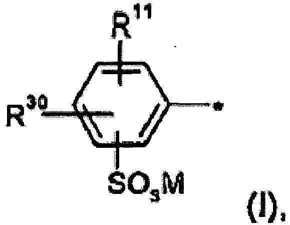 worin
R¹¹ und R³⁰ jeweils unabhängig voneinander für Wasserstoff, (C₁-C₄)-Alkyl, (C₁-C₄)-Alkoxy, Trifluormethyl, Cyano, Nitro, NHC(O)R³¹, CONH₂, S(O)₂R³² oder Halogen,
R³¹ und R³² für Wasserstoff, (C₁-C₄) -Alkyl oder (C₁-C₄)-Alkyl, substituiert durch Hydroxyl,
M für Wasserstoff, ein Alkalimetall oder Ammonium, 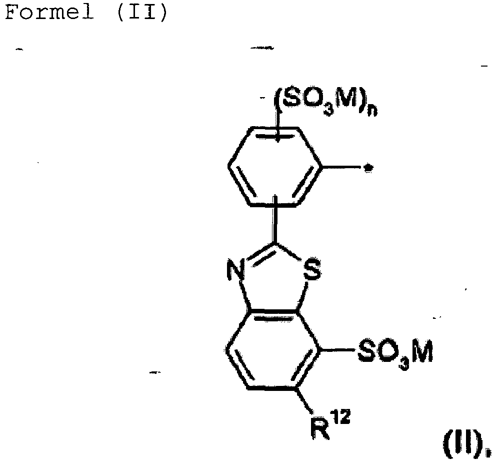
worin
R¹² für Wasserstoff oder (C₁-C₄)-Alkyl,
n für 0 oder 1 stehen und
M die oben genannte Bedeutung hat,
Formel (III) 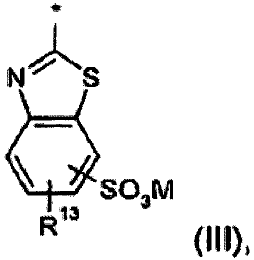 worin
R¹³ für Wasserstoff, (C₁-C₄) -Alkyl, (C₁-C₄) -Alkoxy, Cyano, Nitro, CONH₂ oder Halogen steht
und
M die oben genannte Bedeutung hat, 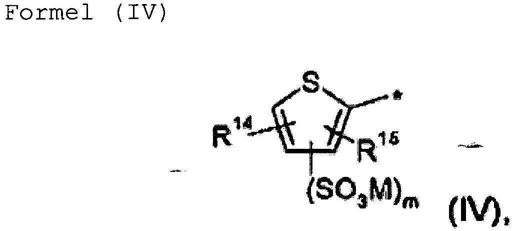
worin
R¹⁴ für Wasserstoff, Cyano, CONH₂, C(O)R³³ oder COOR³⁴,
R³³ für Wasserstoff oder (C₁-C₄)-Alkyl,
R³⁴ für Wasserstoff oder (C₁-C₄)-Alkyl,
R¹⁵ für Wasserstoff -CHO oder eine Gruppe der Formel (a) oder (c) 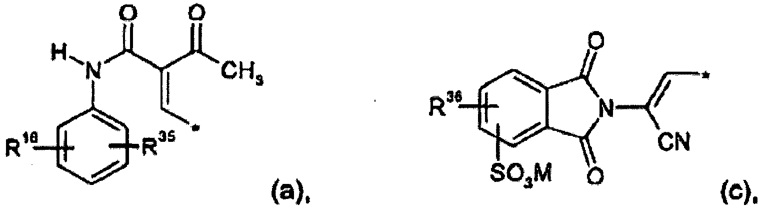
worin
R¹⁶, R³⁵ und R³⁶ jeweils unabhängig voneinander für Wasserstoff, Halogen, (C₁-C₄)-Alkyl, (C₁-C₄)-Alkoxy, SO₃M oder -CONH₂,
m für 0 oder 1 stehen und
M die oben genannte Bedeutung hat, 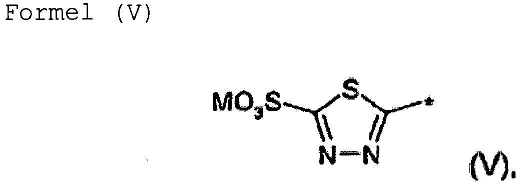
worin
M die oben genannte Bedeutung hat, 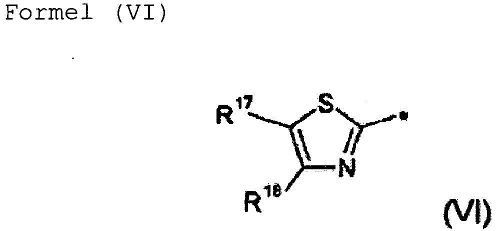 worin
R¹⁷ für -SO₃M, -CHO, -CH=C (CN)₂, eine Gruppe der Formel (a) gemäß obiger Bedeutungsbestimmung oder eine Gruppe der Formel (b) oder (d) 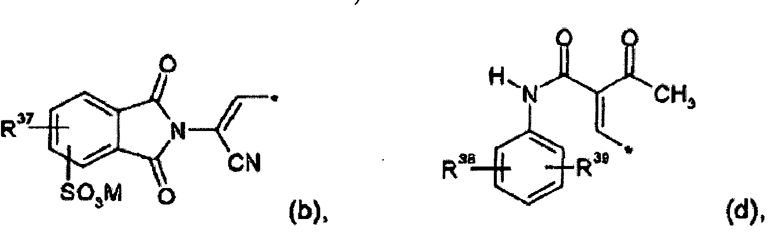 worin
R³⁷, R³⁸ und R³⁹ jeweils unabhängig voneinander für Wasserstoff, Halogen, (C₁-C₄)-Alkyl, (C₁-C₄)-Alkoxy, SO₃M oder -CONH₂,
R¹⁸ für -SO₃M, (C₁-C₄)-Alkyl, Sulfophenyl, (C₁-C₄)-Alkylamino, (C₁-C₁₂)-Alkylamino, (C₅-C₆)-Cycloalkylamino, Morpholino oder Piperidino stehen und
M die oben genannte Bedeutung hat, 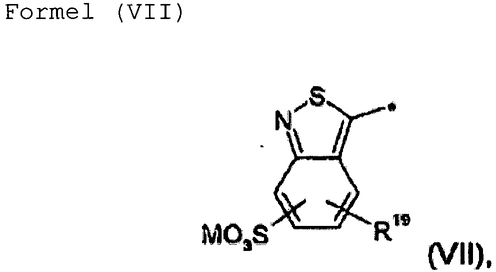
worin
R¹⁹ für Wasserstoff, (C₁-C₄)-Alkyl, (C₁-C₄)-Alkoxy, Nitro, NHC(O)R⁴⁰, NHSO₂R⁴⁷ oder Halogen,
R⁴⁰ für Wasserstoff oder (C₁-C₆)-Alkyl,
R⁴⁷ für (C₁-C₆)-Alkyl stehen, 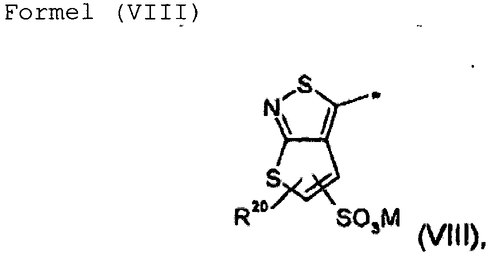
worin
R²⁰ für Wasserstoff, (C₁-C₄)-Alkyl, (C₁-C₄)-Alkoxy, Cyano, Nitro, CONH₂ oder Halogen steht, 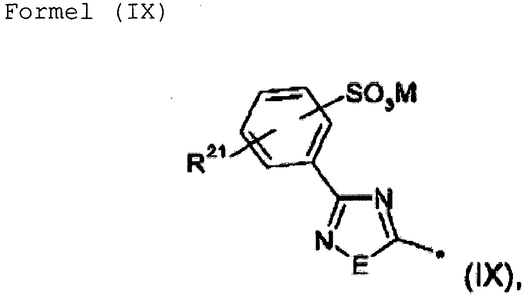 worin
R²¹ für Wasserstoff, (C₁-C₄)-Alkyl, (C₁-C₄)-Alkoxy, Halogen, Cyano, Nitro oder CONH₂
und
E für Schwefel oder Sauerstoff steht, 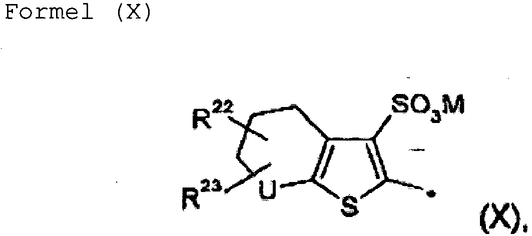
worin
R²² und R²³ jeweils unabhängig voneinander für Wasserstoff, (C₁-C₄)-Alkyl, (C₁-C₄)-Alkoxy, Halogen, Cyano oder CONH₂ und
U für Methylen oder C=O stehen, 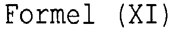 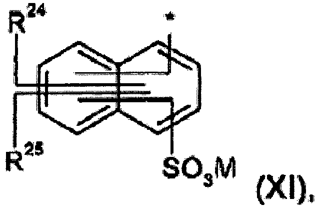
worin
R²⁴ und R²⁵ jeweils unabhängig voneinander für Wasserstoff, (C₁-C₄)-Alkyl, (C₁-C₄)-Alkoxy, Halogen, Cyano, Nitro, Trifluormethyl oder CONH₂ stehen, 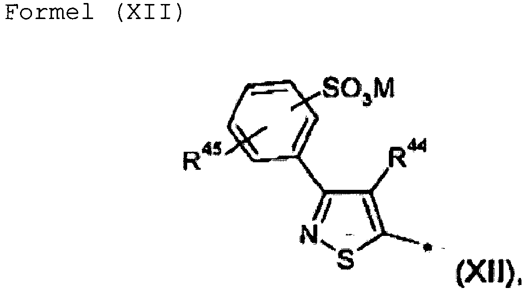 worin
R⁴⁴ und R⁴⁵ jeweils unabhängig voneinander für Wasserstoff, (C₁-C₄)-Alkyl, (C₁-C₄)-Alkoxy, Halogen, Cyano, Nitro, Trifluormethyl, CONH₂ oder SO₃M stehen, 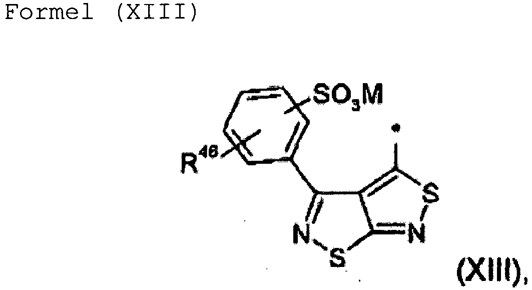 worin
R⁴⁶ für Wasserstoff, (C₁-C₄)-Alkyl, (C₁-C₄)-Alkoxy, Halogen, Cyano, Nitro, Trifluormethyl CONH₂ oder SO₃M steht,
und 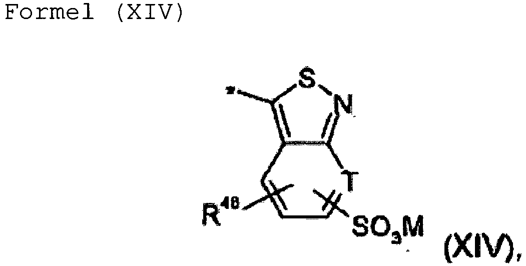 worin
R⁴⁸ für Wasserstoff, (C₁-C₄)-Alkyl, (C₁-C₄)-Alkoxy, Nitro, NHC(O)R⁴⁹, NHSO₂R⁵⁰ oder Halogen,
R⁴⁹ für Wasserstoff oder (C₁-C₆) -Alkyl,
R⁵⁰ für (C₁-C₆)-Alkyl stehen sowie
M die oben genannte Bedeutung hat.

5. Farbstoff nach Anspruch 4, bei dem D¹ und D² gleich sind.

6. Chemische Zusammensetzung, enthaltend einen oder mehrere der Farbstoffe gemäß einem der Ansprüche 1 bis 5.

7. Chemische Zusammensetzung, bestehend aus zwei oder mehr Farbstoffen gemäß einem der Ansprüche 1 bis 5.

8. Wässrige Lösung zum Färben, enthaltend eine oder mehrere der chemischen Verbindungen gemäß einem der Ansprüche 1 bis 5.

9. Verfahren zur Herstellung eines Farbstoffs gemäß Anspruch 1, umfassend
a) Diazotierung von Verbindungen der Formeln (2) und (3)
D¹-NH₂ (2) D²-NH₂ (3),
worin D¹ und D² die in Anspruch 1 genannte Bedeutung haben,
b) Umsetzung der in Schritt a) erhaltenen Produkte mit einer Verbindung der Formel (4) 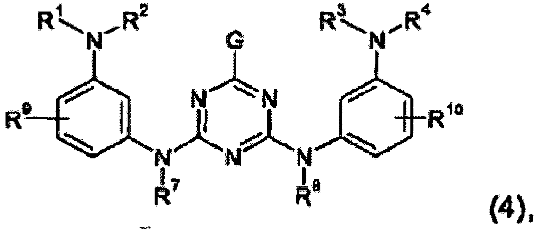 worin R¹ bis R¹⁰ und G die in Anspruch 1 genannte Bedeutung haben.

10. Verfahren zum Färben oder Bedrucken eines carbonamid- und/oder hydroxygruppenhaltigen Materials, bei dem man das carbonamid- und/oder hydroxygruppenhaltige Material mit einem Farbstoff gemäß einem der Ansprüche 1 bis 5 in Berührung bringt.

11. Tinte für den digitalen Textildruck, enthaltend einen Farbstoff gemäß einem der Ansprüche 1 bis 5.

12. Verwendung eines Farbstoffs gemäß einem der Ansprüche 1 bis 5, einer chemischen Zusammensetzung gemäß Anspruch 6 oder 7 oder einer wässrigen Lösung gemäß Anspruch 8 zum Färben von Fasern sowie deren Fasermischungen ausgewählt aus der Gruppe bestehend aus Synthesefaserstoffen, Polyamidmaterialien, Polyamid-6, Polyamid-6.6 und Aramidfasern, Pflanzenfasern, Samenfasern, Baumwolle, Biobaumwolle, Kapok, Kokosfasern aus Kokosnussschalen, Bastfasern, Flachs, Hanf, Jute, Kenaf, Ramie, Rattan, Blattfasern, Sisal, Henequen, Banane, Stängelfasern, Bambus, Fasern von Tieren, Wolle, Biowolle, Seide, Kaschmirwolle, Alpakafaser, Mohair, Angorafaser sowie Pelz- und Ledermaterialien; Kunst-, Regenerat- und Recyclatfasern, cellulosehaltigen Fasern; Papierfasern, Celluloseregeneratfasern, Viskose- bzw. Reyonfasern, Acetat- und Triacetatfasern und Lyocellfasern.

13. Faser und solche enthaltende Fasermischungen ausgewählt aus der Gruppe bestehend aus Synthesefaserstoffen, Polyamidmaterialien, Polyamid-6, Polyamid-6.6 und Aramidfasern, Pflanzenfasern, Samenfasern, Baumwolle, Biobaumwolle, Kapok, Kokosfasern aus Kokosnussschalen, Bastfasern, Flachs, Hanf, Jute, Kenaf, -Ramie, Rattan, Blattfasern, Sisal, Henequen, Banane, Stängelfasern, Bambus, Fasern von Tieren, Wolle, Biowolle, Seide, Kaschmirwolle, Alpakafaser, Mohair, Angorafaser sowie Pelz- und Ledermaterialien; Kunst-, Regenerat- und Recyclatfasern, cellulosehaltigen Fasern; Papierfasern, Celluloseregeneratfasern, Viskose- bzw. Reyonfasern, Acetat- und Triacetatfasern und Lyocellfasern, jeweils einen oder mehrere der Farbstoffe gemäß einem der Ansprüche 1 bis 5 physikalisch gebunden enthaltend.

## Revendications

1. Colorant de formule (1) 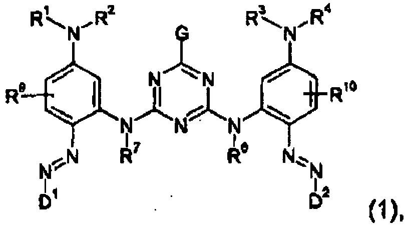 dans laquelle, indépendamment les uns des autres, G est un résidu de formule (i) ou (ii) 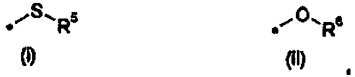
R¹, R², R³ et R⁴ est
hydrogène,
alkyle en C₁-C₁₂,
alcényle en C₂-C₆,
cycloalkyle en C₃-C₈ ou
aryl-(alkyle en C₁-C₁₂),
la chaîne alkyle étant linéaire ou ramifiée, et étant facultativement interrompue par un ou plusieurs hétéroatomes et/ou- substituée par un ou plusieurs substituants choisis dans le groupe constitué d'hydroxy, carboxy, SO₃M, halogène, cyano, nitro, acyle, trifluorométhyle, acyloxy, aryloyloxy et carbamoyle,
R⁵ et R⁶ est
hydrogène,
alkyle en C₁-C₁₂,
alkyle en C₁-C₁₂ substitué par les substituants étant choisi dans le groupe constitué d'hydroxy, carboxy, SO₃M, halogène, cyano, nitro, acyle, trifluorométhyle, acyloxy, aryloyloxy et carbamoyle,
cycloalkyle en C₃-C₈,
un groupe de formule (iii) 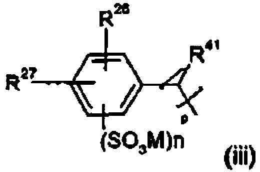 dans lequel
R²⁶ et R²⁷ est
hydrogène,
alkyle en C₁-C₁₂,
alkyle en C₁-C₁₂ substitué par hydroxy, alcoxy en C₁-C₁₂, trifluorométhyle, cyano, nitro, halogène, -NHCO(alkyle en C₁-C₆) ou -NHSO₂ (alkyle en C₁-C₆), CONH₂ ou SO₂NH₂,
R⁴¹ est hydrogène ou alkyle en C₁-C₆,
n est 0, 1 ou 2,
p est 0 ou 1 à 6,
ou alkyle en C₁-C₁₂, dans lequel la chaîne alkyle peut être interrompue par un ou plusieurs hétéroatomes,
R⁷ et R⁸ est
hydrogène,
alkyle en C₁-C₆ ou
phényle,
R⁹ et R¹⁰ est hydrogène, alkyle en C₁-C₆, alcoxy en C₁-C₆, trifluorométhyle, hydroxy, cyano, nitro, halogène, - NHCHO, -NHCO (alkyle en C₁-C₆), -NHCOaryle, -NHSO₂ (alkyle en C₁-C₆) ou -NHSO₂ aryle,
D¹ et D² est un résidu d'un dérivé de phényle, naphtyle ou hétérocyclique, qui comprend au moins un groupe - SO₃M, dans lequel M est hydrogène, un métal alcalin, ammonium, tétra (alkyle en C₁-C₁₂) ammonium substitué ou non substitué.

2. Colorant selon la revendication 1, dans lequel, indépendamment les uns des autres,
R¹ à R⁴ sont identiques et sont hydrogène, alkyle en C₁-C₄ ou alkyle en C₁-C₆ substitué par hydroxyle, cyano ou alcényle,
R⁵ et R⁶ sont identiques et sont
hydrogène,
alkyle en C₁-C₆,
alkyle en C₁-C₆ substitué par hydroxy,
cycloalkyle en C₃-C₈ ou alkyle en C₁-C₆ substitué par - SO₃M ou un groupe de formule (iii) tel que défini dans la revendication 1, dans lequel chaque R²⁶ et R²⁷ indépendamment l'un de l'autre est
hydrogène,
alkyle en C₁-C₆,
alkyle en C₁-C₆ substitué par hydroxy,
alcoxy en -C₁-C₆, trifluorométhyle, hydroxy, cyano, halogène,
n est 0 ou 1,
p est 0 ou 1 à 4,
R⁷ et R⁸ sont identiques et sont hydrogène, méthyle ou-éthyle et
R⁹ et R¹⁰ sont identiques et sont hydrogène, méthyle, éthyle, halogène, trifluorométhyle, méthoxy ou éthoxy.

3. Colorant selon la revendication 1 ou 2, ayant la formule (1a), (1a¹), (1a²) ou (1a³) 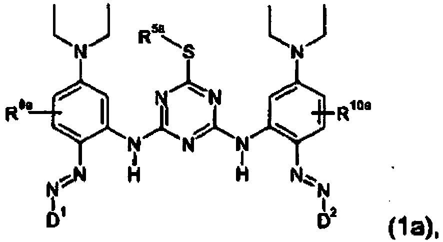 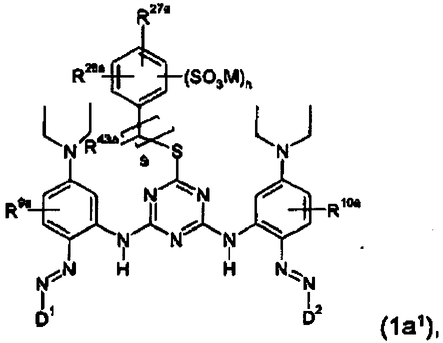 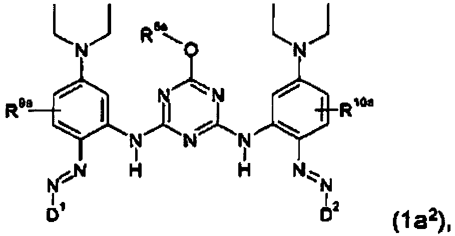 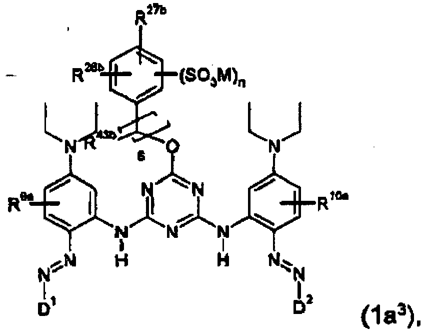 dans lequel
R^{5a} et R^{6a} sont hydrogène, alkyle en C₁-C₆, alkyle en C₁-C₆ substitué par hydroxy, cycloalkyle en C₃-C₈ ou alkyle, en C₁-C₆ substitué par SO₃M,
R^{9a} et R^{10a} sont identiques et sont hydrogène ou méthoxy, chacun de R^{26a}, R^{27a}, R^{26b} et R^{27b} est hydrogène, alkyle en C₁-C₄, alcoxy en C₁-C₄, trifluorométhyle, cyano, nitro ou halogène,
R^{43a} et R^{43b} est hydrogène ou alkyle en C₁-C₄,
s est 0 ou 1 à 6 et
D¹ et D² sont tels que définis dans la revendication 1.

4. Colorant selon l'une quelconque des revendications 1 à 3, dans lequel, indépendamment l'un de l'autre,
D¹ et D² est choisi dans le groupe constitué des groupes de formule (I) à (XIV) : 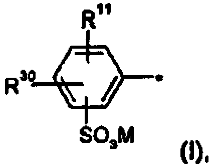 dans lesquels
R¹¹ et R³⁰, indépendamment l'un de l'autre, est hydrogène, alkyle en C₁-C₄, alcoxy en C₁-C₄, trifluorométhyle, cyano, nitro, NHC (O) R³¹, CONH₂, S(O)₂R³² ou halogène,
R³¹ et R³² est hydrogène, alkyle en C₁-C₄ ou alkyle en C₁-C₄ substitué par hydroxyle,
M est hydrogène, un métal alcalin ou ammonium, 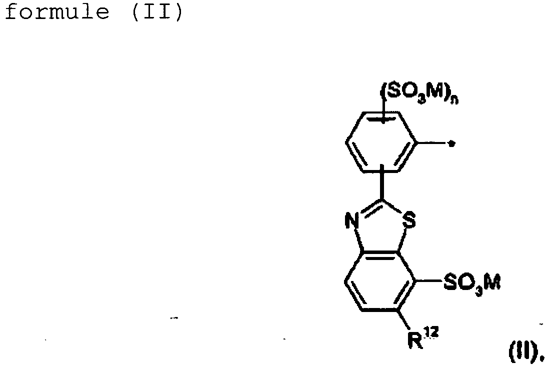
dans laquelle
R¹² est hydrogène ou alkyle en C₁-C₄,
n est 0 ou 1 et
M est défini comme décrit ci-dessus, 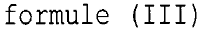 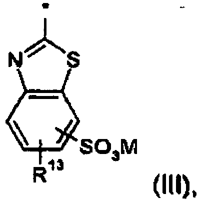
dans laquelle
R¹³ est hydrogène, alkyle en C₁-C₄, alcoxy en C₁-C₄, cyano, nitro, CONH₂ ou halogène et
M est défini comme décrit ci-dessus, 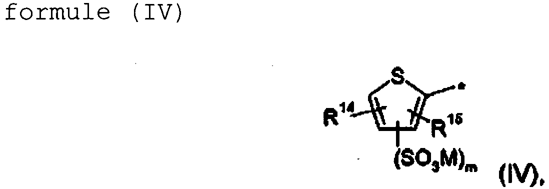
dans laquelle
R¹⁴ est hydrogène, cyano, CONH₂, C(O)R³³ ou COOR³⁴,
R³³ est hydrogène ou alkyle en C₁-C₄,
R³⁴ est hydrogène ou alkyle en C₁-C₄,
R¹⁶ est hydrogène, -CHO ou un groupe de formule (a) ou (c) 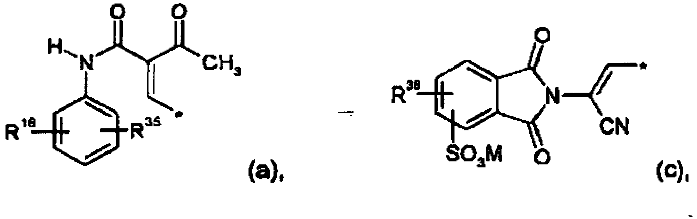
dans laquelle
R¹⁶, R^{3S} et R³⁶, indépendamment les uns des autres, sont hydrogène, halogène, alkyle en C₁-C₄, alcoxy en C₁-C₄, SO₃M ou-CONH₂,
m est 0 ou 1 et
M est défini comme décrit ci-dessus, 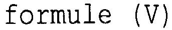 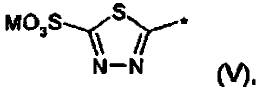
dans laquelle
M est défini comme décrit ci-dessus, formule (VI) 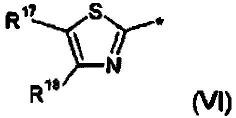 dans laquelle
R¹⁷ est -SO₃M, -CHO, -CH=C(CN)₂, un groupe de formule (a) tel que défini ci-dessus ou un groupe de formule (b) ou (d) 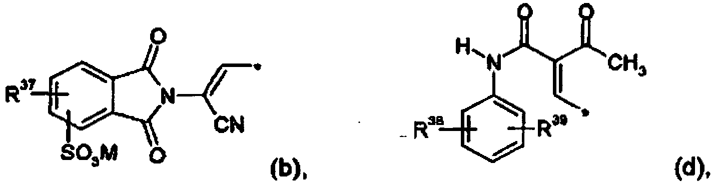 dans laquelle
R³⁷, R³⁸ et R³⁹, indépendamment les uns des autres, sont hydrogène, halogène, alkyle en C₁-C₄, alcoxy en C₁-C₄, SO₃M ou -CONH₂,
R¹⁸ est -SO₃M, alkyle en C₁-C₄, sulfophényl- (alkyle en C₁-C₄) amino, (alkyle en C₁-C₁₂) amino, (cycloalkyle en C₅-C₆)amino, morpholino ou pipéridino et
M est défini comme décrit ci-dessus, 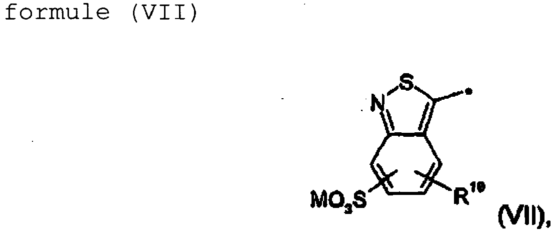
dans laquelle
R¹⁹ est hydrogène, alkyle en C₁-C₄, alcoxy en C₁-C₄, nitro, NHC (O) R⁴⁰, NHSO₂R⁴⁷ ou halogène,
R⁴⁰ est hydrogène ou alkyle en C₁-C₆,
R⁴⁷ est alkyle en C₁-C₆, 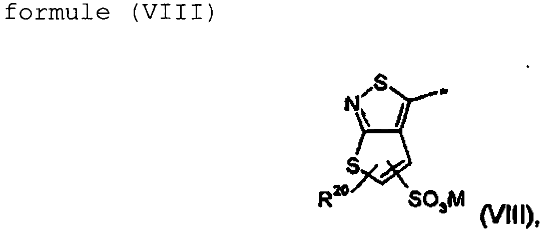
dans laquelle
R²⁰ est hydrogène, alkyle en C₁-C₄, alcoxy en C₁-C₄, cyano, nitro, CONH₂ ou halogène, 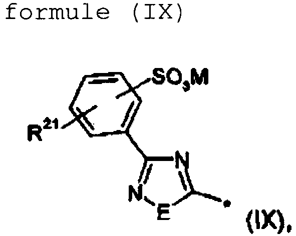 dans laquelle
R²¹ est hydrogène, alkyle en C₁-C₄, alcoxy en C₁-C₄, halogène, cyano, nitro ou CONH₂ et
E est soufre ou oxygène, 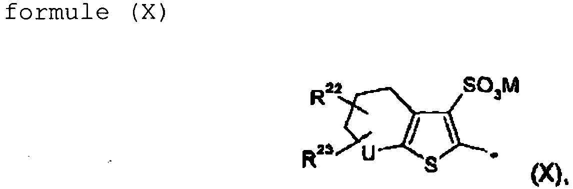
dans laquelle
R²² et R²³, indépendamment l'un de l'autre, sont hydrogène, alkyle en C₁-C₄, alcoxy en C₁-C₄, halogène, cyano ou CONH₂ et
U est méthylène ou C=O, 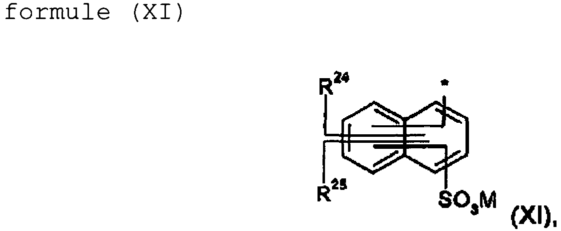
dans laquelle
R²⁴ et R²⁵, indépendamment l'un de l'autre, sont hydrogène, alkyle en C₁-C₄, alcoxy en C₁-C₄, halogène, cyano, nitro, trifluorométhyle ou CONH₂, 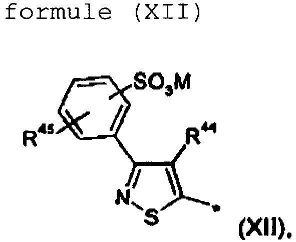 dans laquelle
R⁴⁴ et R⁴⁵, indépendamment l'un de l'autre, sont hydrogène, alkyle en C₁-C₄, alcoxy en C₁-C₄, halogène, cyano, nitro, trifluorométhyle, CONH₂ ou SO₃M, 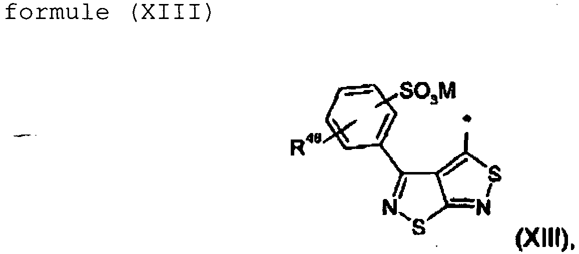 dans laquelle
R^{4b} est hydrogène, alkyle en C₁-C₄, alcoxy en C₁-C₄, halogène, cyano, nitro, trifluorométhyle, CONH₂ ou SO₃M et 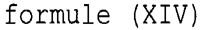 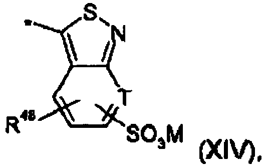 dans laquelle
R⁴⁸ est hydrogène, alkyle en C₁-C₄, alcoxy en C₁-C₄, nitro, NHC(O)R⁴⁹, NHSO₂R⁵⁰ ou halogène,
R⁴⁹ est hydrogène ou alkyle en C₁-C₆,
R⁵⁰ est alkyle en C₁-C₆ ; et
M est défini comme décrit ci-dessus.

5. Colorant selon la revendication 4, dans lequel D¹ et D² sont identiques.

6. Composition chimique comprenant un ou plusieurs colorant (s) selon l'une quelconque des revendications 1 à 5.

7. Composition chimique constituée de deux colorants ou plus selon l'une quelconque des revendications 1 à 5.

8. Solution aqueuse pour coloration comprenant un ou plusieurs composés chimiques selon l'une quelconque des revendications 1 à 5.

9. Procédé de production d'un colorant selon la revendication 1, comprenant
a) la diazotation de composés de formules (2) et (3)
D¹-NH₂ (2) D²-NH₂ (3),
dans lesquelles D¹ et D² sont définis comme décrit dans la revendication 1,
b) la réaction des produits obtenus dans l'étape a) avec un composé de formule (4) 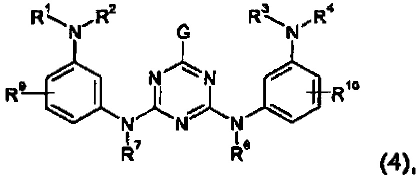 dans laquelle R¹ à R¹⁰ et G sont tels que définis dans la revendication 1.

10. Procédé de coloration ou d'impression de matériau contenant carboxamido et/ou hydroxyle, comprenant la mise en contact du matériau contenant carboxamido et/ou hydroxyle avec un colorant selon l'une quelconque des revendications 1 à 5.

11. Encre pour impression de textile numérique, comprenant un colorant selon l'une quelconque des revendications 1 à 5.

12. Utilisation d'un colorant selon l'une quelconque des revendications 1 à 5, composition chimique selon la revendication 6 ou 7 ou d'une solution aqueuse selon la revendication 8 pour colorer des fibres, ainsi que des mélanges de telles fibres choisies dans le groupe comprenant : des matériaux de fibres synthétiques, des matériaux de fibres de nylon, nylon-6, nylon-6.6 et aramide, des fibres végétales, des fibres de graines, le coton, le coton organique, le kapok, le coir de noix de coco ; des fibres de raphia, le lin, le chanvre, la jute, le kénaf, le ramie, le rotin ; des fibres de feuille, le sisal, le henequen, la banane ; des fibres de tige, le bambou ; des fibres d'animaux, la laine, la laine organique, la soie, la laine cachemire, la fibre d'alpaga, le mohair, la fibre d'angora ainsi que des matériaux de fourrure et de cuir ; des fibres manufacturées, régénérées et recyclées, des fibres cellulosiques ; des fibres de papier, des fibres régénérées cellulosiques, des fibres de rayonne viscose, des fibres d'acétate et de triacétate et des fibres de Lyocell.

13. Fibre et mélanges contenant une telle fibre choisie dans le groupe comprenant : des matériaux de fibres synthétiques, des matériaux de fibres de nylon, nylon-6, nylon-6.6 et aramide, des fibres végétales, des fibres de graines, le coton, le coton organique, le kapok, le coir de noix de coco ; des fibres de raphia, le lin, le chanvre, la jute, le kénaf, le ramie, le rotin ; des fibres de feuille, le sisal, le henequen, la banane ; des fibres de tige, le bambou ; des fibres d'animaux, la laine, la laine organique, la soie, la laine cachemire, la fibre d'alpaga, le mohair, la fibre d'angora ainsi que des matériaux de fourrure et de cuir ; des fibres manufacturées, régénérées et recyclées, des fibres cellulosiques ; des fibres de papier, des fibres régénérées cellulosiques, des fibres de rayonne viscose, des fibres d'acétate et de triacétate et des fibres de Lyocell comprenant un ou plusieurs colorant(s) selon l'une quelconque des revendications 1 à 5 sous forme physiquement liée.
